(19) Europäisches Patentamt
European Patent Office
Office européen des brevets

(11) **EP 4 625 897 A1**

(12) **EUROPÄISCHE PATENTANMELDUNG**

(43) Veröffentlichungstag:
**01.10.2025   Patentblatt 2025/40**

(21) Anmeldenummer: **24167562.8**

(22) Anmeldetag: **28.03.2024**

(51) Internationale Patentklassifikation (IPC):
***H04L 25/02*** *(2006.01)*

(52) Gemeinsame Patentklassifikation (CPC):
**H04L 25/0272; H04L 25/0278**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder: **Wagner, Christoph Wilfried**
**09113 Chemnitz (DE)**

(74) Vertreter: **Siemens Patent Attorneys**
**Postfach 22 16 34**
**80506 München (DE)**

(54) **VERFAHREN UND SYSTEM ZUR ELEKTRISCHEN ÜBERTRAGUNG VON SYMBOLEN**

(57)     Die Erfindung betrifft auch ein Verfahren und ein System zur elektrischen Übertragung von Symbolen von einem ersten Teilnehmer zu einem zweiten Teilnehmer, die über ein gemeinsames Mehrleiter-System mit wenigstens einem ersten elektrischen Leiter, einem zweiten elektrischen Leiter und einem dritten elektrischen Leiter verbunden sind, wobei im ersten Teilnehmer zumindest drei Reihenschaltungen aus jeweils einem oberen elektronischen Schalter und einem unteren elektronischen Schalter betrieben werden, wobei an die jeweilige Reihenschaltung zwischen dem oberen elektronischen Schalter und dem unteren elektronischen Schalter die elektrischen Leiter angeschlossen werden.

FIG 1

**Beschreibung**

Das der Erfindung zugrunde liegende Problem liegt in der elektrischen Übertragung von Informationen zwischen zwei oder mehr Teilnehmern, die über eine gemeinsame Gruppe an elektrischen Leitern verbunden sind (Bus). Besondere Herausforderung ist hierbei die Steigerung der erzielbaren Übertragungsrate bei gleichzeitiger Robustheit gegenüber Selbst- und Fremdstörung im Betrieb.

Die Erfindung betrifft ein System zur Übertragung von Symbolen zwischen einem ersten Teilnehmer und einem zweiten Teilnehmer über ein gemeinsames Mehrleiter-System.

Die Erfindung betrifft auch ein Verfahren zur elektrischen Übertragung von Symbolen von einem ersten Teilnehmer zu einem zweiten Teilnehmer, die über ein gemeinsames Mehrleiter-System mit wenigstens einem ersten elektrischen Leiter, einem zweiten elektrischen Leiter und einem dritten elektrischen Leiter verbunden sind, wobei im ersten Teilnehmer zumindest drei Reihenschaltungen aus jeweils einem oberen elektronischen Schalter und einem unteren elektronischen Schalter betrieben werden, wobei an die jeweilige Reihenschaltung zwischen dem oberen elektronischen Schalter und dem unteren elektronischen Schalter die elektrischen Leiter angeschlossen werden.

Gegenwärtig existieren verschiedene Ansätze, um eine leitungsgebundene Übertragung von Information zu realisieren. In klassischen Parallelbussen werden mehrere asymmetrische Leitungen gebündelt, wobei jede Leitung in ihrer Potenzialdifferenz zu einem gemeinsamen Bezugssignal Information trägt, üblicherweise 1 Bit pro Leitung mit einem binären Pegelsystem. Ein Empfänger wertet diese Information üblicherweise mittels harter Entscheidungsschwellen aus. Zusammen mit der oft unkontrollierten Leitungsanpassung leidet diese Übertragungsart an einer großen Empfindlichkeit gegenüber Selbst- und Fremdstörung und kann aufgrund von verschiedenen Hochfrequenz-Effekten (Reflexionen, beschränkte Signalleistung, Übersprechen, EMV-Störungen, ...) üblicherweise nur mit geringer Baudrate betrieben werden.

Differenzielle Leitungssysteme, wie z. B. LVDS, CML oder PECL, teilen diese SignalintegritätsProbleme zumeist nicht und erlauben den Betrieb auch mit sehr hohen Baudraten. Allerdings skalieren diese Systeme schlecht hinsichtlich ihrer Informationsübertragungseffizienz, Kosten und Stromverbrauch. Üblicherweise kann über eine gekoppelte Zweidrahtleitung 1 Bit an Daten übertragen werden, was einer Effizienz von 0.5 Bit/Leitung entspricht.

Im ET200SP-System, einem verteilten Automatisierungssystem des Herstellers Siemens, wird ein spezielles Rückwandbussystem zur Lösung des Problems eingesetzt. Mittels spezieller Kodierungsmethoden ist es hier gelungen, einen klassischen Parallelbus um viele der Signalintegritätsprobleme zu bereinigen und so beträchtliche Datenraten in einem zuverlässigen Bus mit beträchtlicher Länge und vielen Teilnehmern zu erzielen. Allerdings lässt das System eine weitere (deutliche) Leistungssteigerung nicht mehr zu.

Die EP 1 038 232 B1 beschreibt eine Kommunikationsschnittstelle zur seriellen Übertragung digitaler Daten bzw. ein serielles Datenübertragungsverfahren zur bitweisen Übertragung digitaler Daten.

Diese Lösung adressiert das Problem der Störanfälligkeit und Synchronisation bei der seriellen Datenübertragung. Die Lösung besteht aus einer Kommunikationsschnittstelle und einem Datenübertragungsverfahren, die eine störsichere und effiziente Übertragung digitaler Daten ermöglichen. Die Innovation verwendet mindestens drei Signalleitungen, auf denen jeweils ein "High"- oder "Low"-Pegel anliegen kann. Ein Datenbit wird durch den Pegelwechsel von zwei der drei Leitungen kodiert, wobei die Übergänge zwischen den Pegelzuständen in einem Kodierungsschema festgelegt sind. Dies ermöglicht eine schnelle Synchronisation und hohe Datenrate, vergleichbar mit synchroner Übertragung, ohne die Nachteile der Taktrückgewinnung oder asynchronen Übertragung in Kauf nehmen zu müssen. Die Start/Stopp-Synchronisation erfolgt durch Invertierung aller Pegel, was besonders bei kurzen Datenpaketen effizient ist. Die Erfindung eignet sich besonders für den Einsatz in Automatisierungsgeräten zur Steuerung und Überwachung technischer Prozesse.

Die EP 2 154 590 B1 betrifft ein Verfahren zur Steckplatzerkennung von Steuerungsmodulen in einem modular aufgebauten Steuerungsgerät. Das Patent EP 2 154 590 B1 beschreibt ein Verfahren zur Steckplatzerkennung in modular aufgebauten Steuerungsgeräten, wie speicherprogrammierbaren Steuerungen (SPS). Dabei liegt die Innovation in der eindeutigen und vereinfachten Adressierung von Steuerungsmodulen über ihre Steckplätze. Dies wird durch ein spezielles Datenmuster erreicht, das über den Kommunikationsbus gesendet und bei jedem Steckplatzübergang permutiert wird, sodass jeder Steckplatz ein einzigartiges Muster erhält. Die Busleitungen sind in Gruppen unterteilt, innerhalb derer die Permutation stattfindet, was die Anzahl der adressierbaren Steckplätze erhöht. Das Verfahren ermöglicht es, Module ohne die Notwendigkeit einer Neukonfiguration im laufenden Betrieb zu wechseln. Die Vorteile umfassen eine hohe Verfügbarkeit und modulare Erweiterbarkeit des Steuerungsgeräts ohne aktive Rückwandbuskomponenten, was die Zuverlässigkeit erhöht und den Platzbedarf minimiert. Nutzdaten können gleichzeitig mit den Adressdaten übertragen werden, was die Effizienz des Systems steigert.

Das in EP 0 150 540 A2 beschriebene Verfahren bezieht sich auf die Datenübertragung zwischen mehreren Stationen über einen gemeinsamen Datenbus, wobei die Signale über eine ODER-Funktion verknüpft sind. Der Kern dieser Lösung umfasst die periodische Übertragung jedes Datenbits innerhalb festgelegter Teilperioden, die ein bestimmtes Verhältnis zueinander aufweisen. Zu Beginn jeder Periode wird ein Signalübergang erzeugt, der die Gesamtperiodendauer und die Position der Teilperioden bestimmt. In der ersten Teilperiode wird ein Signal gesendet, das den Datenbus als "belegt" kennzeichnet, in der zweiten Teilperiode wird das eigentliche Datenbit übertragen, und in der dritten Teilperiode wird ein Signal ohne Informationsgehalt gesendet. Die Stationen sind in der Lage, aus den Signalübergängen die Periodendauer zu ermitteln und den Zustand des Datenbusses sowie den Wert des übertragenen Datenbits zu bestimmen. Dies ermöglicht eine effiziente Datenübertragung auch bei unterschiedlichen internen Taktfrequenzen der Stationen und unterstützt den Multimaster-Betrieb.

Die in der EP 0 977 126 A2 gegebene Offenbarung bezieht sich auf eine Schnittstellenschaltung zur Verbindung von Geräten mittels eines bidirektionalen Busses, insbesondere eines I2C-Busses, der eine Daten- und eine Taktleitung für die Übertragung von Signalen nutzt. Die dortige Innovation besteht darin, dass die Signale des I2C-Busses in Sende- und Empfangszweige aufgeteilt und über differentielle Sender-/Empfängerbausteine mittels differentieller Leitungen übertragen werden. Dies ermöglicht eine störungsresistente Datenübertragung auch über längere Distanzen, indem physikalische Störungen durch die differentielle Signalübertragung minimiert werden. Die Schaltungsanordnung an jedem Gerät beinhaltet Optokoppler zur galvanischen Trennung und zur Vermeidung von Störungen durch Potentialunterschiede. Die Empfänger der Bustreiber sind ständig aktiv, während die Sender nur bei der Übertragung einer "0" aktiviert werden, was durch eine Freigabelogik gesteuert wird. Die differentiellen Leitungen werden an ihren Enden durch Widerstände abgeschlossen, die den Wellenwiderstand repräsentieren, um die Buspotentiale bei deaktivierten Sendern zu erzeugen. Diese Schnittstellenschaltung eignet sich besonders für die fehlerfreie Übertragung von Daten zwischen Geräten in der Mikrochirurgie, wie bei einem TEM-Insufflationssystem, und erhält dabei die Übertragungsfrequenz und Protokolle des I2C-Busses bei. Die Erfindung ermöglicht eine verbesserte Datenkommunikation zwischen medizinischen Geräten, die für präzise und zuverlässige Funktionen entscheidend ist.

In der DE 60 126 191 T2 wird eine CMOS-Bustreiberschaltung, die speziell darauf ausgelegt ist, Probleme zu lösen, die auftreten, wenn am Schaltungsausgang eine höhere Spannung als die Versorgungsspannung anliegt, vorgestellt. Dies kann geschehen, wenn verschiedene integrierte Schaltungen mit unterschiedlichen Versorgungsspannungen über einen Bus verbunden sind. Die Schaltung besteht aus einer Eingangsstufe mit zwei komplementären MOS- Transistoren und einer Ausgangsstufe mit ebenfalls zwei komplementären MOS-Transistoren. Ein wesentliches Merkmal der Erfindung ist die Integration eines zusätzlichen MOS-Transistors zwischen dem Schaltungsausgang und dem Gate- Anschluss eines Transistors der Ausgangsstufe. Dieser Transistor wird durch die Versorgungsspannung gesteuert und schützt die Schaltung, indem er bei einer zu hohen Spannung am Ausgang in den leitenden Zustand übergeht und so den entsprechenden Ausgangstransistor sperrt. Eine Diode in der Eingangsstufe verhindert den Stromfluss in Richtung des mit der Versorgungsspannung verbundenen Transistors und schützt so vor Rückströmen. Ein weiterer MOS-Transistor parallel zur Diode gewährleistet, dass die Diode im Normalbetrieb umgangen wird, wodurch die Schaltung schnell in den Sperrzustand übergehen kann. Ein Sperrschaltungsteil, bestehend aus einem zusätzlichen MOS-Transistor, einem Negator und einer NOR-Schaltung, versetzt die Ausgangsstufe in einen hochohmigen Zustand, wenn kein Freigabesignal anliegt, und verhindert so, dass Strom vom Bus in die Schaltung fließt. Diese Lösung ermöglicht es der Schaltung, auch bei kleinen Versorgungsspannungsbereichen zuverlässig zu funktionieren und schützt sie vor Beschädigungen durch Spannungen, die höher als die Versorgungsspannung sind.

In EP 4 226 254 A1 wird ein Verfahren und eine Vorrichtung zur Datenkommunikation über eine serielle Dreidrahtbus-Schnittstelle offenbart, die insbesondere für die C-PHY-Schnittstelle der MIPI-Allianz relevant ist. Die Erfindung befasst sich mit der Generierung mehrerer Differenzsignale, die jeweils die Spannungsdifferenz zwischen einem Paar von Drähten in einem Dreidrahtbus repräsentieren. Ein wesentliches Merkmal der Erfindung ist die Identifizierung eines Differenzsignals mit der größten Spannungsmagnitude innerhalb eines bestimmten Zeitintervalls, der sogenannten Unit Interval (UI), und die Bestimmung des Signalzustands des Dreidrahtbusses für dieses UI basierend auf der Identität des Drahtpaares, das das erste Differenzsignal liefert, und der Polarität dieses Signals im UI. Die Erfindung ermöglicht es, einen ersten Rand in einem Taktsignal zu erzeugen, der auf einen Übergang im ersten Differenzsignal während des UI anspricht. Dies verbessert die Wiederherstellung des Taktsignals und die zuverlässige Erfassung des Drahtzustands bei höheren Datenraten. Die Erfindung umfasst auch eine Kalibrierungsschaltung zur Anpassung der Equalizer-Schaltungen in den differentiellen Empfängern, basierend auf der Anzahl der UIs während eines C-PHY- Vorspanns, in denen das erste Differenzsignal die größte Spannungsmagnitude aufweist. Die Erfindung ist insbesondere für die Verbesserung der Datenübertragung und -verarbeitung in mobilen Geräten wie Smartphones und Tablets, die Kameras und Displays über C-PHY-Schnittstellen verbinden, von Bedeutung.

Die US 9 692 555 B2 bezieht sich auf die Übertragung von Informationen über eine Mehrdrahtleitung, wobei ein Satz von Symbolen empfangen wird. Ein wesentlicher Aspekt der Erfindung ist die Verwendung eines ersten Zwei- Eingangs-Komparators, der mit dem Mehrdrahtbus verbunden ist, um ein erstes Ausgangssignal zu erzeugen, das auf einem Vergleich eines Paares von Symbolen mit unterschiedlichen Werten basiert. Ein arithmetischer Schaltkreis empfängt das Symbolpaar und erzeugt ein arithmetisches Ergebnis, das dann von einem zweiten Zwei-Eingangs- Komparator verwendet wird, um ein zweites Ausgangssignal zu erzeugen. Dieses zweite Ausgangssignal stellt einen Vergleich des arithmetischen Ergebnisses mit einem dritten Symbol dar, das nicht Teil des Paares ist. Die Erfindung ermöglicht es, die Anzahl der benötigten Komparatoren zu reduzieren, was zu einer einfacheren und weniger energieintensiven Systemkonfiguration führt. Die Erfindung kann auch rekursiv angewendet werden, um größere Sparse Comparator Units (SCUs) aus kleineren SCUs zu entwerfen, was die Flexibilität und Skalierbarkeit des Systems erhöht.

Die in DE 10 2006 061 651 B4 vorgestellte Vorrichtung und das Verfahren dienen dem Kodieren von Blöcken aus Transformationskoeffizienten, die in digitale Bildkompressionsmethoden wie JPEG2000 verwendet werden. Die Koeffizienten werden durch mehrere Betragsbits repräsentiert, die in Bitebenen angeordnet sind. Die Kodiereinrichtung durchläuft diese Betragsbits in Tupeln und kodiert sie in einen Datenstrom. Jedes Betragsbit gehört dabei einem von drei Durchläufen an. Eine Besonderheit ist die Vorhersageeinrichtung, die prognostiziert, welche Betragsbits im nächsten Tupel zu kodieren sind. Dies basiert auf einer vorherigen Vorhersage und den Statusinformationen der Koeffizienten. Die Vorhersage ermöglicht es der Kodiereinrichtung, effizient zu entscheiden, welche Bits kodiert werden sollen. Die Datenworte werden in Zwischenspeichern abgelegt und anschließend entropiekodiert, wobei die Reihenfolge der Durchläufe eingehalten wird.

Die Vorrichtung ermöglicht eine effiziente Hardwareimplementierung für die Bildkompression, indem sie die Anzahl der Verarbeitungsschritte reduziert und eine parallele Verarbeitung mehrerer Koeffizienten erlaubt. Dadurch wird die Rechenleistung optimiert, was insbesondere für die aufwendige Koeffizientenbitmodellierung von Vorteil ist.

Die EP 3 637 715 B1 betrifft ein Übertragungsgerät und ein Empfangsgerät, die für die effiziente Übertragung von Datenströmen, insbesondere von Bilddaten, über mehrere parallele Übertragungswege (Spuren) konzipiert sind. Die Erfindung ermöglicht es, bei einer Änderung bestimmter Parameter, die die Verarbeitung der physikalischen Schicht betreffen, wie die Anzahl der Übertragungswege oder die Übertragungsrate, eine Trainingsverarbeitung zur Synchronisation und Korrektur von Zeitunterschieden zwischen den Spuren durchzuführen. Wenn jedoch Parameter der Verbindungsschicht, wie Bitlänge pro Pixel oder Zeilenanzahl, geändert werden, kann die Übertragung des Datenstroms ohne diese Trainingsverarbeitung fortgesetzt werden. Dies erhöht die Effizienz, da keine unnötigen Unterbrechungen entstehen. Die Erfindung umfasst auch Methoden zur Signalisierung von Parameteränderungen durch Verwendung von Flags oder die direkte Übertragung der geänderten Parameter im Paketkopfteil. Diese Technologie ist besonders relevant für Systeme, die eine schnelle und zuverlässige Übertragung großer Datenmengen erfordern, wie beispielsweise in der medizinischen Bildgebung oder bei Endoskopie-Systemen.

EP 2 683 124 B1 betrifft eine Sende-/Empfangsvorrichtung für digitale Datenübertragungen nach dem Low-Voltage-Differential-Signaling-Standard (LVDS), die insbesondere in der Automatisierungstechnik eingesetzt wird. Die Vorrichtung umfasst eine Sendeeinheit, eine Empfangseinheit und ein Protokollmittel. Die Neuartigkeit besteht in einer speziellen Schaltungsanordnung, die ein schnelleres Einschwingen der Signale an der Empfangseinheit ermöglicht und somit auch bei längeren Datenübertragungsstrecken eine fehlerfreie Signalübertragung gewährleistet. Dies wird durch die Anordnung von Kondensatoren und Widerständen in den Empfangs-Längszweigen erreicht, wobei die Werte dieser Bauteile spezifisch angepasst sind. Zusätzlich wird durch Wechselstromkopplungsmittel eine Potentialtrennung ermöglicht, was den Einsatz bei Baugruppen mit unterschiedlichen Stromversorgungen erleichtert. Die Erfindung adressiert somit die Probleme der begrenzten Leitungslänge und des Potentialunterschieds bei herkömmlichen LVDS-Verbindungen und erlaubt eine verbesserte und robustere Datenübertragung in Automatisierungssystemen.

Der in DE 101 55 526 C2 vorgestellte LVDS-Treiber (Low Voltage Differential Signaling Driver) ist für den Einsatz bei geringen Versorgungsspannungen von weniger als 2V konzipiert, was insbesondere für integrierte Schaltkreise mit hoher Strukturdichte relevant ist. Die Erfindung liegt in der Verwendung von ausschließlich PMOS-Transistoren für die Pull-Up- und Pull-Down-Funktionen, was ein symmetrisches Schaltverhalten und Betrieb im linearen Bereich ermöglicht. Durch die Begrenzung der maximalen Amplitude der Steuersignale auf einen Wert knapp über der Einschalt-Schwellenspannung der Transistoren wird sichergestellt, dass die Transistoren effektiv zwischen gesperrtem und leitendem Zustand wechseln können, ohne dass die Schaltqualität unter niedrigen Versorgungsspannungen leidet.

Aufgabe der Erfindung ist es, die bereits bekannten Systeme und Verfahren zur Übertragung von Symbolen weiterzuentwickeln, um eine Leistungssteigerung bei der Datenübertragung bezüglich der Datenraten zu erreichen.

Die Lösung der Aufgabe umfasst insbesondere ein System zur Übertragung von Symbolen zwischen einem ersten Teilnehmer und einem zweiten Teilnehmer, welche über ein gemeinsames Mehrleiter-System mit einem ersten elektrischen Leiter, einem zweiten elektrischen Leiter und einem dritten elektrischen Leiter verbunden sind, wobei der erste Teilnehmer einen Symbolkodierer, ein Stromquellenmodul und einen Steuerblock umfasst, und wobei der Steuerblock einen oberen Steuerblock und einen unteren Steuerblock aufweist. Der obere Steuerblock ist dazu ausgestaltet, obere Schalter zu schließen und zu öffnen, und der untere Steuerblock ist dazu ausgestaltet, untere Schalter zu öffnen und zu schließen. Die oberen Schalter weisen zumindest drei obere elektronische Schalter und die unteren Schalter weisen zumindest drei untere elektronische Schalter auf, dabei sind zumindest drei Reihenschaltungen aus jeweils einem oberen elektronischen Schalter und einem unteren elektronischen Schalter angeordnet, und an die jeweilige Reihenschaltung sind zwischen dem oberen elektronischen Schalter und dem unteren elektronischen Schalter die elektrischen Leiter angeschlossen, wobei an die Reihenschaltungen das Stromquellenmodul angeschlossen ist. Dabei wird die Aufgabe dadurch gelöst, dass der Symbolkodierer ausgestaltet ist, einen Stromschleifen-Steuervektor für den Steuerblock bereitzustellen, wobei der Steuerblock ausgestaltet ist mittels des Stromschleifen-Steuervektors, welcher eine Schaltkombination für die elektronischen Schalter aufweist, die elektronischen Schalter zu schalten und damit einen Stromfluss in die angeschlossenen elektrischen Leiter zu ermöglichen. Der Symbolkodierer ist ausgestaltet, den Stromschleifen-Steuervektor derart zu bestimmen, dass die zu übertragenden Symbole durch eine geordnete Wahl von einem Leiterpaar aus einem Vorrat der elektrischen Leiter aus dem Mehrleiter-System bestimmt und dadurch kodiert sind. Ein Leiterpaar umfasst dabei einen der elektrischen Leiter als einen Hin-Leiter eines Stromes von dem ersten Teilnehmer zu dem zweiten Teilnehmer und einen weiteren der elektrischen Leiter als einen Rück-Leiter, weiterhin ist eine Terminierungseinheit vorhanden, wobei der Symbolkodierer ausgestaltet ist, für die Terminierungseinheit einen Terminierungsvektor bereitzustellen. Die Terminierungseinheit wiederum ist dazu ausgestaltet, mittels Terminierungsschalter ein Terminierungswiderstands-Netzwerk an die elektrischen Leiter des Mehrleiter-System anzuschalten. Der zweite Teilnehmer weist ein Komparator-Netzwerk auf, wobei das Komparator-Netzwerk ausgestaltet ist, zur Decodierung des Symbols jeweils zwischen zwei elektrischen Leitern einen Spannungspegel zu detektieren, wobei in den unterschiedlichen Spannungspegeln zwischen den elektrischen Leitern das Symbol kodiert ist.

Im Sinne der Erfindung ist unter einem oberen elektronischen Schalter und einem unteren elektronischen Schalter eine Halbbrücke aus zwei Schaltern, die in einer Reihenschaltung an einer Spannungsquelle bzw. Stromquelle verschaltet sind, zu verstehen. Demnach sind im Sinne der Erfindung der obere elektronische Schalter und der untere elektronische Schalter beispielsweise jeweils ein Halbleiterschalter, wobei der obere elektronische Schalter in einem oberen Stromkreis in Bezug auf einen Terminierungswiderstand platziert ist, und der untere elektronische Schalter in einem unteren Stromkreis in Bezug auf einen Terminierungswiderstand platziert ist. Man spricht auch von einem High-Side-Treiber (Stromversorgung - Schalter zu einem ersten Ausgang des Stromquellenmoduls) und einem Low-Side-Treiber (Masse - Schalter zu einem zweiten Ausgang des Stromquellenmoduls). In einer vorteilhaften Ausführung können die Schalter so angesteuert werden, dass das Potential der Stromquelle bzw. Spannungsquelle nicht vollständig durchgeschaltet wird und somit unterschiedliche Ströme in den Terminierungswiderstand eingeprägt werden können und sich somit unterschiedlich hohe Signalspannungen, insbesondere mehr als zwei unterschiedliche Signalspannungen, erzeugen lassen.

Vorteilhafterweise wird nun die wahlweise Konfigurierung von Signalwegen verwendet, um ein Symbol zu kodieren. Eine Grundidee des Verfahrens ist es dabei, die Übertragungsinformation in der geordneten Wahl von einem oder mehreren Leiterpaaren aus dem Vorrat eines Mehr-leitersystems zu kodieren. Die Information wird innerhalb der geordneten Leiterwahl kodiert. Die Erfindung eignet sich besonders für den Einsatz in Automatisierungsgeräten zur Steuerung und Überwachung technischer Prozesse. Herkömmliche digitale Parallelbussysteme bieten eine große Informationsdichte pro Busleitung, sind jedoch sehr anfällig für Signalintegritätsprobleme und daher nicht mit hoher Signalisierungsrate betreibbar. Einzel- oder Multipunkt differenzielle Leitersysteme sind sehr robust gegen Selbst- und Fremdwirkung, bieten dafür jedoch keine hohe Informationsdichte. Analoge oder hybride Übertragungsverfahren (wie z.B. OFDM) lösen dieses Problem, erfordern jedoch Systemkomponenten, die einen hohen Implementierungsaufwand erfordern, was sich auch im laufenden Betrieb spürbar auf den Leistungsverbrauch auswirkt. Die Erfindung erlaubt es nun, die Nachteile klassischer Verfahren in einer kostengünstig skalierbaren Weise in einem System zu beheben.

Eine weitere Ausgestaltung sieht vor, dass der Symbolkodierer ausgestaltet ist, mehrere Stromschleifen-Steuervektoren bereitzustellen, wobei der Steuerblock ausgestaltet ist, das gemeinsame Mehrleiter-System mit mehreren Stromschleifen zu betrieben.

So stehen in einem Leitersystem mit N Leitern für die Einprägung einer ersten Stromschleife insgesamt $N*(N-1)$ verschiedene Möglichkeiten zur Verfügung, welche durch einen ersten Stromschleifen-Steuervektor vom Symbol-encoder aus dem Sendesymbolstrom extrahiert wird. Der Fluss einer zweiten Stromschleife kann nun nach gleichem Schema in einen reduzierten Satz von Leitern gewählt werden, sodass sich für den zweiten Stromschleifen-Steuervektor ein Möglichkeitenraum von $(N-2)*(N-3)$ eröffnet. Auch dieser Steuervektor wird vom Symbolencoder aus dem Sendesymbolstrom extrahiert. Dieses Verfahren kann nun für weitere Stromschleifen fortgesetzt werden, solange der verbleibende Leitervorrat ausreichend groß ist. Insgesamt ergibt sich nach dieser Vorschrift ein Möglichkeitenraum von insgesamt $N! / (N - 2L)!$ Symbolen, wie die L Stromschleifen auf die N Leitungen eingeprägt werden können. Demnach wird zur weiteren Kodierung der zu übertragenden Symbole aus der Leiteranzahl N an elektrischen Leitern eine ausgewählte Menge L an Stromschleifen bestimmt wird und damit ein Symbolvorrat erhöht.

Um den Symbolvorrat weiter zu erhöhen, ist der Steuerblock und/oder das Stromquellenmodul ausgestaltet, in die einzelnen Stromschleifen jeweils unterschiedliche Signalströme einzuprägen. Entscheidend bei der Verwendung mehrerer Leiterpaare ist, dass deren Signalströme jeweils unterschiedlich groß sind und in verlässlichem Verhältnis zueinanderstehen.

Im Empfangsbetrieb ist das Komparator-Netzwerk aktiv und erfasst die relativen Verhältnisse der Spannungspegel im Mehrleiter-System kontinuierlich in einem (digitalen) Empfangsvektor. Ein Symboldecoder ermittelt aus diesem Empfangsvektor den Ausgabesymbolstrom, dazu ist das Komparator-Netzwerk ausgestaltet die erfassten Spannungspegel einem Empfangsvektor als Elemente zuzuordnen.

Eine weitere Ausgestaltung sieht einen Symboldecoder vor, der Symboldecoder ist wiederum ausgestaltet, den Empfangsvektor entgegenzunehmen und auf eine Reihenfolge der Elemente des Empfangsvektors eine Maximum-Ermittlung und eine Minimum-Ermittlung durchzuführen, und ist weiterhin ausgestaltet, jeweils eine binäre Folge bereitzustellen, in welcher der maximale Pegel bzw. der minimale Pegel als Position in der Reihenfolge markiert ist.

Das System wird weiterhin verbessert durch eine schrittweise "Reduktion des Empfangsvektors"; hierzu weist das System einem ersten Diskriminator, einen zweiten Diskriminator, einen ersten Reduzierer und einen zweiten Reduzierer auf. Der erste Diskriminator ist ausgestaltet als ein Min-Max Leitungspaar-Diskriminator und damit ausgestaltet, den Empfangsvektor entgegenzunehmen und das Leiterpaar mit dem jeweils größten und kleinsten Relativpegel im Mehr-Leitersystem zu detektieren, weiterhin ausgestaltet, das Detektionsergebnis als eine erste Leitungspaar-Information bereitzustellen. Der erste Diskriminator steht mit dem ersten Reduzierer in Verbindung und ist ausgestaltet, mit der ersten Leitungspaar-Information einen reduzierten Empfangsvektor zur Verfügung zu stellen, der zweite Diskriminator ist als ein weiterer Min-Max Leitungspaar-Diskriminator ausgestaltet und damit ausgestaltet, den reduzierten Empfangsvektor entgegenzunehmen und das Leiterpaar mit dem jeweils größten und kleinsten Relativpegel im Mehr-Leitersystem mit den bereits erkannten reduzierten Leiterpaar zu detektieren, und weiterhin ausgestaltet, das Detektionsergebnis als eine zweite Leitungspaar-Information bereitzustellen. Der zweite Diskriminator steht mit dem zweiten Reduzierer in Verbindung und ist ausgestaltet, mit der zweiten Leitungspaar-Information einen weiter reduzierter Empfangsvektor zur Verfügung zu stellen.

Die vorliegende Erfindung erlaubt es mit einfachen und CMOS-chipintegrierbaren Baugruppen ein busfähiges Mehrleiter-System zur Informationsübertragung aufzubauen, welches ähnliche Signalintegritätseigenschaften und Übertragungsraten wie z. B. LVDS erzielt, gleichzeitig aber auch eine deutlich effizientere Informationskodierung bei unterproportional steigendem Stromverbrauch aufweist. Hierfür sind folgende Eigenschaften maßgeblich: Zu jedem Zeitpunkt werden nur wenige, verschieden starke Stromschleifen in das Leitersystem eingeprägt. Dadurch, dass die Stromschleifen anhand ihrer relativen Stromstärkenverhältnisse zueinander senderseitig eindeutig gebildet und empfängerseitig erkannt werden können, erfolgt die Informationskodierung durch die Wahl der Einzelleiter für den jeweiligen Hin- und Rückleiter jeder einzelnen Stromschleife. Ein Empfänger kann durch einen schnellen iterativen Prozess die einzelnen Stromschleifen identifizieren und deren Flussrichtungen bestimmen. Hierfür sind lediglich einfache rein-binäre Abfragen mittels Komparatoren erforderlich. Mit dem Einsatz impedanzkontrollierter und reflexionsarmer Leitungsführungstechniken sowie geeigneter Terminierung ist das Übertragungssystem grundsätzlich in der Lage, höchste Signalisierungsraten mit verhältnismäßig geringer Komplexität und bei mäßigem Stromverbrauch zu erzielen.

Die eingangs genannte Aufgabe wird ebenso durch ein Verfahren zur elektrischen Übertragung von Symbolen von einem ersten Teilnehmer zu einem zweiten Teilnehmer, die über ein gemeinsames Mehrleiter-System mit wenigstens einem ersten elektrischen Leiter, einem zweiten elektrischen Leiter und einem dritten elektrischen Leiter verbunden sind, wobei im ersten Teilnehmer zumindest drei Reihenschaltungen aus jeweils einem oberen elektronischen Schalter und einem unteren elektronischen Schalter betrieben werden, wobei an die jeweilige Reihenschaltung zwischen dem oberen elektronischen Schalter und dem unteren elektronischen Schalter die elektrischen Leiter angeschlossen werden, gelöst. Dabei wird das zu übertragende Symbol durch eine Auswahl einer Schaltkombination für die elektronischen Schalter dadurch kodiert, dass nun eine geordnete Wahl von einem Leiterpaar aus einem Vorrat der elektrischen Leiter aus dem Mehrleiter-System durchgeführt wird, wobei über eine Stromquelle ein Strom über einen geschlossenen oberen elektronischen Schalter vom ersten Teilnehmer in einen der elektrischen Leiter als ein Hin-Leiter in das Mehrleiter-System fließt, wobei ein Terminierungswiderstands-Netzwerk an die elektrischen Leiter des Mehrleiter-System angeschaltet wird, und wodurch ein Stromweg für den in dem Hin-Leiter fließenden Strom zu einem weiteren elektrischen Leiter geschaltet wird. Der weitere elektrische Leiter wird dann als ein Rück-Leiter für den Strom über einen geschlossenen unteren elektronischen Schalter vom ersten Teilnehmer genutzt, wobei im zweiten Teilnehmer zur Decodierung des Symbols jeweils zwischen zwei elektrischen Leitern ein Spannungspegel detektiert wird, wobei aus den unterschiedlichen Spannungspegeln zwischen den elektrischen Leiter das Symbol zurückgewonnen wird. Es wird damit die wahlweise Herstellung von Signalwegen erzielt. Grundidee des Verfahrens ist es, die Übertragungsinformation in der geordneten Wahl von einem oder mehreren Leiterpaaren aus dem Vorrat des Mehrleiter-System zu kodieren. Die Leiterpaare werden dann zur Durchleitung von einem oder mehreren Signalströmen eingesetzt.

In dem Mehrleiter-System mit N Leitern ergeben sich für die Einprägung einer ersten Stromschleife insgesamt N*(N-1) verschiedene Möglichkeiten. Für eine zweiten Stromschleife ergeben sich (N-2)*(N-3) Möglichkeiten. Insgesamt ergibt sich nach dieser Vorschrift ein Möglichkeitenraum von N! / (N - 2L)! Symbolen, wie die Stromschleifen auf die N Leitungen eingeprägt werden können. L gibt dabei die Menge der Stromschleifen an. Demnach wird das gemeinsame Mehrleiter-System mit einer Leiteranzahl N an elektrischen Leitern betrieben, wobei zwischen dem ersten Teilnehmer und dem zweiten Teilnehmer mittels der elektronischen Schalter der elektrischen Leiter und des Terminierungswider-stands-Netzwerks Stromschleifen gebildet werden, wobei zur weiteren Kodierung der zu übertragenden Symbole aus der Leiteranzahl an elektrischen Leitern eine ausgewählte Menge L an Stromschleifen bestimmt wird und damit ein Symbolvorrat erhöht wird.

In die einzelnen Strom-Schleifen der ausgewählten Menge L werden vorteilhaft jeweils unterschiedliche Signalströme eingeprägt und damit der Symbolvorrat weiter erhöht.

Die Spannungspegel zwischen den elektrischen Leitern werden vorzugsweise mit einem Komparator-Netzwerk erfasst, wobei die erfassten Spannungspegel einem Empfangsvektor als Elemente zugeordnet werden. Der Empfangsvektor kann dadurch gebildet werden, dass nach einer Konvention die einzelnen Leiter nacheinander abgetastet werden, dabei werden die relativen Verhältnisse der Spannungspegel im Leitersystem in dem Empfangsvektor nacheinander erfasst. Eine Konvention könnte beispielweise in Anlehnung an die Graphentheorie folgende sein: Die einzelnen Leiter stellen Knoten dar, welche auf einer Kreisline angeordnet sind. Bei einem Vier-Leitersystem hätte man dann einen Knoten A, einen Knoten B, einen Knoten C und einen Knoten D. Im Uhrzeigersinn können ausgehend von Knoten A Kanten zwischen den Knoten eingezeichnet werden. Ist man wieder am Ausgangs-Knoten angekommen, können noch die Diagonalen oder Querverbindungen als Kanten eingezeichnet werden. Dementsprechend erhält man als Kanten die Spannungspegel zwischen den Knoten bzw. den Leitern A->B, B->C, C->D, D->A, A->C und B->D. Ein Empfangsvektor könnte so aussehen:

$$\text{Empfangsvektor} = \{+1V,\ +2V,\ -1V,\ 1V,\ 1V,\ 1V\}$$

Man ist aber mit dieser Konvention nicht festgelegt, denkbar sind auch andere Konventionen.

Vorzugsweise wird der Empfangsvektor einem Symboldecoder zugeführt, wobei zum einen auf eine Reihenfolge der Elemente des Empfangsvektors eine Maximum-Ermittlung und zum anderen eine Minimum-Ermittlung durchgeführt wird und jeweils eine binäre Folge bereitgestellt wird, in welcher der maximale Pegel bzw. der minimale Pegel als Position in der Reihenfolge markiert ist. Die Dekodierung der Symbole im Symboldecoder kann für ein unausgedünntes und vollvermaschtes Komparatornetzwerk in einem mehrstufigen, iterativen Prozess erfolgen. Hierzu erkennt ein "Min-Max Leitungspaar-Diskriminator" das Leiterpaar mit dem jeweils größten und kleinsten Relativpegel im Leitersystem und gibt diese Information in einer Leitungspaarinformation zurück.

Für den Fall, dass zwischen dem ersten Teilnehmer und dem zweiten Teilnehmer mehrere Stromschleifen mit unterschiedlichen Signalströmen betrieben werden, wird zur Dekodierung des Symbols wie folgt vorgegangen:

In einem ersten Schritt werden die Spannungspegel zwischen den elektrischen Leiter mit einem Komparator-Netzwerk erfasst, die erfassten Spannungspegel werden einem Empfangsvektor als Elemente zugeordnet;

in einem zweiten Schritt wird der Empfangsvektor einem Symboldecoder zugeführt, wobei zum einen auf eine Reihenfolge der Elemente des Empfangsvektors eine Maximum-Ermittlung und zum anderen eine Minimum-Ermittlung durchgeführt wird und jeweils eine binäre Folge bereitgestellt wird, in welcher der maximale Pegel bzw. der minimale Pegel als Position in der Reihenfolge markiert ist;

in einem dritten Schritt erfolgt eine Reduzierung des Empfangsvektors um die im zweiten Schritt erkannten Positionen, wobei ein reduzierter-Empfangsvektor ermittelt wird; mit dem reduzierten Empfangsvektor wird in dem ersten Schritt fortgefahren, bis der Reduzierte-Empfangsvektor oder ein weiter Reduzierter-Empfangsvektor einem Mehrleiter-System mit einer Leiteranzahl von $N = 3$ entspricht.

In einer präferierten Umsetzung mit einer maximalen Leistungsfähigkeit beinhaltet das Komparatornetzwerk jeweils einen Komparator für jedes einzigartige Leiterpaar im Leitersystem. Werden nicht so viele Komparatoren wie Leitungspaare eingesetzt, schränkt dies die Größe des Empfangsvektors wie auch die Komplexität des Symbol-decoders ein und führt zu einer verringerten Menge an möglichen Symbolen, was den Informationsdurchsatz des Systems limitiert. Beim Ausdünnen des Komparator Netzwerkes sollte darauf geachtet werden, dass eine asymmetrische Ausdünnung zum Verlust der Vertauschungstoleranz von Leitungen im Mehrleiter-System führt und somit die aus dem EP 2 154 590 B1 bekannten Verfahren zur Adressauflösung und Steckplatzerkennung womöglich nicht mehr einsetzbar sind. Ein Kompromiss stellt die Ausdünnung nach gleichem Abstand der Leiter zueinander, welche die Symmetrie und damit die Vertauschungstoleranz erhält.

Nach dem ersten Schritt ist nun bekannt, welches Leitungspaar Hin- und Rückleiter für die Stromschleife mit dem größtem Schleifenstrom stellt. Mit dieser Information kann nun in Vorbereitung des zweiten Schritts das Empfangsnetzwerk bzw. der Empfangsvektor um diese Leiter ausgedünnt, also reduziert werden.

Die vorliegende Erfindung ermöglicht es, mit einfachen und CMOS-chipintegrierbaren Baugruppen ein busfähiges Mehrleitersystem zur Informationsübertragung aufzubauen, welches ähnliche Signalintegritätseigenschaften und Übertragungsraten wie z. B. LVDS erzielt, gleichzeitig aber auch eine deutlich effizientere Informationskodierung bei unterproportional steigendem Stromverbrauch aufweist. Hierfür ist ein Halbleiterbaustein ausgestaltet, als ein Leitungstreiber für eine elektrische Übertragung von Symbolen zwischen einem ersten Teilnehmer und einem zweiten Teilnehmer, die über ein gemeinsames Mehrleiter-System mit wenigstens einem ersten elektrischen Leiter, einem zweiten elektrischen Leiter und einem dritten elektrischen Leiter verbunden sind, zu fungieren, wobei der Leitungstreiber zur Ausführung des Verfahrens nach den Patentansprüchen ausgestaltet ist.

Mehrere Ausführungsbeispiele eines Systems zur Datenübertragung zwischen einem ersten Teilnehmer und einem zweiten Teilnehmer über ein gemeinsames Mehrleiter-System sind in der Zeichnung dargestellt, wobei auch das Verfahren erläutert wird. Es zeigen:

FIG 1      das Prinzip der elektrischen Übertragung von Symbolen von einem ersten Teilnehmer zu einem zweiten Teilnehmer über ein gemeinsames Mehrleiter-System,

FIG 2      ein Vierleitersystem mit der Symbolübertragung "BC",

FIG 3      das Vierleitersystem aus FIG 2 mit der Symbolübertragung "CB",

FIG 4      ein Vierleitersystem mit zwei Stromschleifen,

FIG 5      eine typische Anordnung von Transceivern an einem Mehrleiter-System,

FIG 6      ein Blockschaltbild eines Transceivers,

FIG 7      das Prinzip eines Steuerblocks,

FIG 8      ein Komparator-Netzwerk,

FIG 9      ein Blockschaltbild eines Symbolencoders,

FIG 10      ein Blockschaltbild einer Terminierungseinheit,

FIG 11      eine Veranschaulichung der Vergleichsbeziehungen für verschiedene Leitersysteme,

FIG 12      ein Dekodierbeispiel, welches sich auf die Figuren 12A, 12B, 12C und 12D erstreckt,

FIG 13      eine Veranschaulichung für eine Reduzierung des Empfangsvektors, welches sich auf die Figuren 13A, 13B und 13C erstreckt,

FIG 14      eine mögliche Realisierung eines Komparators,

FIG 15      ein erster Schritt der Auswertung des Empfangsvektors mit anschließender Reduzierung,

FIG 16      ein zweiter Schritt der Reduzierung

FIG 17      eine tabellarische Übersicht der Reduzierung,

FIG 18      ein dritter Schritt der Reduzierung,

FIG 19      ein vierter Schritt der Reduzierung,

FIG 20      ein fünfter Schritt der Reduzierung,

FIG 21      eine Veranschaulichung einer Integration von Einheiten zu einem Transceiver-Schaltkreis,

FIG 22      Transceiver-Schaltkreis an einem Mehrleiter-System,

FIG 23      mögliche Bus-Topologien,

FIG 24      ein Parallelbetrieb von unterschiedlichen Leitersystemen,

FIG 25      eine Terminierung in dem parallelen Betrieb,

FIG 26      eine dynamische Terminierung, und

FIG 27      ein Mischbetrieb zwischen LVDS und Mehrleitersystem.

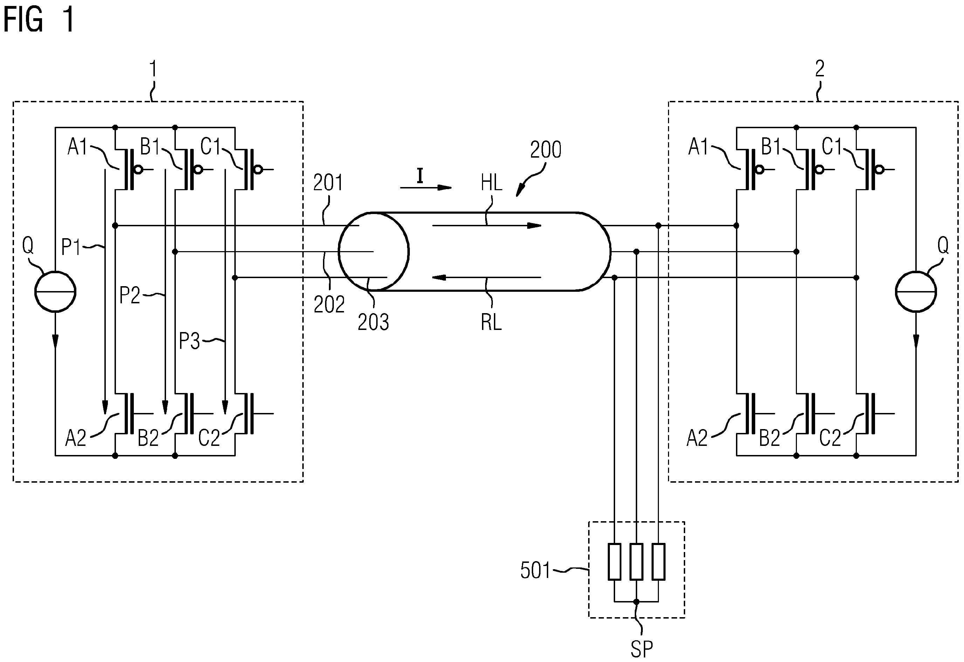

Gemäß FIG 1 ist ein erster Teilnehmer 1 und ein zweiter Teilnehmer 2 dargestellt, welche über ein gemeinsames Mehrleiter-System 200 durch elektrische Signal-Übertragung Symbole Sym austauschen können. Der erste Teilnehmer 1 ist dazu mit einem ersten elektrischen Leiter 201, einem zweiten elektrischen Leiter 202 und einem dritten elektrischen Leiter 203 mit dem zweiten Teilnehmer 2 über das Mehrleiter-System 200 verbunden. Zur elektrischen Signalübertragung und damit der Übertragung von Symbolen Sym werden im ersten Teilnehmer 1 zumindest drei Reihenschaltungen P1, P2, P3 aus jeweils einem oberen elektronischen Schalter A1, B1, C1 und einem unteren elektronischen Schalter A2, B2, C3 betrieben. An die erste Reihenschaltung P1, umfassend einem ersten oberen elektronischen Schalter A1 und einen ersten unteren elektronischen Schalter A2, wird zwischen den beiden Schaltern A1, A2 der erste elektrische Leiter 201 angeschlossen. Bei der zweiten Reihenschaltung P2 und der dritten Reihenschaltung P3 wird in ähnlicher Weise mit dem zweiten elektrischen Leiter 202 bzw. dem dritten elektrischen Leiter 203 verfahren. Die elektrischen Schalter sind beispielsweise als C-MOSchipintegrierbare Halbleiter-Bauteile ausgestaltet.

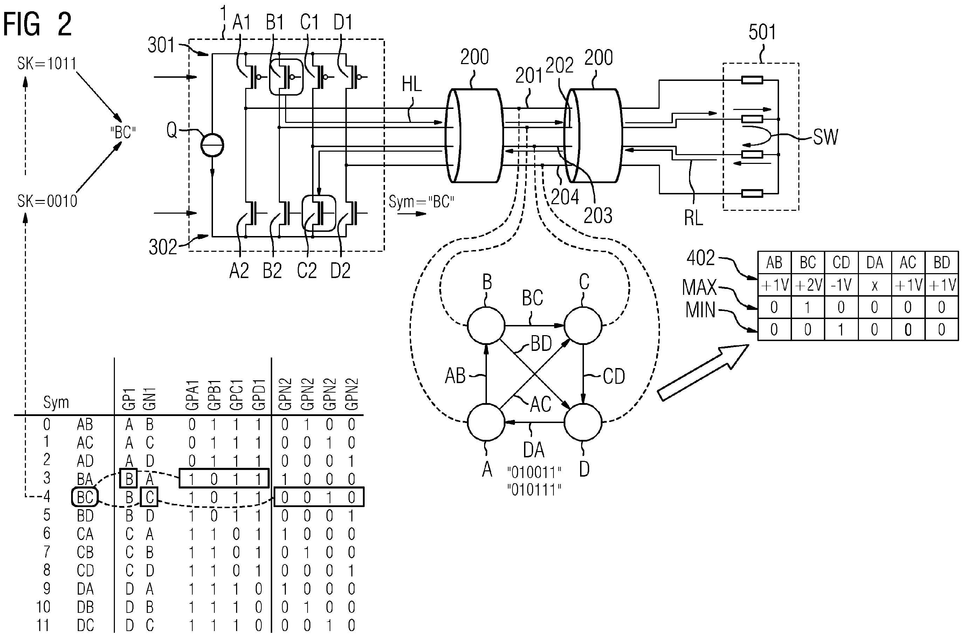

Das zu übertragende Symbol Sym (siehe auch FIG 2) wird durch eine Auswahl einer Schaltkombination SK für die elektronischen Schalter A1, B1, C1, A2, B2, C2 dadurch kodiert, dass nun eine geordnete Wahl von einem Leiterpaar aus einem Vorrat der elektrischen Leiter 201, 202, 203 aus dem Mehrleiter-System 200 durch Ansteuerung des entsprechenden elektronischen Schalter A1, B1, C1, durchgeführt wird. Über eine Stromquelle Q wird ein Strom über einen jeweils angesteuerten und damit geschlossenen oberen elektronischen Schalter A1, B1, C1 vom ersten Teilnehmer 1 in einen der elektrischen Leiter 201, 202, 203, welcher dann als Hin-Leiter HL in das Mehrleiter-System 200 fließt, geleitet.

Im zweiten Teilnehmer 2 oder auch außerhalb des zweiten Teilnehmers 2 wird ein Terminierungswiderstands-Netzwerk 501 an die elektrischen Leiter 201,202,203 des Mehrleiter-Systems 200 angeschaltet, dadurch wird ein Stromweg SW für den in dem Hin-Leiter HL fließenden Strom I über einen Sternpunkt SP zu einem weiteren elektrischen Leiter 201, 202, 203 geschaltet. Der weitere elektrische Leiter wird dann als ein Rück-Leiter RL für den Strom I über einen geschlossenen unteren elektronischen Schalter A2, B2, C2 vom ersten Teilnehmer 1 genutzt. Zur Dekodierung des übertragenden Symbols Sym wird im zweiten Teilnehmer 2 jeweils zwischen zwei elektrischen Leitern 201, 202, 203 ein Spannungspegel AB, CB, CA detektiert, und aus den unterschiedlichen Spannungspegeln zwischen den elektrischen Leitern wird das Symbol Sym zurückgewonnen.

Im Terminierungswiderstand-Netzwerk 501 werden die Spannungen zwischen den elektrischen Leitern 201,202,203 gemessen.

Mit der FIG 2 wird das in FIG 1 beschriebene Übertragungsprinzip näher erläutert und es wird gezeigt, wie Schaltkombinationen SK an die elektronischen Schalter A1, B1, C1, A2, B2, C2 angelegt werden und dadurch ein Symbol Sym = "BC" übertragbar ist.

Erfindungsgemäß wird eine wahlweise Herstellung von Signalwegen verwendet. Die Grundidee des Verfahrens ist es dabei, Übertragungsinformationen in einer geordneten Wahl von einem oder mehreren Leiterpaaren aus dem Vorrat des Mehr-Leitersystems 200 zu kodieren.

FIG 2 zeigt im Wesentlichen den ersten Teilnehmer 1 mit seinem oberen und unteren elektronischen Schaltern A1, B1, C1, A2, B2, C2, ein Terminierungswiderstand-Netzwerk 501, eine Veranschaulichung für die Spannungsabgriffe der Spannungspegel AB, BC, CA, CB, DB, AC und eine Kodier-Vorschrift aus denen die Schaltkombination SK gewonnen wird.

Die oberen elektronischen Schaltern A1, B1, C1 sind ausgestaltet die elektrischen Leiter 201, 202, 203 an einem ersten Ausgang der Stromquelle Q anzuschließen und die unteren Schalter A2, B2, C2 sind ausgestaltet die elektrischen Leiter 201, 202, 203 an einem zweiten Ausgang der Stromquelle Q anzuschließen

Angenommen, es soll das Symbol Sym = "BC" auf den Mehrleiter-System 200 übertragen werden, laut der Kodier-Vorschrift einer Kodiertabelle ergibt sich für das Symbol Sym = "BC" an der vierten Position in der Kodiertabelle eine Schaltkombination für "B" = 1011 und eine Schaltkombination SK für "C" = 0010. Die Kodiertabelle ist aufgeteilt für Schaltkombinationen SK für die oberen elektronischen Schalter A1, B1, C1, D1 und für Schaltkombinationen SK für die unteren elektronischen Schalter A2, B2, C2, D2. Als Ganzes wird das später auch Steuerblock 300 genannt, wobei die oberen elektronischen Schalter A1, B1, C1 dann einen oberen Steuerblock 301 und die unteren elektronischen Schalter A2, B2, C2 dann einen unteren Steuerblock 302 bilden.

Das Symbol Sym = "BC" wurde aus der Kodiertabelle entnommen, dabei zeigt die Spalte GP1 (Gate positiv 1) und die Spalte GN1 (Gate negativ 1) das jeweils herauszusuchende Symbol "B" und "C". Es gibt demnach eine Schaltkombination SK für den oberen Steuerblock 301 und eine Schaltkombination SK für den unteren Steuerblock 302. Betrachtet wird zunächst der obere Steuerblock 301. Bekommt der obere Steuerblock 301 die Schaltkombination SK =1011, so bedeutet das, dass der erste obere elektronische Schalter A1 mit "1" angesteuert wird, der zweite obere elektronische Schalter B1 mit "0" angesteuert wird, der dritte elektronische Schalter C1 wieder mit "1" angesteuert wird und der vierte elektronische Schalter D1 auch wieder mit "1" angesteuert wird. Da die elektronischen Schalter A1, B, C1, D1 des oberen Steuerblocks 301 einen invertierenden Eingang haben, wird nur der zweite elektronische Schalter B1 derart angesteuert, dass ein Strom I von der Stromquelle Q in das Mehrleiter-System 200 fließen kann. Durch den geschlossenen bzw. angesteuerten zweiten oberen elektronischen Schalter B1 fließt der Strom I in den zweiten elektrischen Leiter 202. Dieser zweite elektrische Leiter 202 dient als Hin-Leiter HL für den Strom I zu einem weiteren Teilnehmer bzw. einem Terminierungswiderstands-Netzwerk 501. Der Strom I fließt nun in das Terminierungswiderstands-Netzwerk 501 und kann durch die dort sternförmig geschalteten Widerstände einen Stromweg SW über den dritten elektrischen Leiter 203 zurück zum ersten Teilnehmer 1 nehmen. Da im ersten Teilnehmer 1 für den unteren Steuerblock 302 die Schaltkombination SK = 0010 gewählt wurde, ist nun im unteren Steuerblock 302 der dritte untere elektrische Schalter C2 derart angesteuert, dass der Strom I zur Stromquelle Q zurückfließen kann.

Zur Dekodierung der übertragenen Information wird beispielsweise im zweiten Teilnehmer 2 oder auch an einer beliebigen anderen Stelle durch das Terminierungs-Widerstandsnetzwerk 501 jeweils zwischen zwei elektrischen Leitern 201, 202, 203 ein Spannungspegel AB, BC, CA usw. erzeugt und schließlich detektiert. Aus den unterschiedlichen Spannungspegeln AB, BC, CA zwischen den elektrischen Leitern 201, 202, 203 kann das Symbol Sym = "BC" zurückgewonnen werden. In der Mitte von FIG 2 ist beispielhaft ein Graph für ein Vierleitersystems N = 4 dargestellt. Dabei hat der Graph entsprechend des Vierleitersystems N = 4 vier Knoten, nämlich einen ersten Knoten A, einen zweiten Knoten B, einen dritten Knoten C und einen vierten Knoten B. Die gestrichelten Linien vom Graphen zum Mehrleiter-System 200 symbolisieren einen Abgriff für die Spannungspegel.

Zwischen dem ersten Knoten A und dem zweiten Knoten B wird der Spannungspegel AB messbar. Dabei hängt der erste Knoten A an dem ersten elektrischen Leiter 201 und der zweite Knoten B hängt an dem zweiten elektrischen Leiter 202. Zwischen den zweiten Knoten B und dem dritten Knoten C kann der Spannungspegel BC gemessen werden, dazu hängt der dritte Knoten C an dem dritten elektrischen Leiter 203. Da der vierte Knoten D an dem vierten elektrischen Leiter 204 hängt, kann zwischen dem dritten Knoten C und dem vierten Knoten D der Spannungspegel CD zwischen den beiden jeweiligen Leitern 203,204 gemessen werden. Mit diesem Graph für ein Vierleitersystem n=4 können also zwischen dem Knoten A, B, C, D sechs unterschiedliche Spannungspegel gemessen werden. Rechts von dem Graphen ist eine Tabelle mit Spannungspegeln als Elemente aufgezeigt. Durch das Messen der Spannungspegel zwischen den Leitern 201, 202, 203, 204 ergibt sich aus den Elementen ein Empfangsvektor 402. Mit der eingangs genannten Schaltkombination SK = 1011 und SK = 0010 ergeben sich die in der Tabelle angegebenen Spannungen AB, BC, CD, DA, AC, BD zwischen den Leitern 201, 202, 203, 204.

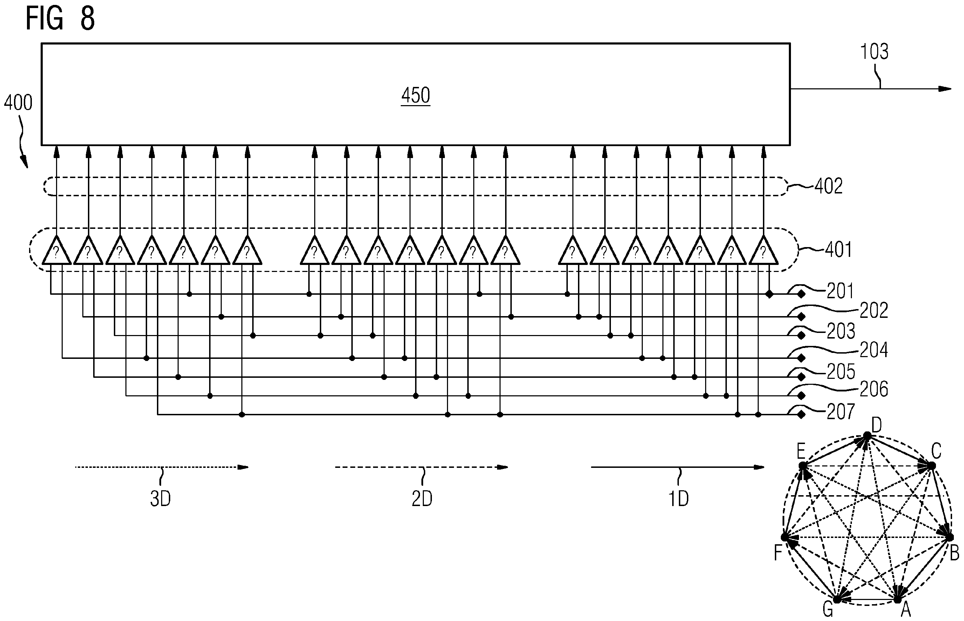

Um nun herauszufinden, um welches Symbol Sym es sich handelt, wird in einem Symboldekoder 450 (siehe FIG 8) auf eine Reihenfolge der Elemente des Empfangsvektors 402 zum einen eine Minimumermittlung und zum anderen eine Maximumermittlung durchgeführt und jeweils als eine binäre Folge max und min bereitgestellt, in welcher der maximale Pegel bzw. der minimale Pegel als Position in der Reihenfolge der Elemente markiert ist. In unserem Beispiel für das Symbol "BC" ergibt sich zwischen den beiden Knoten "BC" ein Maximum und zwischen den beiden Knoten "CD" ein Minimum. Daraus folgt ein weiterer Vektor "010000" und "001000". Mit diesen beiden Min-Max-Vektoren kann man dann aus einer Dekodiertabelle wiederum das übertragende Symbol Sym zurücklesen.

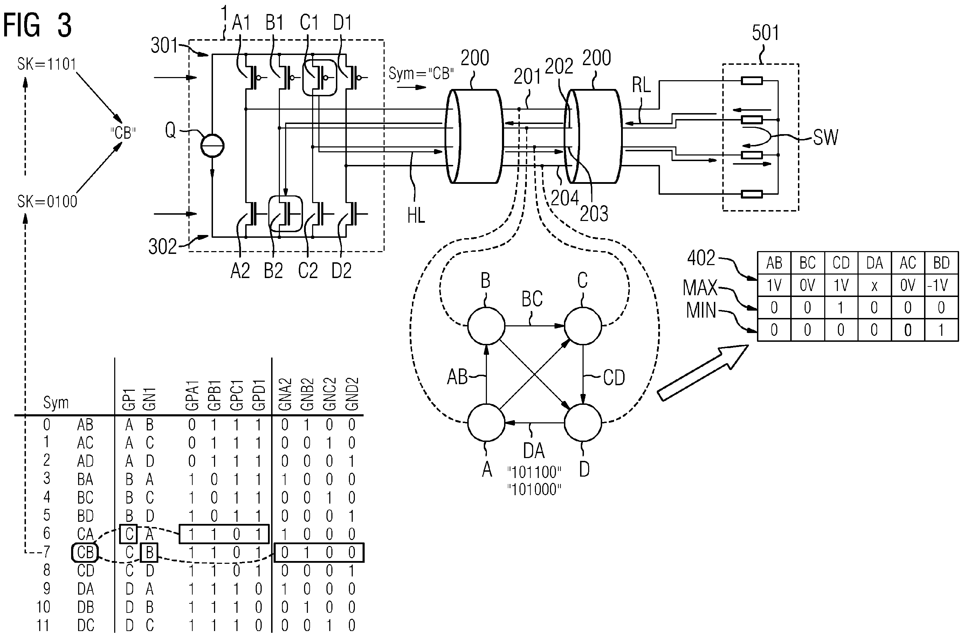

Mit der FIG 3 wird die Übertragung des Symbols Sym = "CB" aufgezeigt. Da sich jetzt die Schaltkombinationen SK unterscheiden, SK = "1101" und SK = "0100", wird ein anderer elektrischer Leiter 201, 202, 203, 204 als Hin-Leiter HL und als Rück-Leiter RL für die Übertragung des Symbols Sym = "CB" in FIG 3 ausgewählt. Eben gerade durch die unterschiedliche gezielte Auswahl von Hin- und Rück-Leitern HL, RL kann durch die Auswahl der Leiter ein Symbol Sym kodiert werden. Durch die Schaltkombination SK = 1101 wird im oberen Steuerblock 301 der dritte obere elektrische Schalter C1 leitend gesteuert. Der Strom I fließt nun über den Hin-Leiter HL durch den dritten elektrischen Leiter 203 zum Terminierungswiderstands-Netzwerk 501 und durch die Schaltung der Terminierungswiderstände wird ein Stromweg SW zurück über den zweiten elektrischen Leiter 202 als Rück-Leiter RL geschaltet. Da nun im unteren Steuerblock

302 aufgrund der Schaltkombination SK = 0100 der zweite untere elektrische Schalter B2 angesteuert ist, kann der Strom I zurückfließen zur Stromquelle Q, so dass der Stromkreis geschlossen ist. Rechts von dem Graphen mit den Knoten A, B, C, D sind in einer kleinen Tabelle die Spannungspegel dargestellt, und aus dem Empfangsvektor 402 lassen sich die Max- und Min-Vektoren auslesen.

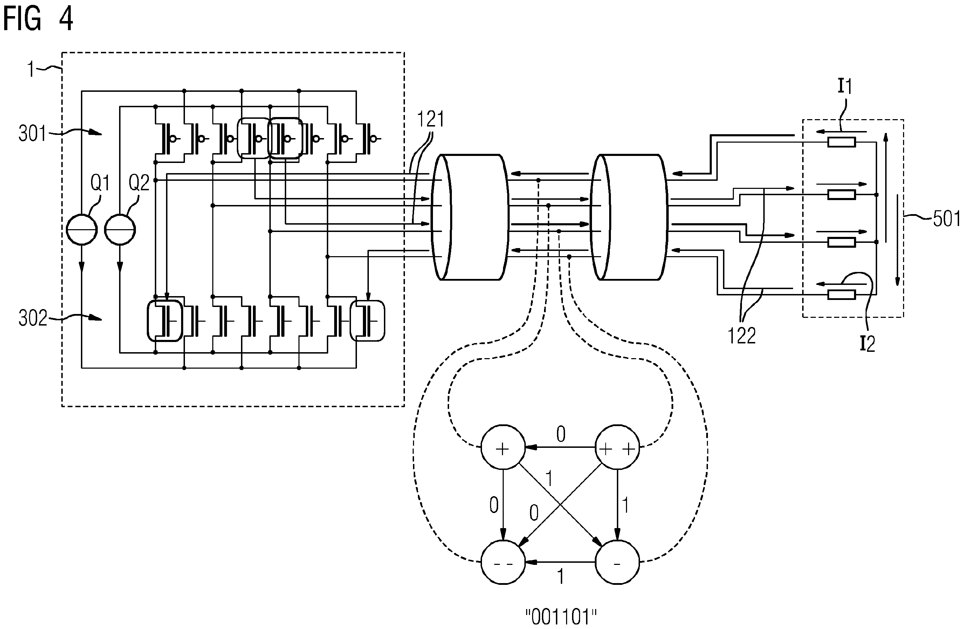

Mit der FIG 4 wird ein Prinzip gezeigt, um einen möglichen Symbolvorrat zu erhöhen. Gemäß FIG 4 wird zwischen dem ersten Teilnehmer 1 und dem zweiten Teilnehmer 2 bzw. einem Terminierungswiderstands-Netzwerk 501 zusätzlich zu einer ersten Stromschleife 121 eine zweite Stromschleife 122 eingeprägt. Der erste Teilnehmer 1 weist dazu eine erste Spannungsquelle Q1 und eine zweite Spannungsquelle Q2 auf. Die elektrischen Schalter in dem jeweiligen oberen Steuerblock 301 und den unteren Steuerblock 302 sind dabei doppelt ausgelegt, wobei für jede Stromquelle Q1, Q2 eigene elektrische Schalter vorhanden sind. Für den Fall, dass zwischen dem ersten Teilnehmer 1 und dem zweiten Teilnehmer 2 mehrere Stromschleifen 121, 122 mit unterschiedlichen Signalströmen I1, I2 betrieben werden, wird zur Dekodierung des Symbols Sym wie folgt vorgegangen:

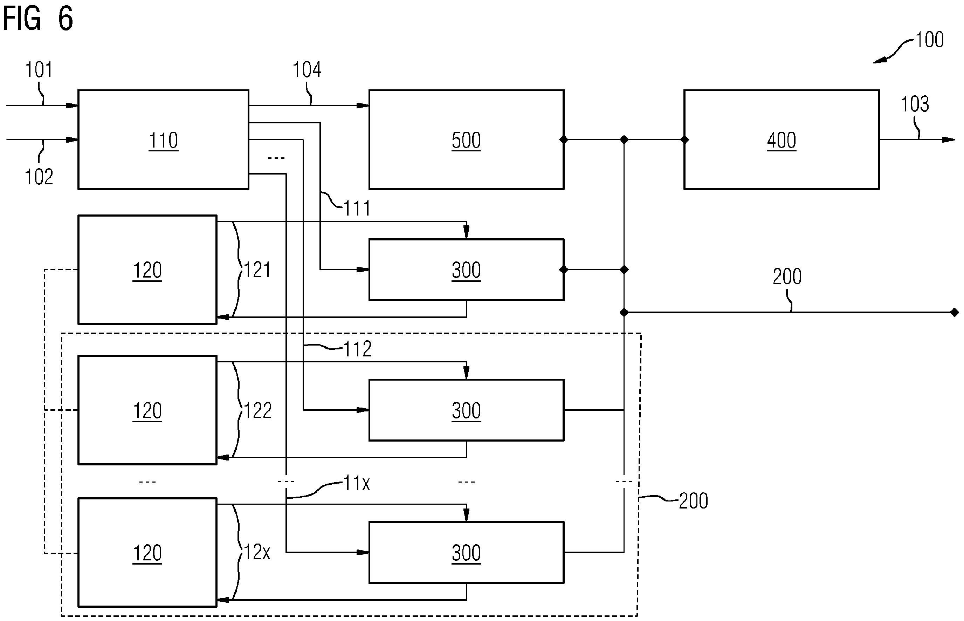

In einem ersten Schritt werden die Spannungspegel AB, BC, CA zwischen den elektrischen Leitern 201, 202, 203, 204 bzw. zwischen den Knoten A, B, C, D mit einem Komparator-Netzwerk 400 erfasst. Das Komparator-Netzwerk 400 wird später in der FIG 6 und FIG 8 näher beschrieben. Die erfassten Spannungspegel AB, BC, CA werden wie schon mit FIG 2 und FIG 3 beschrieben ermittelt und den Spannungspegeln AB, BC, CA wird ein Empfangsvektor 402, wobei die Spannungspegeln AB, BC, CA die Elemente des Empfangsvektors 402 bilden.

In einem zweiten Schritt wird der Empfangsvektor 402 dem Symboldecoder 450 zugeführt, wobei zum einen auf eine Reihenfolge der Elemente des Empfangsvektors 402 eine Maximum-Ermittlung und zum anderen eine Minimum-Ermittlung durchgeführt und jeweils eine binäre Folge Max, Min bereitgestellt wird. Diese binären Folgen Max, Min (siehe auch FIG 2 und FIG 3) beschreiben den maximalen Pegel bzw. den minimalen Pegel als Position in der Reihenfolge.

In einem dritten Schritt erfolgt eine Reduzierung des Empfangsvektors 402 und um die bereits erkannten Positionen. Mit dem reduzierten Empfangsvektor 402 wird dann wieder eine Maximum-Ermittlung und eine Minimum-Ermittlung durchgeführt.

Bei der Vorgehensweise gemäß FIG 4 erhält man folgende Vorteile: Pro verfügbarem Leiterpaar kann eine weitere Stromschleife eingeprägt werden, wodurch sich ein Symbolvorrat erhöht. Durch die Verwendung unterschiedlich starker Ströme ergeben sich auch definierte Pegel zwischen den Leitern der jeweiligen Ströme. Diese erlauben eine spätere inkrementelle Kodierung und Dekodierung aus mehreren Strömen, jeweils in der Menge der (noch) verfügbaren Leiter. Auf diese Weise kann eine erhebliche Informationsmenge in wenigen Leitern mit geringem Energieaufwand kodiert werden. Auch die Kodierung und die Dekodierung kann mittels rein digitaler und einfacher Schaltungen realisiert werden.

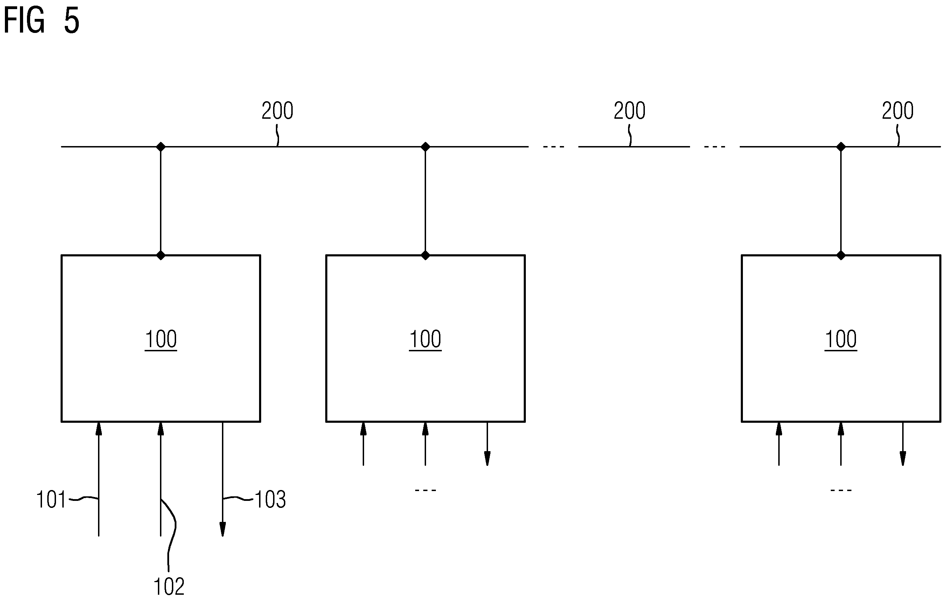

Die FIG 5 zeigt eine typische Anordnung von Transceivern 100, welche an ein gemeinsames Mehrleiter-System 200 angeschlossen sind. Im Sinne der Erfindung ist unter Transceiver ein Sendeempfänger zu verstehen, vorteilhafterweise ist der Transceiver 100 in einer integrierten Schaltung implementiert. Das bedeutet, der Transceiver beinhaltet einen Sender, einen Empfänger, ein Widerstandsnetzwerk und die entsprechende Steuerungslogik. Die Erfindung beschreibt also einen Transceiver 100, welcher den Zugang zu einem mit anderen Teilnehmern geteilten Mehrleiter-System 200 darstellt, sowie eine Kodierungsmethode zur energieeffizienten Übertragung von Informationen zwischen zwei oder mehreren Transceivern 100 über das Mehrleiter-System 200. Die vorliegende Erfindung erlaubt es, mit verhältnismäßig einfachen und CMOS-chipintegrierbaren Baugruppen ein busfähiges Mehrleiter-Systems 200 zur Informationsübertragung aufzubauen, welches ähnliche Signalintegritätseigenschaften und Übertragungsraten wie z. B. LVDS erzielt, gleichzeitig aber auch eine deutlich effizientere Informationskodierung bei unterproportional steigendem Stromverbrauch aufweist. Hierfür sind folgende Eigenschaften maßgeblich:

1) Zu jedem Zeitpunkt werden nur wenige, verschieden starke Stromschleifen in das Leitersystem eingeprägt.

2) Dadurch, dass die Stromschleifen anhand ihrer relativen Stromstärkenverhältnisse zueinander eindeutig senderseitig gebildet und empfängerseitig erkannt werden können, erfolgt die Informationskodierung durch die Wahl der Einzelleiter für den jeweiligen Hin- und Rückleiter jeder einzelnen Stromschleife.

3) Ein Empfänger kann durch einen schnellen iterativen Prozess die einzelnen Stromschleifen identifizieren und deren Flussrichtungen bestimmen. Hierfür sind lediglich einfache rein-binäre Abfragen mittels Komparatoren erforderlich.

4) Mit dem Einsatz Impedanz kontrollierter und reflexionsarmer Leitungsführungstechniken sowie geeigneter Terminierung ist das Übertragungssystem grundsätzlich in der Lage höchste Signalisierungsraten mit verhältnismäßig geringer Komplexität und bei mäßigem Stromverbrauch zu erzielen.

Die Kodierungsmethode entspricht dann dem vorliegenden und beanspruchten Verfahren zur elektrischen Übertragung von Symbolen Sym. Ein Transceiver 100 hat hierbei unmittelbaren Zugang zum Mehrleiter-System 200 und bietet eine Schnittstelle zur Ansteuerung durch ein informationsverarbeitendes System in Form von je einem Symbolstrom in Empfangs- und Sende-Richtung, nämlich einem Sendesymbolstrom 102 und einem Ausgabesymbolstrom 103. Ein Steuersignal 101 dient dazu, beispielsweise zwischen Sendebetrieb, Empfangsbetrieb, einer Terminierung und/oder einer dynamischen Terminierung zu wechseln. Ein Transceiver 100 umfasst eine Steuereinheit mit einem Symbolkodierer 110, einem Stromquellenmodul 120 und einer entsprechenden Anzahl von Steuerblöcken 300 (siehe FIG 6). Der in FIG 5 prinzipiell dargestellte Transceiver 100 wird in FIG 6 detaillierter beschrieben. Ein besonderer Vorteil des Verfahrens ist es, die Übertragungsinformation in der geordneten Wahl von einem oder mehreren Leiterpaaren aus dem Vorrat des Mehrleiter-Systems 200 zu kodieren, dabei werden die einzelnen elektrischen Leiter zur Durchleitung von einem oder mehreren Signalströmen eingesetzt. Bei der Verwendung mehrerer Leiterpaare können die Signalströme jeweils unterschiedlich groß sein und damit in einem verlässlichen, störsicheren Verhältnis zueinanderstehen.

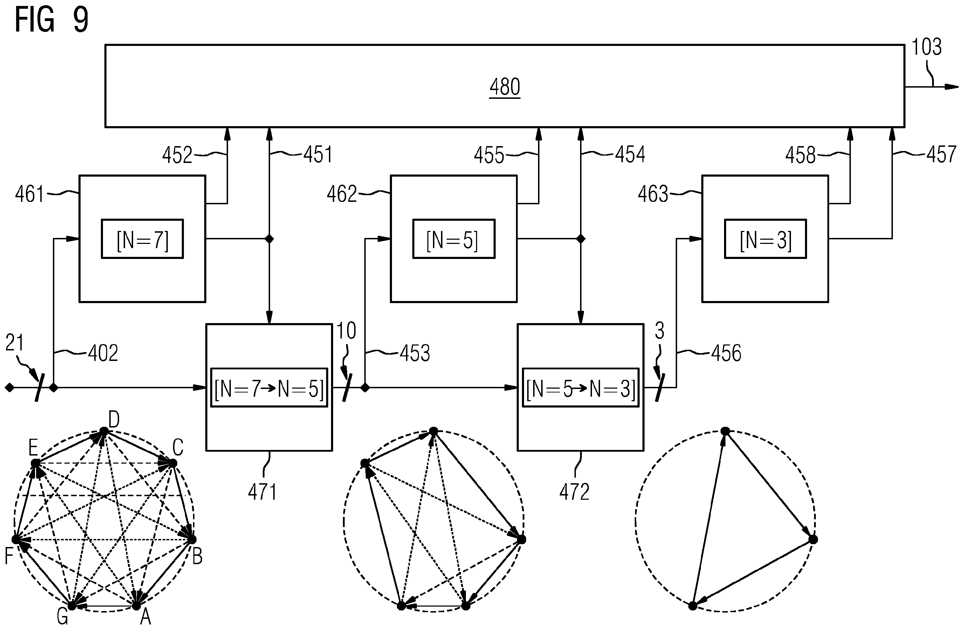

FIG 6 zeigt ein Blockschaltbild eines Transceiver 100. Ein Symbolkodierer 110 erhält als Eingangsgröße einen Sendesymbolstrom 102 und zusätzlich ein Steuersignal 101. Der Symbolkodierer 110 schickt einen ersten Stromschleifen-Steuervektor 111 zu einem Steuerblock 300. Weiterhin kann der Symbolkodierer 110 einen zweiten Stromschleifen-Steuervektor 112 zu einem weiteren Steuerblock 300 und je nach Ausgestaltung bis zu einem x-ten Stromschleifen-Steuervektor 11x zu einem weiteren Steuerblock 300 schicken. Über jeweilige Stromquellenmodule 120 wird dann eine erste Stromschleife 121 oder eine zweite Stromschleife 122 bzw. eine x-te Stromschleife 12x erzeugt. Die entsprechenden Steuerblöcke 300, wie in FIG 2 und FIG 3 beschrieben, übertragen die entsprechenden Signalströme über das Mehrleiter-System 200, wobei in einem Empfänger über ein Komparator-Netzwerk 400 die Spannungspegel der elektrischen Leiter des Mehrleiter-Systems 200 gemessen werden. Somit verfügt ein Transceiver 100 über eine Steuereinheit mit einem Symbolencoder 480 (siehe FIG 9), eine oder mehreren gekoppelten Stromquellen und einer entsprechenden Anzahl von Steuerblöcken 300 mit jeweils einem oberen Steuerblock 301 und einem unteren Steuerblock 302. Für einen Empfangsbetrieb wird ein Komparator Netzwerk 400 mit einem Symboldecoder 450 eingesetzt.

Mit FIG 8 ist der Symboldecoder 450 näher beschrieben. Der Symboldecoder 450 erzeugt den Ausgabesymbolstrom 103.

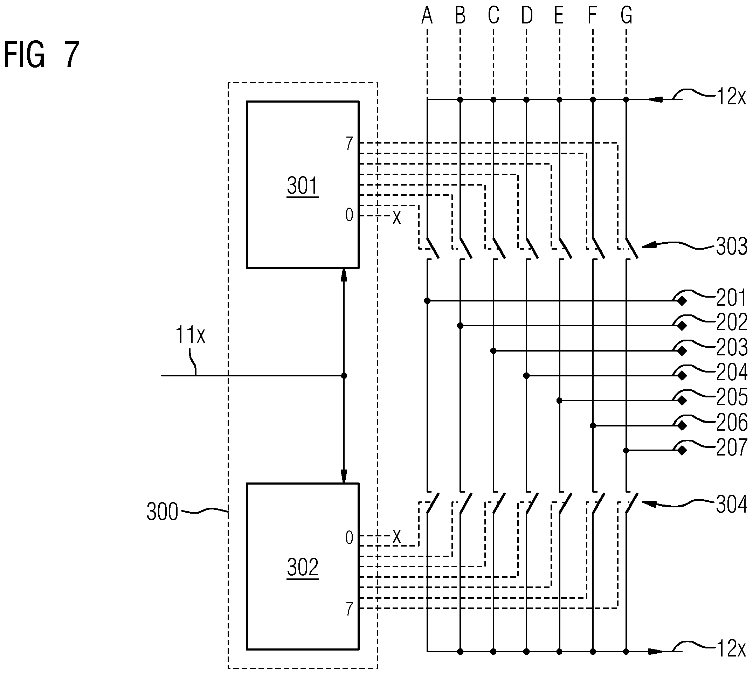

Als ein Stromschleifen-Treiber wird eine Einheit aus einer gekoppelten Stromquelle, nämlich den Stromquellenmodulen 120, und Stromverteilern, nämlich den Steuerblöcken 300 mit ihrem oberen Steuerblock 301 und ihrem unteren Steuerblock 302, bezeichnet. Mit Hilfe dieser Stromschleifen-Treiber kann ein gerichteter Strom definierter Größe auf vielfältige Weise in das Mehrleiter-System 200 eingeprägt werden. Dabei kann sowohl der Hin- als auch der Rück-Leiter HL, RL des Stromes I frei aus den N-Leitern des Mehrleiter-Systems 200 gewählt werden. Der Steuerblock 300 (siehe FIG 7) kann aus mindestens n = 3 elektrischen Leitern für die Dekodierung oder Kodierung ein "differenzielles Tupel" bilden. Im Gegensatz zu einem differenziellen Paar, wie es aus der LVDS-Technik bekannt ist, können nun mehr Informationen kodiert bzw. dekodiert werden, weil nun mehrere Leiterwege über die bereits beschriebene Ansteuerschaltung ausgewählt werden können.

Im Gegensatz zum differenziellen Paar bedient das "differenzielle Tupel" mehrere Leiterwege über eine Ansteuerschaltung, nämlich dem Steuerblock 300, welcher eine Bank aus Halbbrücken ansteuert, um die Stromschleife durch die gewählten Leiterpaare aufzubauen und dann noch die Stromstärke berücksichtigt wird. In der Ansteuerung sollte sichergestellt werden, dass ein Querstrom durch gleichzeitige Selektion derselben Leitung an High- und Low-Side-Treibern (oberer Steuerblock 301 und unterer Steuerblock 302) ausgeschlossen wird.

Ein minimaler Aufbau eines Übertragungskanals besteht aus zwei Transceivern 100, einen Mehrleiter-System 200 und einer Sternpunkt-Terminierung 503. Die Terminierung ist erforderlich, da diese den Strompfad bzw. den Stromweg SW für die eingeprägten Stromschleifen darstellen und der Spannungsabfall über die Terminierungs-Widerstände R erst zu detektierbaren Spannungspegeldifferenzen führt. Im einfachsten Fall kann dies ein geeignetes dauerhaft wirksames Widerstandsnetzwerk sein. Optional ist es jedoch auch von Vorteil, eine Terminierungseinheit 500 in den Transceiver 100 zu integrieren. Dies erlaubt die gezielte Zu- und Abschaltung der Terminierungs-Widerstände R entlang des Mehrleiter-Systems 200. Hierdurch kann bei einem Betrieb in einem ausgedehnten Busszenario mit vielen verteilten Teilnehmern bzw. Transceivern 100 gezielt auf Reflexionen reagiert werden. Auch kann durch kurzzeitiges Zu- oder Abschalten der Terminierung aller oder einzelner Busleitungen gezielt Einfluss auf die Signalform genommen werden. Hierfür kann die Terminierungseinheit 500 über die darin befindlichen Terminierungsschalter 502 und einem Terminierungsvektor 104 vom Symbolkodierer 110 gezielt angesteuert werden.

Gemäß FIG 7 ist ein Steuerblock 300 schematisch dargestellt. Ein x-ter Stromschleifen-Vektor 11x wird zum einen an einen oberen Steuerblock 301 und zum anderen an einen unteren Steuerblock 302 geführt. Der obere Steuerblock 301 könnte auch als "High-side one hot"-Encoder bezeichnet werden und der untere Steuerblock 302 als "Low-side one hot"-Encoder bezeichnet werden. Der obere Steuerblock 301 kann obere Schalter 303 der Halbbrücke schließen und öffnen. Der untere Steuerblock 302 kann untere Schalter 304 öffnen und schließen. Es stehen sieben obere Schalter 303 und sieben untere Schalter 304 für sieben Leitungen N = 7 zur Verfügung. Jedem elektrischen Leiter 201, ... ,207 ist somit ein oberer Schalter 303 bzw. ein unterer Schalter 304 zugeordnet. Der erste elektrische Leiter 201 entspricht dann dem Knoten A und der siebte elektrische Leiter 207 entspricht dann dem Knoten G in dem Graphen A, B, C, D, E, F, G.

FIG 8 zeigt ein Komparator-Netzwerk 400, wobei bei einem Siebenleitersystem N = 7 einundzwanzig Komparatoren zur Verfügung stehen. Es ergibt sich eine Gruppe mit Komparatoren, welcher zu einer fernen Nachbarschaft 3D zugeordnet werden. Es ergibt sich weiterhin eine Gruppe von Komparatoren, welche zu einer mittleren Nachbarschaft 2D zugeordnet werden können und es ergibt sich eine Gruppe von Komparatoren, welche zu einer engen Nachbarschaft 1D zugeordnet werden können. Mit Blick auf einen Graphen A, B, C, D, E, F, G mit sieben Knoten bedeutet die ferne Nachbarschaft 3D immer einen Abstand von drei Kanten zwischen zwei Knoten, die mittlere Nachbarschaft 2D bedeutet einen Abstand von zwei Kanten zwischen zwei Knoten, und die enge Nachbarschaft 1D bedeutet, dass die Knoten direkte Nachbarn sind.

Empfangsbetrieb und Symbolerkennung

Durch einen Vergleich der Spannungspegel mit den einundzwanzig Komparatoren kann der Symboldecoder 450 den Ausgabesymbolstrom 103 bereitstellen. Im Empfangsbetrieb ist das Komparator-Netzwerk 400 aktiv und erfasst die relativen Verhältnisse der Spannungspegel im Mehr-Leitersystem 200 kontinuierlich, welche dann im digitalen Empfangsvektor 402 abgebildet werden. Der Symboldecoder 450 ermittelt aus diesem Empfangsvektor 402 den Ausgabesymbolstrom 103. In einer präferierten Umsetzung maximaler Leistungsfähigkeit beinhaltet das Komparator-Netzwerk 400 jeweils einen Komparator 401 für jedes einzigartige Leiterpaar im Mehr-Leitersystem 200. Allerdings ist es auch möglich, die Menge der benötigten Komparatoren durch Ausdünnung des Komparator-Netzwerks 400 zu verkleinern. Dies schränkt die Größe des Empfangsvektors 402 wie auch die Komplexität des Symbol-decoders 450 ein und führt zu einer verringerten Menge an möglichen Symbolen, was den Informationsdurchsatz des Systems limitiert. Beim Ausdünnen des Komparator-Netzwerkes 400 sollte darauf geachtet werden, dass eine asymmetrische Ausdünnung zum Verlust der Vertauschungstoleranz von Leitungen im Leitersystem 200 führt.

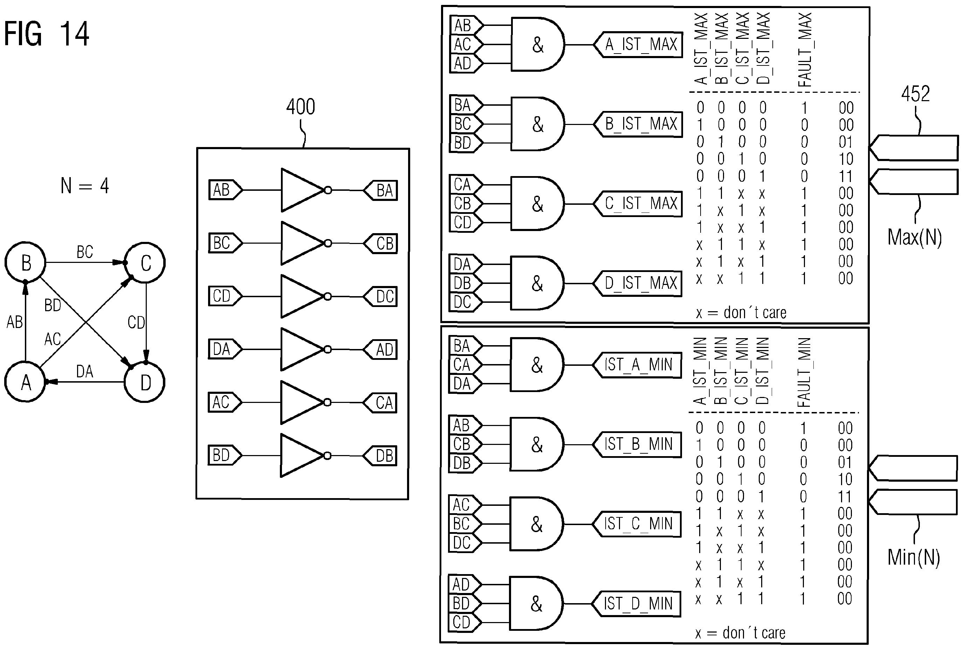

Die Dekodierung der Symbole im Symboldecoder 450 kann für ein unausgedünntes und vollvermaschtes Komparatornetzwerk 400 in einem mehrstufigen, iterativen Prozess erfolgen. Hierzu erkennt ein erster Diskriminator 461 (siehe FIG 9), welcher als ein Min-Max Leitungspaar-Diskriminator arbeitet, das Leiterpaar mit dem jeweils größten und kleinsten Relativpegel im Mehr-Leitersystem 200 und gibt diese Information als Leitungspaarinformation 451, 454, 457 zurück. In einer bevorzugten Implementierung genügt ein einfaches Mehreingangs-Und-Logikgatter (siehe Fig 14), welches erfasst, ob ein Leitungspegel stets größer oder kleiner ist als der Pegel aller anderer Logikleitungen. Ein Fehlersignal 452, 455, 458 wird immer dann aktiv, wenn nicht stets genau ein Maximum und genau ein Minimum erkannt wird. Dies kann der Fall sein, wenn sich der Bus in Ruhe befindet oder mehrere Stromschleifen 12X mit gleicher Stromstärke aktiv sind. In diesem Fall wäre dann eine eindeutige Zuordnung zu den einzelnen Schleifen nicht möglich

Gemäß FIG 9 ist ein Blockschaltbild eines Symbolencoders 480 dargestellt. Um aus einem Empfangsvektor 402 einen reduzierten Empfangsvektor 453 bzw. einen noch weiter reduzierten Empfangsvektor 456 bereitzustellen, sind ein erster Diskriminator 461, ein zweiter Diskriminator 462 und ein dritter Diskriminator 463 vorgesehen, mit welchen der mehrstufige, iterative Prozess durchgeführt wird. Der Symboldecoder 450 gemäß FIG 8 liefert demnach einundzwanzig Werte, welche mit dem ersten Diskriminator 461 geprüft werden, und es wird ein erstes Fehlersignal 452 bereitgestellt, wenn nicht ein Minimum und ein Maximum erkannt werden konnte. Mit Hilfe der Minimum- und Maximum-Auswertung kann dem Symbolencoder 480 über dem ersten Diskriminator 461 eine erste Leitungspaar-Information 451 zur Verfügung gestellt werden. Mittels eines ersten Reduzierers 471 wird von dem Mehrleiter-System 200 mit n = 7 auf ein Mehrleiter-System mit n = 5 reduziert. Mit dem ersten Reduzierer 471 wird ein reduzierter Empfangsvektor 453 zur Verfügung gestellt. Dieser reduzierte Empfangsvektor 453 wird dem zweiten Diskriminator 462 als Eingangsgröße für die Min-Max-Auswertung bereitgestellt. Der zweite Diskriminator 462 kann wiederum dem Symbolencoder 480 eine zweite Leitungspaar-Information 454 zur Verfügung stellen. In einem nächsten Schritt wird der reduzierte Empfangsvektor 453 mittels eines zweiten Reduzierers 472 zu einem weiter reduzierten Empfangsvektor 456 umgewandelt. Auch der weiter reduzierte Empfangsvektor 456 wird wiederum über einen dritten Diskriminator 463 auf Minimum und Maximum geprüft, wodurch der dritte Diskriminator 463 dem Symbolencoder 480 eine dritte Leitungspaar-Information 457 zur Verfügung stellt. Sollte der erste Diskriminator 461, der zweite Diskriminator 462 und/oder der dritte Diskriminator 463 einen Fehler bei der Min-Max-Auswertung detektieren, so wird dem Symbolencoder 480 jeweils ein erstes Fehlersignal 452, ein zweites Fehlersignal 455 und oder ein drittes Fehlersignal 458 zur Verfügung gestellt.

Nach dem ersten Schritt ist nun bekannt, welches Leitungspaar Hin- und Rückleiter für die Stromschleife mit dem größtem Schleifenstrom bereitstellt. Mit dieser Information kann nun in Vorbereitung des zweiten Schritts das Empfangsnetzwerk um diese Leiter ausgedünnt werden. Im Beispiel der FIG 9 handelt es sich um ein n=7 Mehrleiter-System 200 mit insgesamt L=3 Stromschleifen. Nach dem ersten Schritt mit Erkennen der ersten Stromschleife durch die Knoten B und F verbleiben noch die Knoten A, C, D, E und G. Im gleichen Schritt werden die Komparatoren, die an den nun entfernten Leitern B und F angeschlossen sind, obsolet und können aus dem Empfangsvektor 402 entfernt werden. Der Block "Reduktion von Empfangsvektor und - Netzwerk" entfernt diese überschüssigen Bits, sodass ein neuer reduzierter Empfangsvektor 453 entsteht, welcher auf eine neue Länge von zehn Bits verkleinert nun dem Empfangsvektor eines Fünfleitersystems n=5 entspricht. Entsprechend können nun mit einem weiteren "Min-Max Leitungspaar-Diskriminator" Hin- und Rückleiter der größten noch verbleibenden Stromschleife gefunden werden. In Vorbereitung einer abschließenden Iteration wird erneut der reduzierte Empfangsvektor auf Basis der ermittelten Leitungspaarinformation 454 ermittelt. Dieser Vektor korrespondiert nun zu dem eines Dreileitersystems n = 3 mit den Knoten A, C, E.

Der Symbolencoder 480 kennt die mögliche Vielfalt der Leitungspaarinformationen 452, 445 und 458 (A, B und C) und kann hieraus ein Empfangssymbol einfach ermitteln. Sofern eines der Fehlersignale 452, 455, 458 aktiv ist, kann entsprechend ein Fehlersymbol generiert werden. Für die Dekodierung des Ausgabesymbolstroms 103 aus den Empfangsvektoren 402 ist zunächst keine synchrone Logik erforderlich, wodurch grundsätzlich auch Methoden zur Taktrückgewinnung auf den Ausgabesymbolstroms 103 angewandt werden können. Hierfür kann z. B. auch das niederwertigste Fehlersignal, im Beispiel das dritte Fehlersignal 458, gezielt eingesetzt werden. Eine Möglichkeit wäre hierzu, dass der Sender den dritten Stromschleifen-Steuervektor 113 zyklisch unterbricht und so ein Taktsignal im dritten Fehlersignal 458 provoziert.

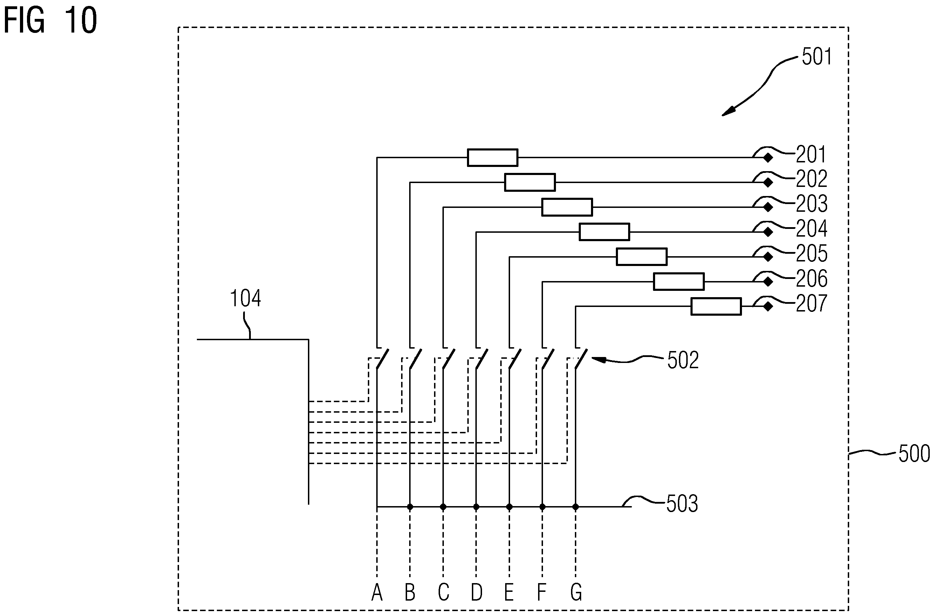

Die FIG 10 zeigt als Blockschaltbild eine Terminierungseinheit 500. Als Eingangsgröße erhält die Terminierungseinheit 500 einen Terminierungsvektor 104. Der Terminierungsvektor 104 kann die Terminierungsschalter 502 entsprechend steuern, so dass ein Terminierungswider-stands-Netzwerk 501 an die entsprechenden elektrischen Leiter 201, ..., 207 geschaltet wird. Die Terminierungsschalter 502 sind den Knoten A, ..., G der entsprechenden Graphen zugeordnet.

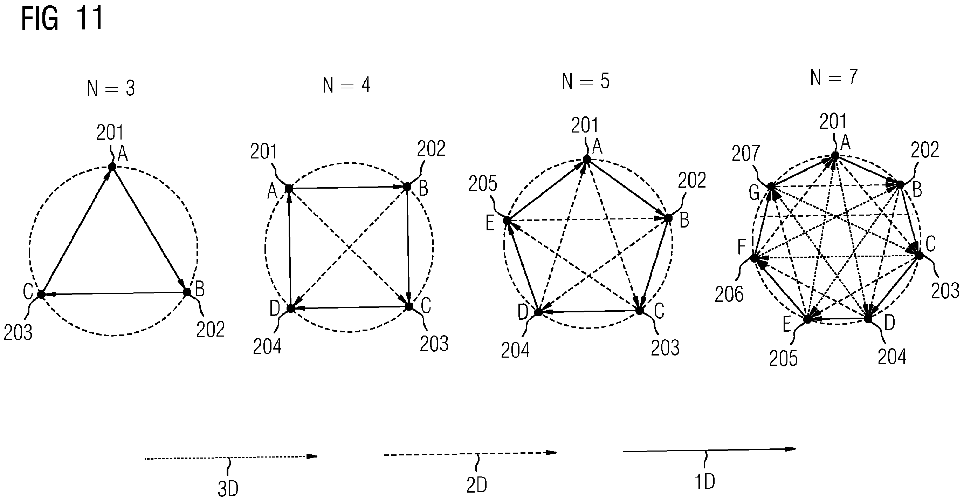

Mit der FIG 11 werden Graphen für eine unterschiedliche Anzahl von elektrischen Leitern in dem Mehrleiter-System 200 aufgezeigt. Für einen Dreileiter-System n = 3 wird zur Ermittlung der Spannungspegel AB, BC, CA ein Graph mit drei Knoten A, B, C verwendet. Bei einem Mehrleiter-System 200 mit n = 4 Leitern wird ein Graph A, B, C, D mit vier Knoten verwendet, wobei sich bereits sieben Spannungspegel ergeben. Bei einem Mehrleiter-System 200 mit n = 5 elektrischen Leitern wird ein Graph A, B, C, D, E mit fünf Knoten verwendet, wodurch sich nun zehn Spannungspegel AB, BC, CA ... ergeben. Hat das Mehrleiter-System 200 n = 7 elektrische Leiter, so ergeben sich einundzwanzig Vergleichsstellen und dementsprechend einundzwanzig Spannungspegel. Die durchgezogenen Pfeile zwischen den Knoten in den Graphen bedeuten in dem Fall eine enge Nachbarschaft 1D, die gestrichelten Pfeile bedeuten eine mittlere Nachbarschaft 1D und die gepunkteten Verbindungspfeile bedeuten eine ferne Nachbarschaft 3D.

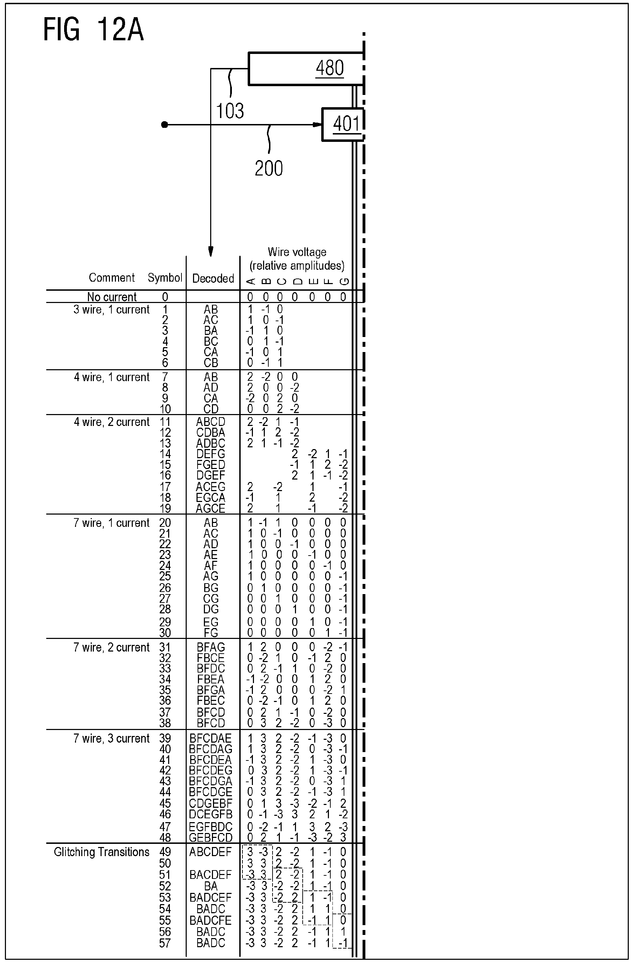

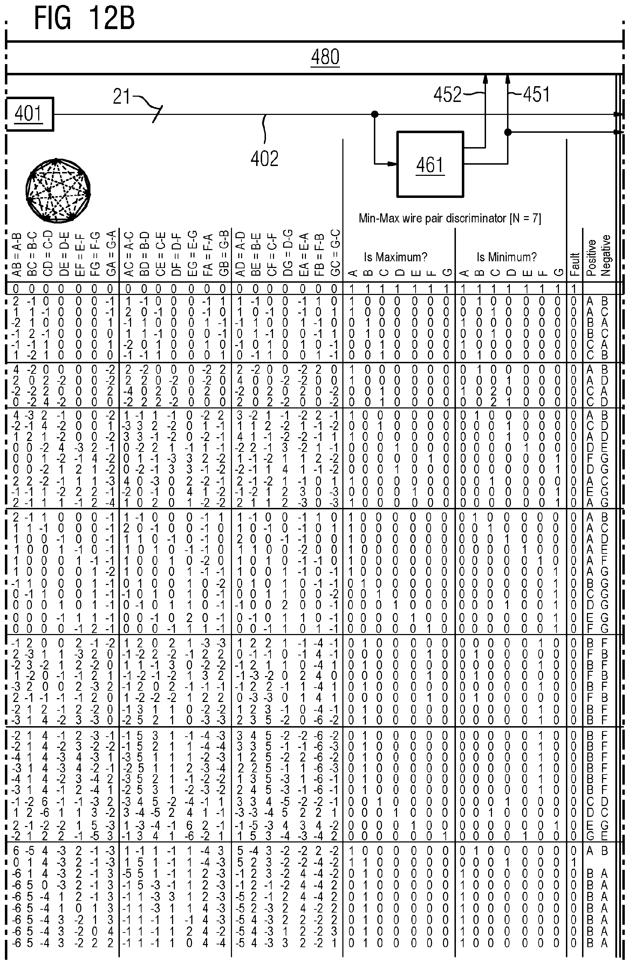

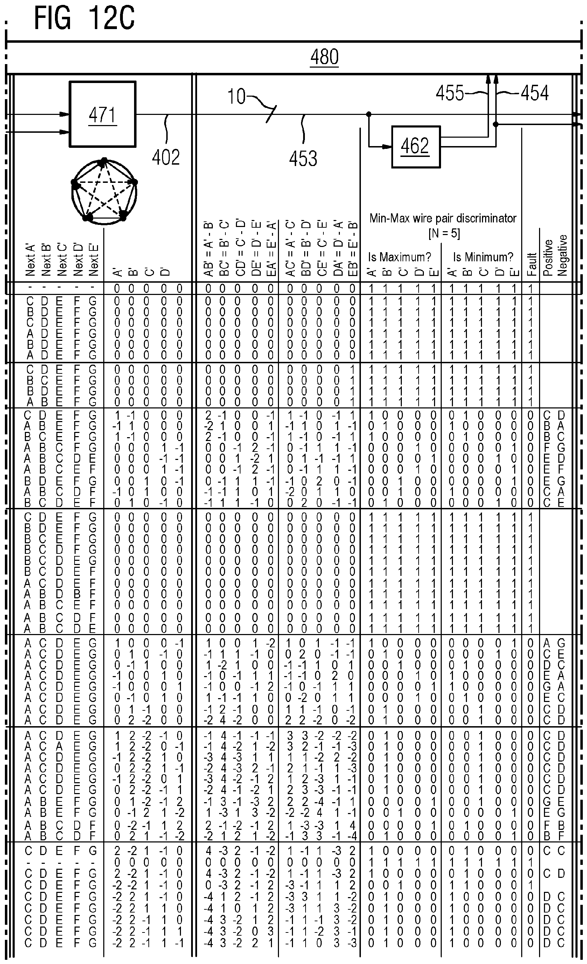

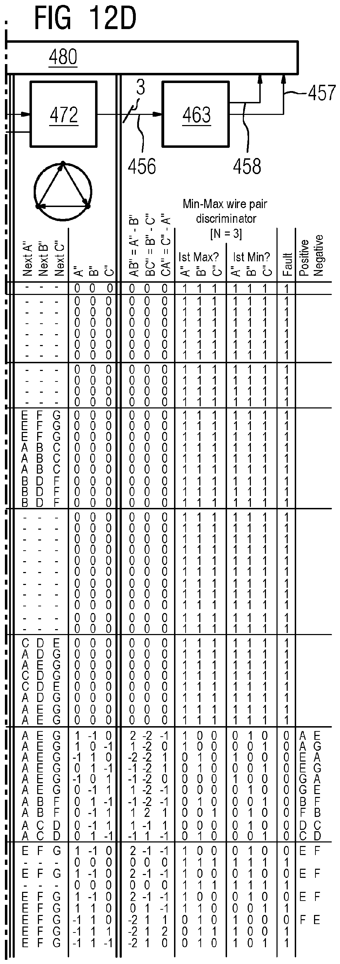

Gemäß FIG 12 ist eine Dekodiertabelle für unterschiedliche Mehrleiter-Systeme 200 dargestellt, welches sich auf die Figuren 12A, 12B, 12C und 12D erstreckt. Beim Erstellen eines interaktiven Ausführungsbeispiels für eine Dekodierung für eine unterschiedliche Ausgestaltung der Mehrleiter-System entstand eine Tabelle, bei welcher es nicht möglich oder deutlich genug ist, die die Erfindung darstellende Zeichnung auf einem einzigen Blatt abzubilden. Gezeigt ist unter anderem die Verkettung von einzelnen Verfahrensschritten. In diesem Fall ist die Zeichnung auf vier Blätter (12A,12B,12C,12D) aufgeteilt worden. Die vollständige Figur bzw. Zeichnung kann durch Nebeneinanderlegen der vier Zeichnungsblätter zusammengesetzt werden.

Ganz links ist angegeben, wie viele Leiter das System aufweist und wie viele Ströme eingeprägt werden. Z.B. drei Leiter, ein Strom oder vier Leiter, ein Strom oder vier Leiter, zwei Ströme oder sieben Leiter, ein Strom oder sieben Leiter, zwei Ströme oder sieben Leiter, drei Ströme. Die entsprechend zu dekodierenden Symbole sind auch in einer Spalte festgehalten. Über der Tabelle mit den Kodier- und Dekodier Anweisungen ist im Prinzip das Blockdiagramm gemäß FIG 9 aufgezeigt und in die Länge gezogen, um zu symbolisieren, wo welcher Schritt durchgeführt wird.

Parameter, Variationen und Leistungsfähigkeit

Ein wesentlicher Parameter der Erfindung ist N die Anzahl der Leiter im Mehr-Leitersystem 200, sowie L eine Anzahl der gleichzeitig ein prägbaren Stromschleifen. Siehe zum Beispiel Spalte ganz links "4 wire, 2 current", also N = 4 und L =2. Dementsprechend werden vier Leiter und zwei Stromschleifen genutzt. Alle beigelieferten Abbildungen berücksichtigen diese Parameter, indem entsprechende Anpassungen angedeutet werden, bzw. ein Implementierungsbeispiel mit konkreten Parametern dargestellt wird.

Aus den Freiheitsgraden bei der Wahl der Leitungen kann der Symbolvorrat abgeschätzt werden. So stehen in einem Mehreiter-System 200 mit N Leitern für die Einprägung der ersten Stromschleife 121 insgesamt N*(N-1) verschiedene Möglichkeiten zur Verfügung, welche durch den Stromschleifen-Steuervektor 111 vom Symbolkodierer 110 aus dem Sendesymbolstrom 102 extrahiert wird. Der Fluss einer zweiten Stromschleife 122 kann nun nach gleichem Schema in einen reduzierten Satz von N-2 Leitern gewählt werden, sodass sich für den zweiten Stromschleifen-Steuervektor 112 ein Möglichkeitenraum von (N-2)*(N-3) eröffnet. Auch dieser Stromschleifen-Steuervektor 112 wird vom Symbolkodierer 110 aus dem Sendesymbolstrom 102 extrahiert. Dieses Verfahren kann nun für weitere Stromschleifen fortgesetzt werden, solange der verbleibende Leitervorrat ausreichend groß ist.

Insgesamt ergibt sich nach dieser Vorschrift ein Möglichkeitenraum von insgesamt N! / (N - 2L)! Symbolen, wie die L Stromschleifen auf die N Leitungen eingeprägt werden können. Dies ist möglich, da die vollständige Information, welcher Strom über welches Paar von Hin- und Rück-leitern fließt, im Empfangsvektor 402 enthalten ist, wenn beispielsweise die Stromschleifen 121, 122, ..., 12X mit streng monoton fallenden Stromstärken realisiert werden.

In einer bevorzugten Realisierung stellt der Symbolkodierer 110 zudem zu jeder Zeit sicher, dass jede elektrische Leitung 20X im Mehrleiter-System 200 von maximal nur einem Steuerblock 300 ausgewählt wird, wodurch Überlagerungen der Stromschleifen 121, 122, ..., 12X ausgeschlossen werden. Dadurch wird die Vielfalt der möglichen Spannungspegel im Mehreiter-System 200 auf maximal 2*L+1 verschiedene Amplituden begrenzt, was sich positiv auf die Störfestigkeit im Betrieb auswirkt.

Die Kodierung sowie Dekodierung beginnt per Konvention mit der Stromschleife 121, die den größten Strom trägt, und wird streng in absteigender Reihenfolge der Stromamplitude fortgesetzt 122, ..., 12X. In der bevorzugten Realisierung sind die Stromquellenmodule 120 entsprechend so einzustellen, dass dies gewährleistet ist. So ist die korrekte Zuordnung der detektierten Strompfade auch mit mehreren Stromschleifen allein anhand der Pegeldifferenzen im Mehrleiter-System 200 möglich, was die Informationsdichte weiter erhöht. Eine Dekodierung ist unter Inkaufnahme eines reduziertem Symbolvorrats auch mit gleichstarken oder sich überlagernden Stromschleifen möglich.

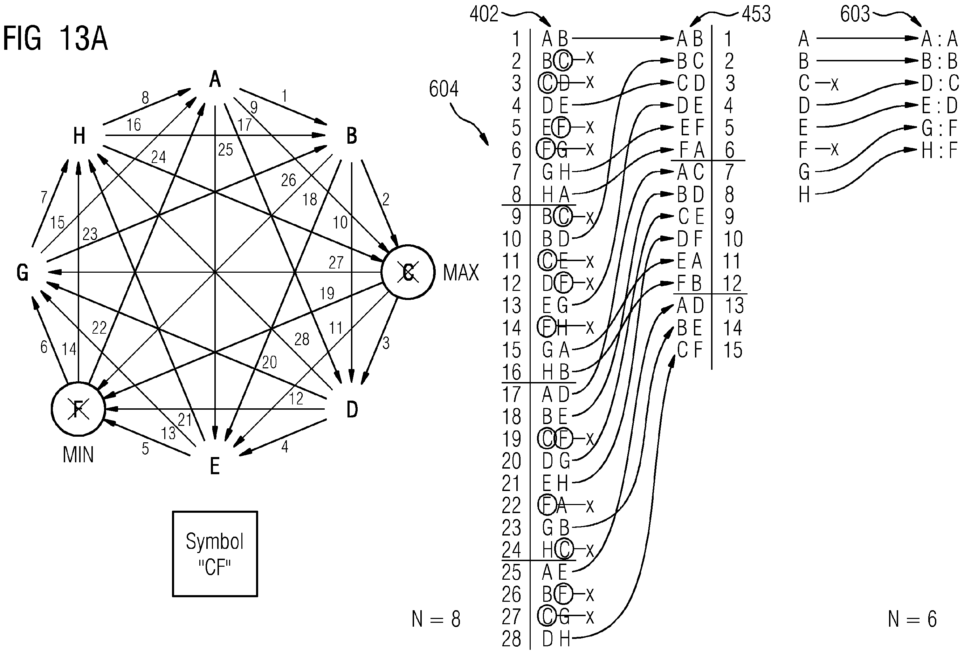

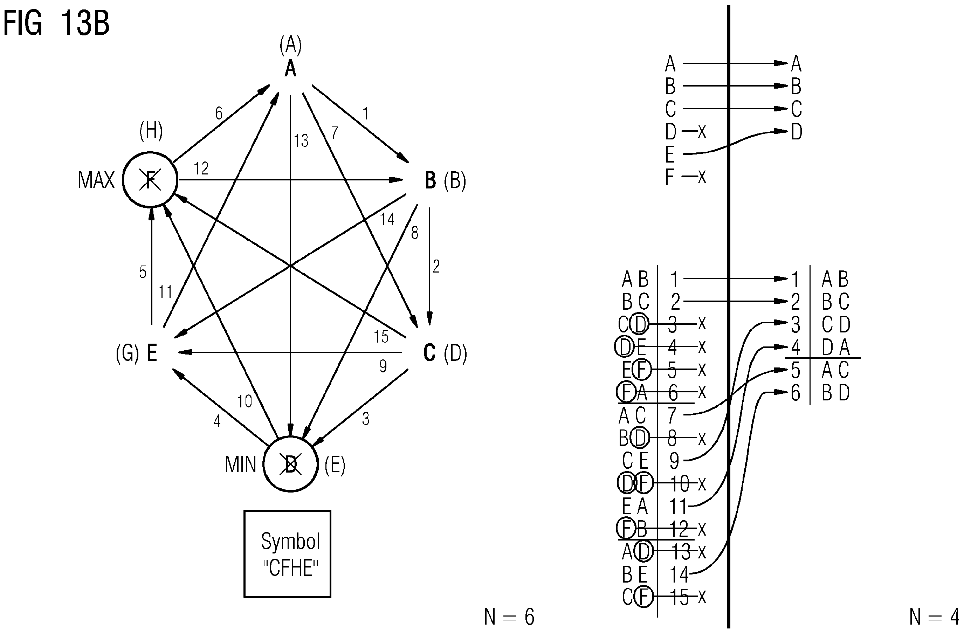

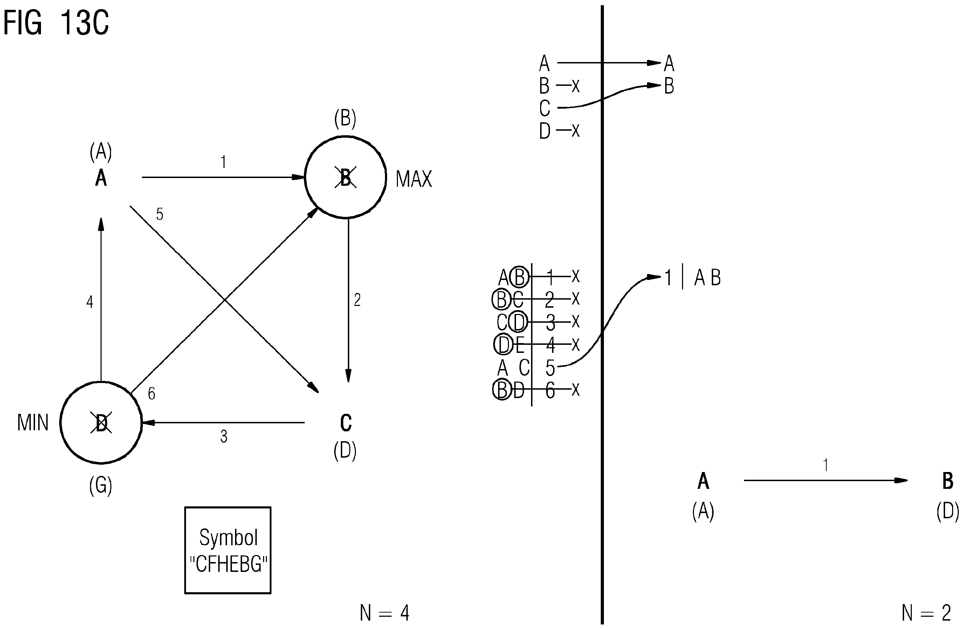

Mit der FIG 13 wird eine Reduktion eines Empfangsvektors von einem Achtleiter-System n = 8 bis hin zu einem Zweileiter-System n = 2 aufgezeigt, hierzu sollten die FIG 13A, 13B und 13C nebeneinander betrachtet werden. Gemäß FIG 13A wird von einem Achtleiter-System N = 8 mit dem Graphen A, B, C, D, E, F, G, H ausgegangen. In dem Graphen bzw. in dem Mehrleiter-System 200 werden das Minimum und das Maximum des Spannungspegels mit einem Diskriminator aufgezeigt. Es sei angenommen, dass das Symbol "CF" übertragen wurde. So wird für C ein Maximum identifiziert und für F ein Minimum identifiziert. Nach der Reduktion von N = 8 auf N = 6, entfallen die erkannten Knoten C, F.

Eine weitere Reduktion wird mittels FIG 13B aufgezeigt, in dem jetzt vorliegenden Sechsleiter-System N = 6 ergibt sich ein Graph A, B, C, D, E, F, an dem man dann wiederum die maximalem und minimalen Spannungspegel MIN, MAX erkennen kann. Jetzt wird bei der beispielhaften Symbolübertragung festgestellt, dass der Knoten F (vormals H) nun ein Maximum MAX ergibt und der Knoten D (vormals E) nun ein Minimum MIN ergibt. Daraus entsteht das Symbol "CFHE". Bei dem Übergang von dem Sechsleiter-System N = 6 mit sechs Leitern auf das Viereiter-System N = 4 bzw. die entsprechende verfahrensgemäße Reduktion fallen nun die Knoten D und F weg. Nun ist der Empfangsvektor auf das Äquivalent eines Vierleiter-Systems reduziert worden und es liegt der Graph A, B, C, D vor, siehe hierzu die FIG 13C. Auch hier wird wiederum mit einer Minimum- und Maximum-Erkennung ein weiteres Symbol dekodiert, es ergibt sich jetzt als vollständiges Empfangssymbol "CFHEBG". Letztendlich wird das Vierleiter-System N = 4 auf ein Zweileiter-System N = 2 reduziert.

Zusammenfassend kann gesagt werden, Ausgangspunkt ist ein Leitersystem mit acht Leitungen, welches exemplarisch für drei Reduktionen mit zufällig gewählten Max-Min-Paaren pro Stufe reduziert wird. Ein Mapping der Leitungen, also das Aufeinander-abbilden von Knoten (Leitungen) aus dem jeweils größeren Leitersystem auf Knoten (Leitungen) des jeweils reduzierten Leitersystems, ist jeweils als Zuordnung rechts neben dem Graphen dargestellt. Gemäß FIG 13A stellt eine Leitungs-Mapping-Abbildung 603 die Zuordnung der Leitungen von N = 8 Leitungen zu N = 6 Leitungen dar. Eine Reduktions-Mapping-Abbildung 604 stellt die Zuordnung der Bits bzw. Stellen des Empfangsvektors 402 auf die Bits bzw. Stellen des reduzierten Empfangsvektors 453 dar.

In jeder Stufe sind im vollständigen Graphen jeweils zwei Leitungen als MIN und MAX markiert, wobei die durchnummerierten Kanten (1 bis 28) den Bitnummern auf der rechten Seite der Reduktions-Mapping-Abbildung 604 entsprechen. Diese zwei Leitungen als MIN und MAX, sind die exemplarisch erkannten Dekodier-Ergebnisse der jeweiligen Stufen, welche es nun gilt, aus dem Empfangsvektor 402 zu reduzieren. Im Kasten ("Symbol") steht jeweils die Bezeichnung des erkannten Symbols, welches in jeder Stufe um das neu erkannte Leiterpaar verlängert wird FIG 13A bei N = 8: "CF", FIG 13B bei N = 6: "CFHE" FIG 13B bei N = 4: "CFHEBG".

Ziel der Reduktion ist es, dass eine nächste Dekoderstufe im Symbolencoder 480 erneut einen vollständigen Graphen der Größe (N-2) unter Beibehaltung der Leiterreihenfolge entsprechend der Leitungs-Mapping-Abbildung 603 vorfindet, sodass das ganze Prozedere von nun an iterativ, für immer kleinere "virtuelle" Leitersysteme, erfolgen kann. Jeder der N Leiter entspricht dabei einem Knoten im vollständigen N-Graphen und jedes Bit im Empfangsvektor 402 einer gerichteten Kante zwischen zwei Knoten. Mit jeder Stufe wird der Graph um die zwei Knoten reduziert, die mit den erkannten Leitern des detektierten Leiterpaars in dieser Stufe gleich zusetzen sind Die Leiter bzw. Knoten werden mit der Minimum- und Maximum-Ermittlung erkannt. Entsprechend werden alle Kanten (Bits), die von oder zu diesen Knoten (Leiter) verlaufen, eliminiert. In den FIG 13A, B, C sind die betroffenen Leiter bzw. Knoten umkreist und mit einem X durchgekreuzt, um die Eliminierung bzw. Reduktion zu verdeutlichen.

Die verbleibenden Bits bzw. Stellen kommen so auch im neuen Graphen vor und werden entsprechend der dargestellten Leitungs-Mapping-Abbildung 603 den entsprechenden Bits bzw. Stellen des neuen reduzierten Empfangsvektors 453 zugeordnet, sodass dieser die originale Beziehung des Ausgangsgraphen korrekt abbildet. Zu beachten ist dabei, dass ggf. Invertierungen auftreten, wenn die Leiterreihenfolge vertauscht (Kantenrichtung umgekehrt) wird. Dies tritt z. B. beim Übergang vom Empfangsvektor 402 eines acht-Leitersystems N = 8, Bit 23 ("GB") zum reduzierten Empfangsvektor 453 eines sechs-Leitersystems N = 6, Bit 14 ("BE") auf, da das dazugehörige Mapping die Abbildung G -> E und B -> B, also "GB" -> "EB" vorsieht, aber der reduzierte Graph die umgekehrte Kantenrichtung "BE" vorsieht.

Aus dieser Vorschrift lässt sich mittels dem Fachmann bekannten Entwurfsmethoden eine digitale Schaltung ableiten, die die entsprechenden Zuordnungen, z. B. durch den Einsatz von Multiplexer- und Invertiergattern, vornimmt.

Mit der FIG 14 wird eine mögliche Realisierung eines Komparators aufgezeigt. Bei einem Vierleiter-System n = 4 mit dem Graph A, B, C, D gibt es sechs unterschiedliche Möglichkeiten, Spannungspegel zu messen. Dementsprechend müssen sechs Komparatoren in einen Schaltkreis integriert werden. Diese sechs Komparatoren werden durch das Komparator-Netzwerk 400 symbolisiert. Die Spannungspegel AB, BC, CA, ... zwischen den elektrischen Leitern 201, 202, 203, 204 beziehungsweise zwischen den Knoten werden mit dem Komparator-Netzwerk 400 erfasst, die erfassten Spannungspegel AB, BC, CA, ... werden einem Empfangsvektor 402 als Elemente zugeordnet. Der Empfangsvektor 402 kann dadurch gebildet werden, dass nach einer Konvention die einzelnen Leiter nacheinander abgetastet werden, dabei werden die relativen Verhältnisse der Spannungspegel im Leitersystem in dem Empfangsvektor 402 ebenfalls nacheinander erfasst. Eine Konvention könnte beispielsweise in Anlehnung an die Graphentheorie folgende sein:
Die einzelnen Leiter stellen Knoten dar, welche auf einer Kreislinie angeordnet sind. Bei einem Vier-Leitersystem hätte man dann einen Knoten A, einen Knoten B, einen Knoten C und einen Knoten D. Im Uhrzeigersinn können ausgehend von Knoten A Kanten zwischen den Knoten eingezeichnet werden. Ist man wieder am Ausgangs-Knoten angelangt, können noch die Diagonalen oder Querverbindungen als Kanten eingezeichnet werden. Dementsprechend erhält man als Kanten die Spannungspegel zwischen den Knoten bzw. den Leitern AB, BC, CD, DA, AC und BD. Ein möglicher Empfangsvektor könnte so aussehen:

$$\text{Empfangsvektor} = (+1\ \text{Volt},\ +2\ \text{Volt},\ -1\ \text{Volt},\ +1\ \text{Volt},\ +1\ \text{Volt},\ +1\ \text{Volt}).$$

Mittels einfacher Und-Verknüpfung werden auf dem Empfangsvektor eine Maximum-Ermittlung und eine Minimum-Ermittlung angewendet. Diese Maximum-Ermittlung und die Minimum-Ermittlung, kann durch einfache Und-Glieder erfolgen. Falls ein Maximum nicht einwandfrei ermittelt werden kann, wird ein erstes Fehlersignal 452 generiert. Andernfalls wird die Ausgabe durchgeführt, und wenn eines der Und-Glieder ein Signal ausgibt, ist bekannt, welche Leitung das Maximum ergeben hat. Analog dazu wird das Minimum bestimmt.

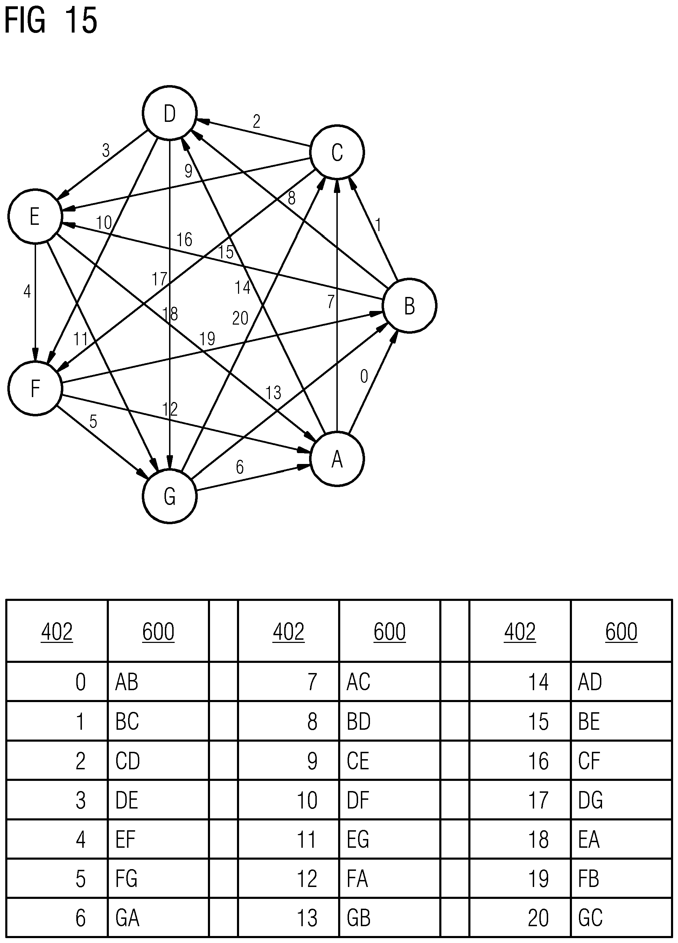

Ähnlich wie mit FIG 13 eine Reduktion gezeigt wurde, wird mit den Figuren 15 bis 20 eine Reduktion für ein Sieben-Leitersystem ausgehend mit den Graphen A, B, C, D, E, F, G gezeigt. Bei einem Sieben-Leitersystem N = 7 gibt es einen Graphen mit einundzwanzig Kanten. Das bedeutet, es gibt einundzwanzig Spannungspegel auszuwerten. Mit Hilfe der Min-Max-Auswertung wird in dem Empfangsvektor 402 immer ein Minimum und ein Maximum detektierbar sein.

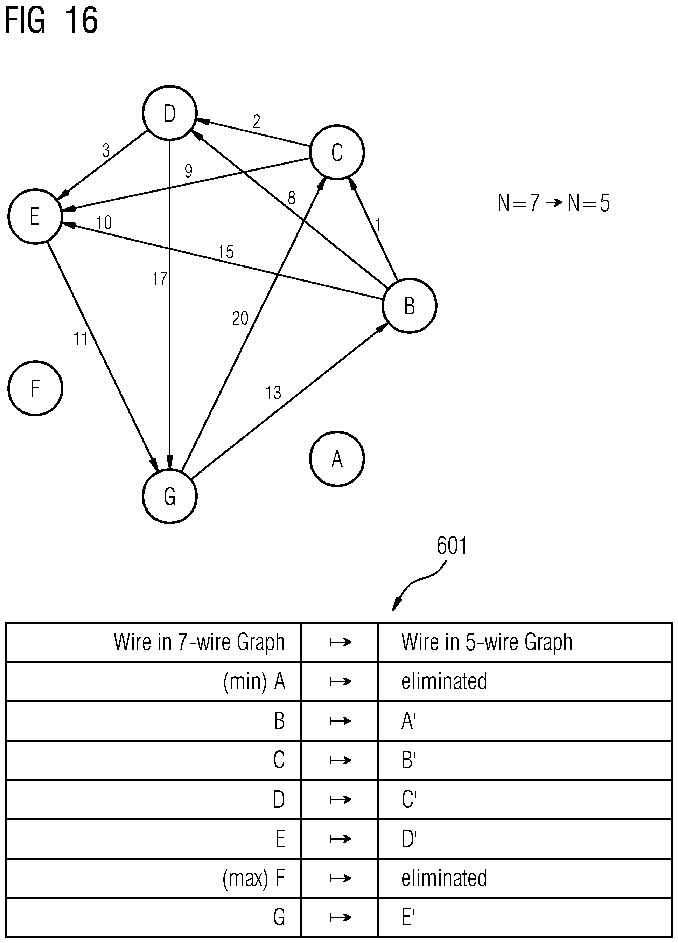

Der mit FIG 15 gezeigte Graph hat dementsprechend einundzwanzig (0 bis 20) Verbindungen 600, diese Verbindungen 600 werden in dem Graph als Kanten gezeigt bzw. als Spannungspegel interpretiert. Nach der ersten Reduktion wird mit FIG 16 der Übergang von einem Sieben-Leitersystem N = 7 zu einem Fünf-Leitersystem N =5 aufgezeigt. Über eine Zuordnungstabelle 601, in der ein Mapping der Knoten von dem vormals größeren Graphen zu dem jetzt reduzierten kleineren Graphen durchgeführt wird, kann man sehen, welche Knoten aus dem großen Graphen nun in dem reduzierten Graphen eliminiert wurden.

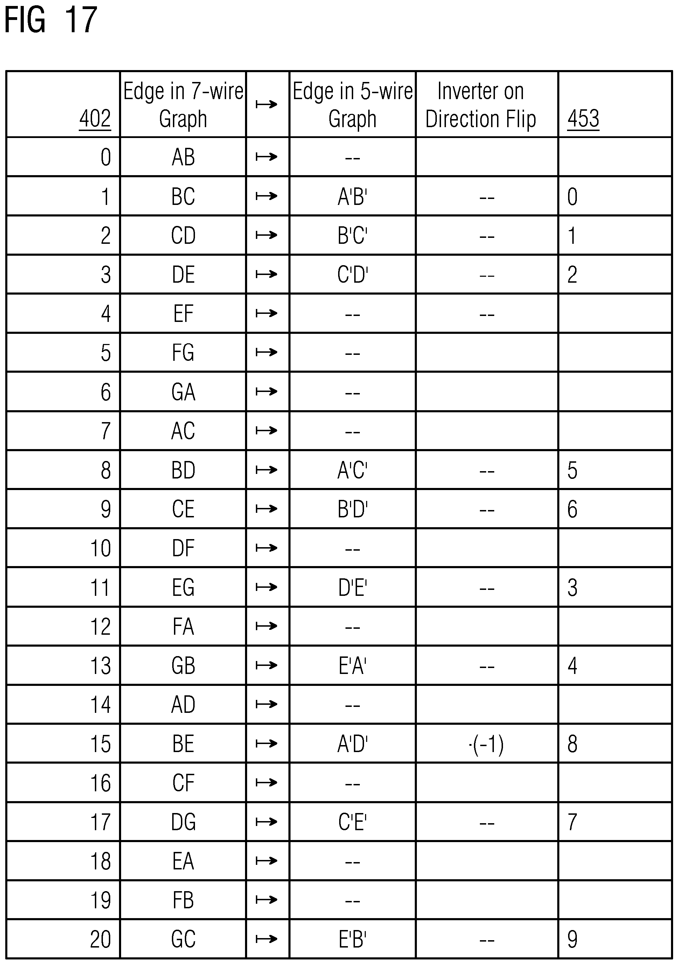

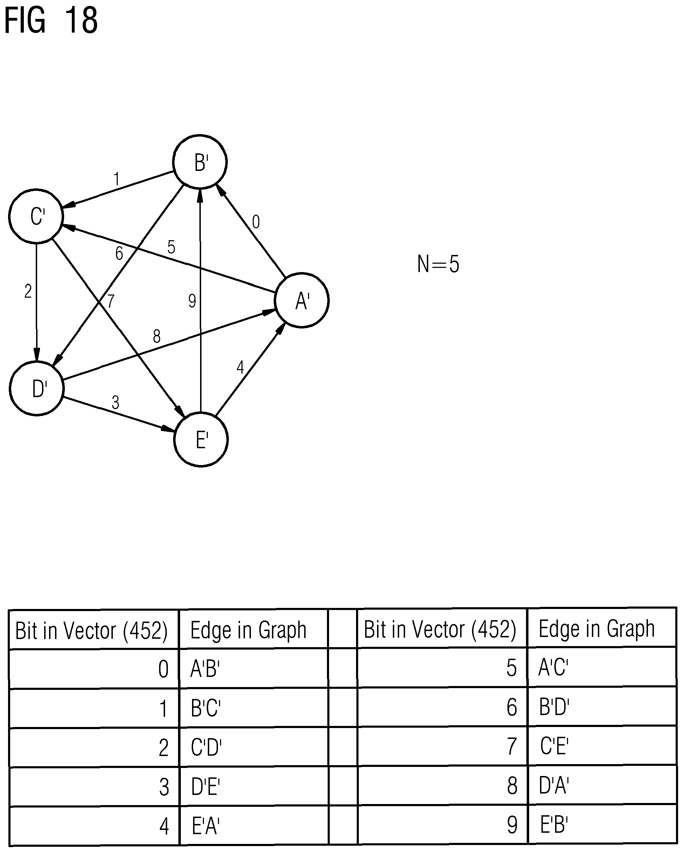

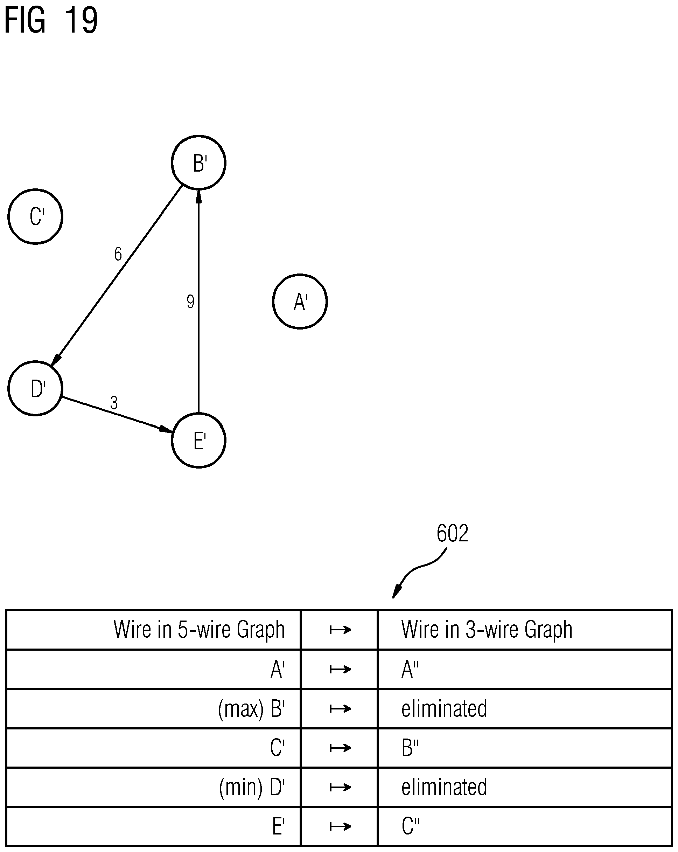

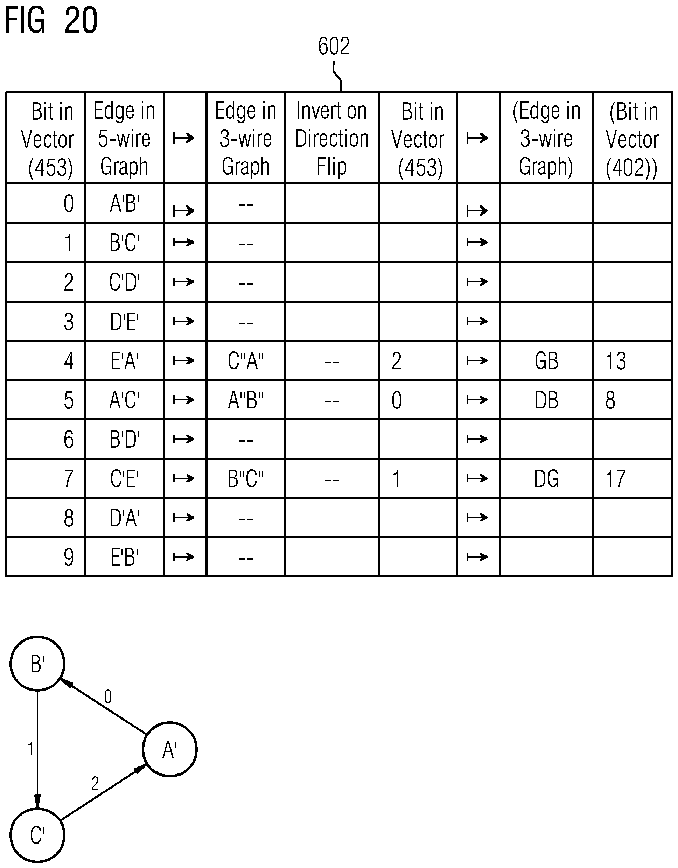

Weiterhin wird gemäß FIG 17 eine Reduzierung des Empfangsvektors 402 von den Sieben-Leitersystem N = 7 auf das Fünf-Leitersystem N = 5 veranschaulicht. Aus dem Empfangsvektor 402 wird der reduzierte Empfangsvektor 453 abgeleitet. Es ist eine Reduktion von 21 Bits auf 10 Bits erfolgt. Die Spalten der Tabelle gemäß FIG 17 zeigen das. Eine Kante BC im Sieben-Leitersystem wird zur Kante A'B' im Fünf-Leitersystem. Mit der Reduktion ist in FIG 18 ein Fünf-Leitersystem N = 5 entstanden; auch hier muss wieder eine Minimum-Maximum-Ermittlung durchgeführt werden. Dies ist in FIG 19 veranschaulicht auch hier wird wieder eine Zuordnungstabelle 602 (siehe FIG 20) für ein Mapping von einem Fünf-Leitersystem N = 5 auf ein Drei-Leitersystem n = 3 aufgezeigt.

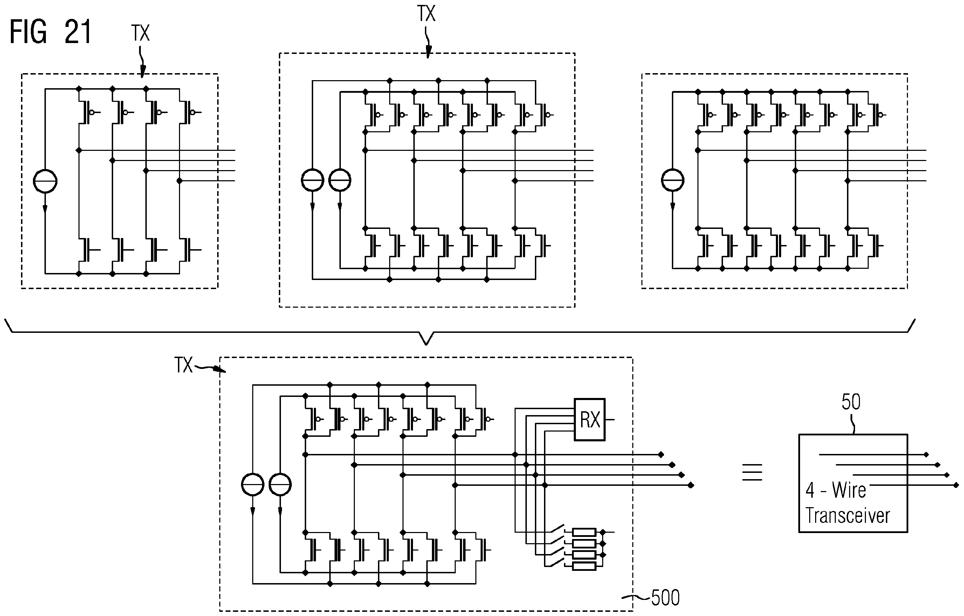

Mit der FIG 21 wird veranschaulicht, wie man eine Sendeeinheit TX, eine Empfangseinheit RX und eine Terminierungseinheit 500 in einen Transceiver-Schaltkreis vereinen kann. Diese Vereinigung erlaubt die Realisierung als einen einfach skalierbaren IP-Block zur Anwendung in einem Halbleiterbaustein 50. Als IP-Block - vom englischen Intellectual Property Core oder auch IP-Core. wird in der Mikroelektronik ein vielfach einsetzbarer vorgefertigter Funktionsblock eines Chip-Designs (im Sinne von Bauplänen oder Schaltungsentwürfen) bezeichnet. Dieses Chip-Design realisiert demzufolge die erfindungsgemäßen Verfahrensschritte. Es wird zwischen Soft-IP und Hard-IP-Core unterschieden: Ein Soft-IP-Core existiert in Form von Quell-Code in einer speziellen Hardware-Beschreibungssprache wie Verilog oder VHTL Er kann auch als bereits vom Hersteller synthetisierte Netzliste, als textuelle Beschreibung eines Schaltplans, vorliegen. Man spricht in diesem Fall vom Firm-IP-Cores. Ein Hard-IP-Core ist ein Block mit bereits fertiggestelltem Layout. Somit kann der Nutzer kaum oder keine Änderungen an der IP vornehmen und ist an einen Prozess gebunden. Zum Schutz von Verfahrensgeheimnissen enthält ein Nutzer häufig nur eine Black-Box-Darstellung eines gekauften Hard-IP-Cores. Vorzugsweise wird der IP-Block in Complementary Metal Oxid Semiconductor Technik realisiert. Die Abkürzung CMOS ist eine Bezeichnung für Halbleiterbauelemente, bei denen sowohl P-Kanal als auch N-Kanal MOSFET's auf einen gemeinsamen Substrat verwendet werden.

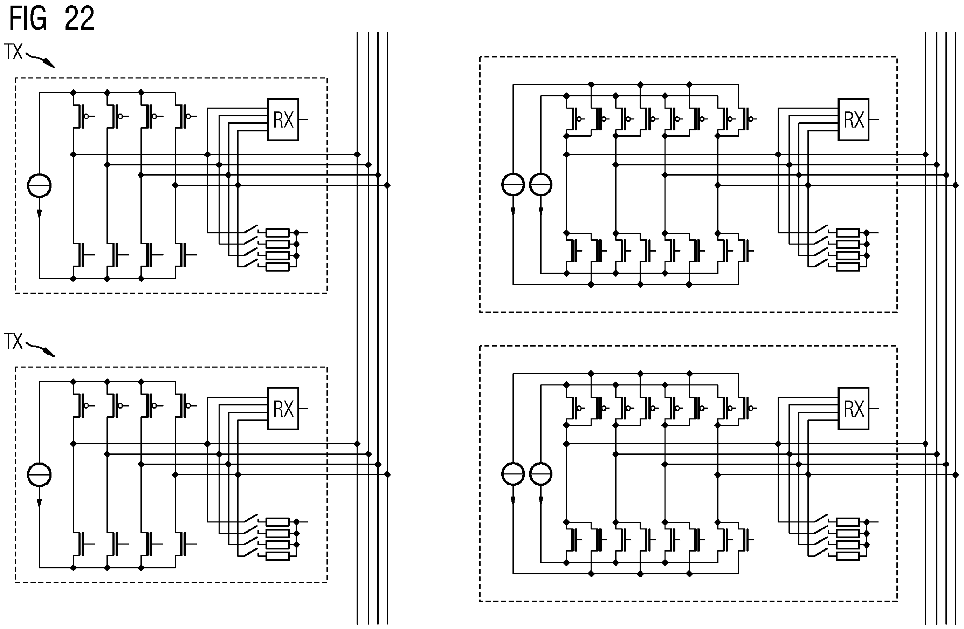

Gemäß FIG 22 ist eine andere Ausführungsart der Transceivereinheit bzw. eines Transceiverschaltkreises und einem Halbleiterbaustein 50 offenbart. Es kann für ein Vier-Leitersystem N = 4 mit einer Stromquelle gearbeitet werden oder auch für ein Vier-Leitersystem N = 4 mit zwei Stromquellen, um unterschiedliche Stromschleifen einzuprägen.

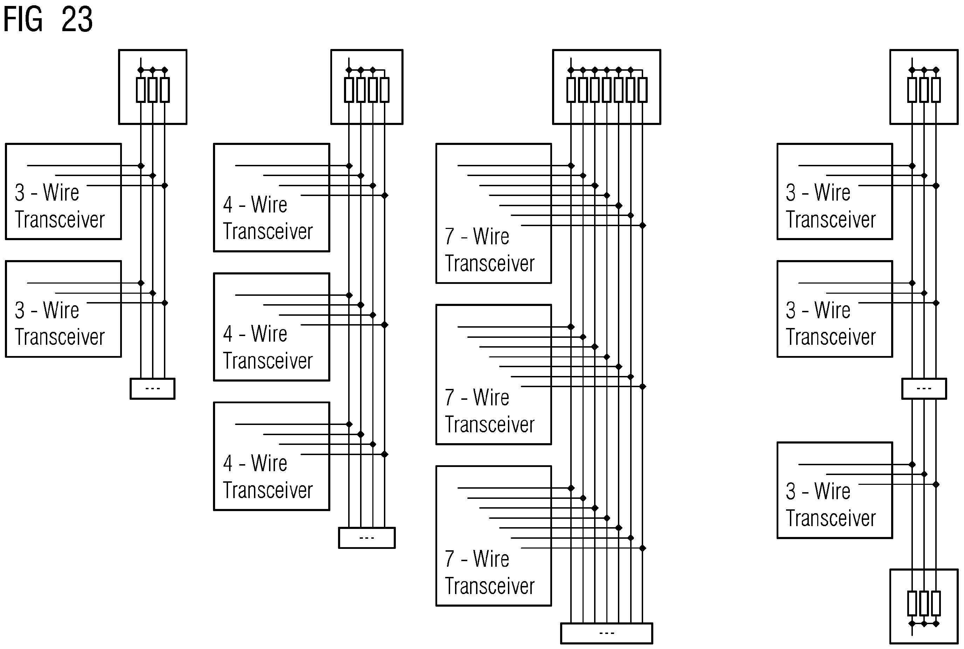

FIG 23 zeigt mögliche Bustopologien auf. Allen Bustopologien ist gemeinsam, dass mindestens zwei Teilnehmer an einem Leitersystem, insbesondere einem Mehrleiter-System 200 (Bus), angeschlossen sind. Für die verfahrensgemäße und erfindungsgemäße Datenübertragung wird mindestens ein Dreileiter-System benötigt. Es muss mindestens ein Teilnehmer angeschlossen sein, der als Sender funktioniert, und ein Widerstandsnetzwerk als Empfänger. Das bedeutet, in dem Bussystem muss mindestens ein Terminierungswiderstand im Leitersystem (Bus) z.B. als Mittenterminierung (oder auch als Theveninäquivalent) bezeichnet vorhanden sein.

Gemäß FIG 23 ist von links nach rechts ein Dreileiter-System, ein Vierleiter-System, ein Siebenleiter-System und schließlich ein Dreileiter-System mit externer Terminierungseinheit dargestellt.

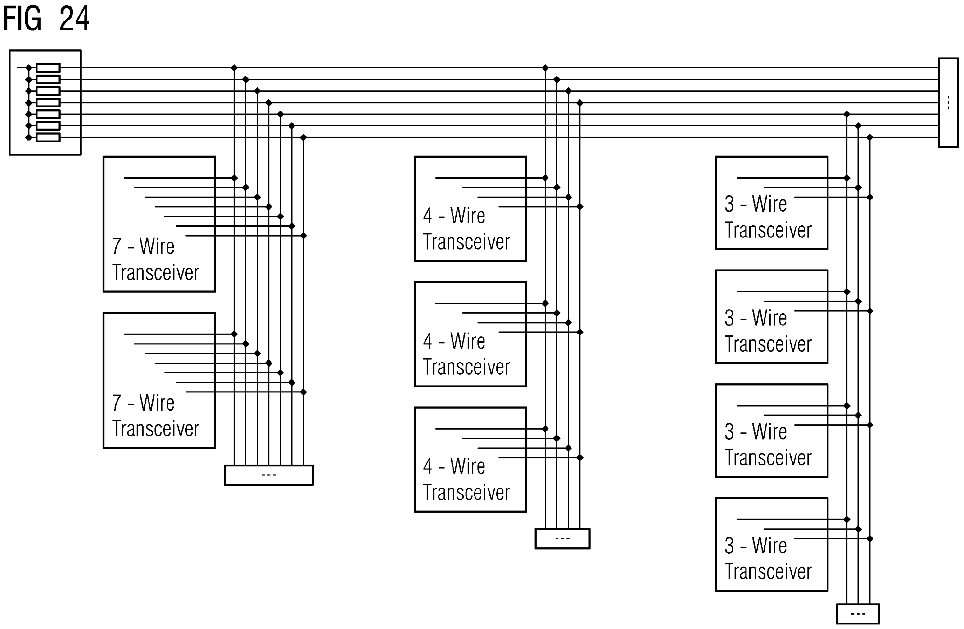

Die FIG 24 zeigt einen Parallelbetrieb von unterschiedlichen Leitersystemen. Es wird hiermit verdeutlicht, dass durchaus an einem Mehrleiter-System mit N = 7 Leitern ein Siebenleiter-System, ein Vierleiter-System, aber auch ein Dreileiter-System jeweils mit entsprechenden Transceivern angeschlossen sein kann. Es wird also ein Betrieb von Teilnehmern unterschiedlicher Leiteranzahl an einem gemeinsamen Leitersystem (Bus) erlaubt. Als Vorteil wird eine Unterteilung eines gemeinsamen großen Leitersystems (Bus) in mehrere kleine Unterbusse angesehen. Die Teilnehmer an unabhängigen Unterbussen können gleichzeitig konfliktfrei senden. Ein Hauptbusteilnehmer kann an allen Übertragungswegen teilnehmen, auch an den Übertragungswegen der Unterbusse.

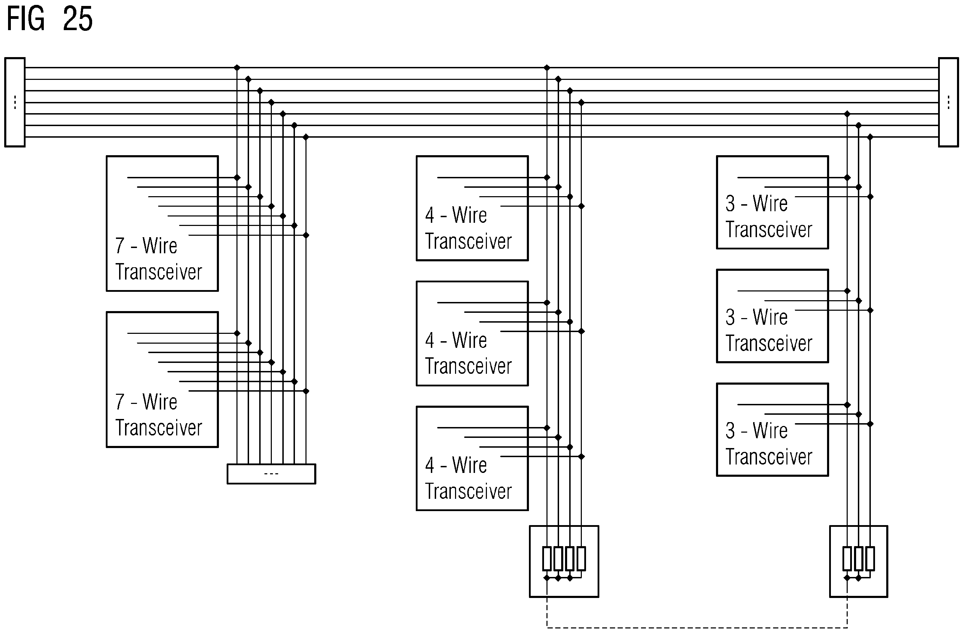

Mit der FIG 25 wird eine Terminierung in einem Parallelbetrieb vorgeschlagen. Beispielsweise kann die Terminierung auf die Unterbusse aufgeteilt werden. Eine zum Betrieb der Teilnehmer am Hauptbus ausreichende Terminierung kann alternativ zu einer separaten Terminierung des Hauptbusses auch erreicht werden, in dem die Mittenpunkte der Unterbusterminierung verbunden werden (siehe gestrichelte Linie).

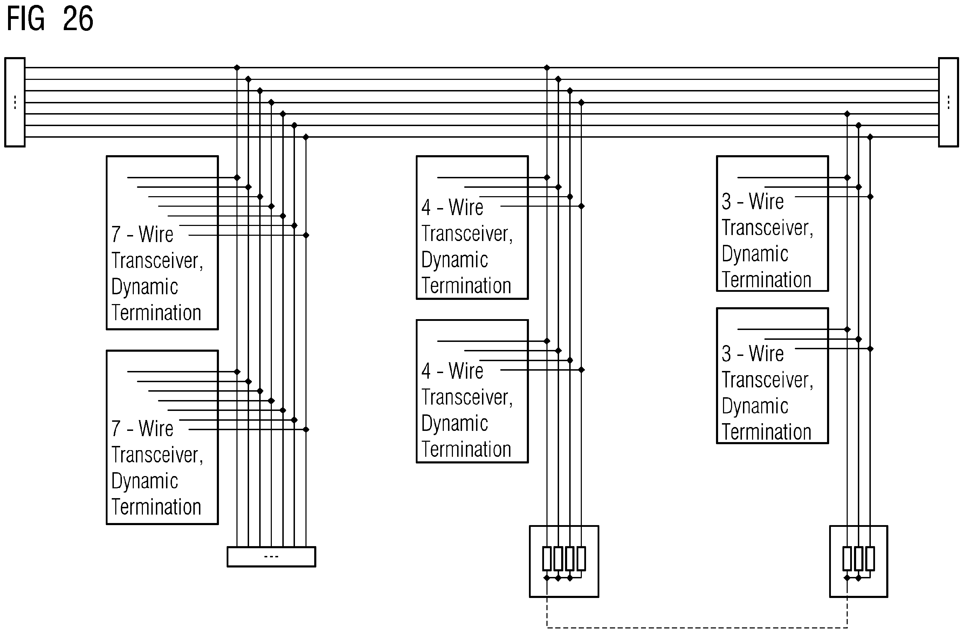

Mit der FIG 26 wird eine dynamische Terminierung veranschaulicht. Die Terminierung mittels der Busabschlusswiderstände kann auch in die Teilnehmer integriert und bei Bedarf aktiviert werden.

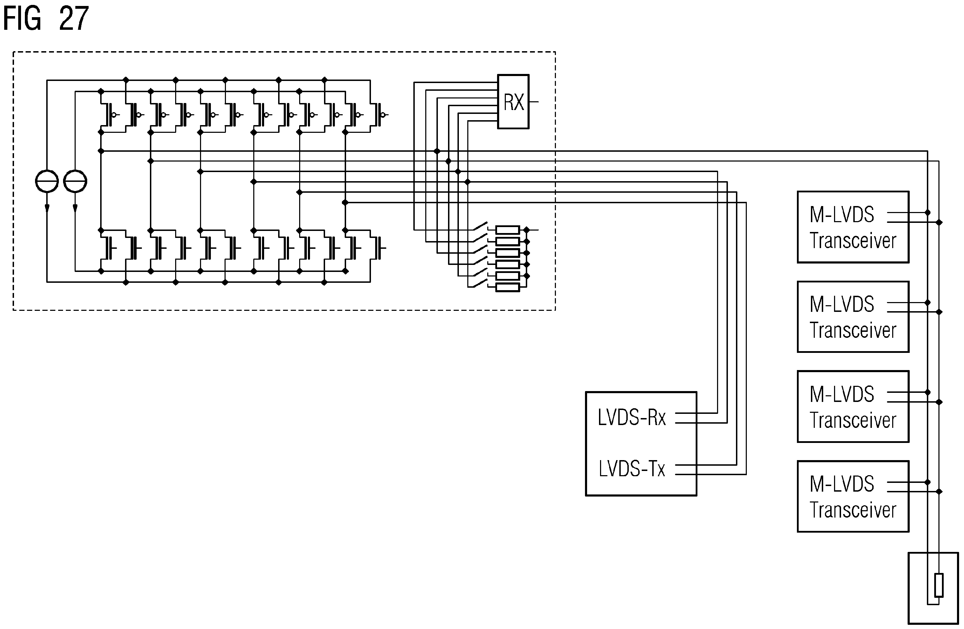

Ein Mischbetrieb von bereits bekannten LVDS (Low Voltage Differential System) und den erfindungsgemäßen neuen MLVDS (Multi Wire Low Voltage Differential System) ist mit FIG 27 dargestellt. Eine Anbindung der neuartigen Halbleiterbausteine an bestehende LVDS-Verbindungen ist möglich. Ein Transceiver kann als LVDS-RX Empfänger an jeden beliebigen Leiterpaar betrieben werden. Für jede Stromschleife im Transceiver kann eine LVDS-TX Sendeeinheit angeschlossen werden.

Die vorliegende Erfindung ermöglicht es, mit einfachen und CMOS-chipintegrierbaren Baugruppen ein busfähiges Mehrleiter-System zur Informationsübertragung aufzubauen, welches ähnliche Signalintegritätseigenschaften und Übertragungsraten wie z. B. LVDS erzielt, gleichzeitig aber auch eine deutlich effizientere Informationskodierung bei unterproportional steigendem Stromverbrauch aufweist.

Hierfür sind folgende Eigenschaften maßgeblich:

- Zu jedem Zeitpunkt werden nur wenige, verschieden starke Stromschleifen in das Leitersystem eingeprägt.
- Dadurch, dass die Stromschleifen anhand ihrer relativen Stromstärkenverhältnisse zueinander eindeutig senderseitig gebildet und empfängerseitig erkannt werden können, erfolgt die Informationskodierung durch die Wahl der Einzelleiter für den jeweiligen Hin- und Rückleiter jeder einzelnen Stromschleife.
- Ein Empfänger kann durch einen schnellen iterativen Prozess die einzelnen Stromschleifen identifizieren und deren Flussrichtungen bestimmen. Hierfür sind lediglich einfache rein-binäre Abfragen mittels Komparatoren erforderlich.
- Mit dem Einsatz Impedanz kontrollierter und reflexionsarmer Leitungsführungstechniken, sowie geeigneter Terminierung ist das Übertragungssystem grundsätzlich in der Lage höchste Signalisierungsraten mit verhältnismäßig geringer Komplexität und bei mäßigem Stromverbrauch zu erzielen.

Weitere Gedanken und Vorteile sind im Folgenden aufgelistet:

• Mindestens drei Leiter in einem Mehrleitersystem (Bus) werden zur Datenübertragung genutzt.
• Eine sternförmige Impedanz (Terminierung) erlaubt Stromfluss zwischen allen Leitern.

- Über jeweils zwei beliebige Leiter wird ein Strom symmetrisch in den Bus eingeprägt.
- Durch die Impedanz der Terminierung kann der Strom als Potenzialdifferenz zwischen den Leitern des Busses detektiert werden.
- Information wird in der geordneten Leiterwahl kodiert.
- Binäre Entscheider zwischen allen Leitern erlauben die Dekodierung des Symbols aus den Leiterpotenzialen.
- Bei zwei oder mehr ungenutzten Leitern treten gleiche Leiterpotenziale auf, welche an den entsprechenden Entscheidern zu einer 0 oder 1 führen. Trotzdem bleibt das Symbol eindeutig zuordenbar.
- Ein Vertauschen der Leiterwahl zwischen High- und Low-Side invertiert die Potenziale im Leitersystem und damit auch den Empfangsvektor, welcher die Entscheidungszustände der Komparatoren bildet.
- Es ergeben sich $N \cdot (N - 1)$ mögliche Symbole durch freie Wahl aus $N$ sowie $N - 1$ ungenutzten Leitern.
- Pro verfügbarem Leiterpaar kann eine weitere Stromschleife eingeprägt werden.
- Durch Verwendung unterschiedlich starker Ströme ergeben sich auch definierte Pegel zwischen den Leitern der jeweiligen Ströme.
- Diese erlauben die inkrementelle Kodierung und Dekodierung mehrerer Ströme, jeweils in der Menge der (noch) verfügbaren Leiter.
- Auf diese Weise kann eine erhebliche Informationsmenge in wenigen Leitern mit geringem Energieaufwand kodiert werden.
- Kodierung und Dekodierung erfolgt mittels rein digitaler und einfacher Schaltungen.
- Mehrere Stromschleifen unterschiedlicher Stärke können sowohl durch den Einsatz unterschiedlicher Stromquellen, als auch Dopplung der High- und Low-Side-Transistoren mit einer gemeinsamen Stromquelle erzielt werden. (FIG 21)
- Sendeeinheit (Tx), Empfangseinheit (Rx) und Terminierung können in einem Transceiver-schaltkreis vereint werden.
- Die Terminierung wird hierbei dynamisch nach Bedarf zugeschaltet, um den Bus nicht zu niederimpedant werden zu lassen.
- Dies erlaubt die Realisierung als einfach skalierbarer IP-Block zur Anwendung in integrierten Schaltkreisen.
- Mindestens ein Terminierungs-widerstand im Leitersystem (Bus), z. B. als Mittenterminierung (Thevenin-Äquivalent) FIG 26.
- Betrieb von Teilnehmern unterschiedlicher Leiteranzahl an einem gemeinsamen Leitersystem (Bus) FIG 24.
- Unterteilung eines gemeinsamen großen Leitersystem (Bus) in mehrere kleinere Unterbusse.
- Teilnehmer an unabhängigen Unterbussen können gleichzeitig konfliktfrei senden
- Hauptbus-Teilnehmer können an allen Übertragungswegen teilnehmen (auch Unterbusse).
- Die Terminierung kann auf die Unterbusse aufgeteilt werden.
- Eine zum Betrieb der Teilnehmer am Hauptbus ausreichende Terminierung kann alternativ zu einer separaten Terminierung des Hauptbusses auch erreicht werden, indem die Mittenpunkte der Unterbusterminierungen verbunden werden (siehe gestrichelte Linie) FIG 25, FIG 26.
- Die Terminierung kann auch in die Teilnehmer integriert und bei Bedarf aktiviert werden.


**Patentansprüche**

1. System zur Übertragung von Symbolen (Sym) zwischen einem ersten Teilnehmer (1) und einem zweiten Teilnehmer (2) über ein gemeinsames Mehrleiter-System (200) mit

    einem ersten elektrischen Leiter (201),
    einem zweiten elektrischen Leiter (202) und
    einem dritten elektrischen Leiter (201,202,..,207),
    der erste Teilnehmer (1) umfasst einen Symbolkodierer (110), ein Stromquellenmodul (120) und einen Steuerblock (300), wobei der Steuerblock (300) einen oberen Steuerblock (301) und einen unteren Steuerblock (302) aufweist, der obere Steuerblock (301) ist ausgestaltet obere Schalter (303) zu einem ersten Ausgang des Stromquellenmoduls (120) zu schließen und zu öffnen, der untere Steuerblock (302) ist ausgestaltet, untere Schalter (304) zu einem zweiten Ausgang des Stromquellenmoduls (120) zu öffnen und zu schließen,
    die oberen Schalter (303) weisen zumindest drei obere elektronische Schalter (A1,B1,C1) und die unteren Schalter (304) weisen zumindest drei untere elektronische Schalter (A1,B2,C2) auf, es sind zumindest drei Reihenschaltungen (P1,P2,P3) aus jeweils einem oberen elektronischen Schalter (A1,B1,C1) und einem unteren elektronischen Schalter (A2,B2,C2) angeordnet, an die jeweilige Reihenschaltung (P1,P2,P3) sind zwischen dem oberen elektronischen Schalter (A1,B1,C1) und dem unteren elektronischen Schalter (A2,B2,C2) die elektrischen Leiter (201,202,203) angeschlossen, an die Reihenschaltungen (P1,P2,P3) ist das Stromquellenmodul (120) angeschlossen,
    **dadurch gekennzeichnet, dass**

der Symbolkodierer (110) ausgestaltet ist, einen Stromschleifen-Steuervektor (111) für den Steuerblock (300) bereitzustellen, wobei der Steuerblock (300) ausgestaltet ist,

mittels des Stromschleifen-Steuervektors (111), welcher eine Schaltkombination (SK) für die elektronischen Schalter (A1,B1,C1,A2,B2,C2) aufweist, die elektronischen Schalter (A1,B1,C1,A2,B2,C2) zu schalten und damit einen Stromfluss in die angeschlossenen elektrischen Leiter (201,202,..,207) zu ermöglichen,

der Symbolkodierer (110) ist ausgestaltet, den Stromschleifen-Steuervektor (111) derart zu bestimmen, dass die zu übertragenden Symbole (Sym) durch eine geordnete Wahl von einem Leiterpaar aus einem Vorrat der elektrischen Leiter (201,202,203) aus dem Mehrleiter-System (200) bestimmt und dadurch kodiert sind, wobei ein Leiterpaar dabei einen der elektrischen Leiter (201,202,203) als einen Hin-Leiter (HL) eines Stromes von dem ersten Teilnehmer (1) zu dem zweiten Teilnehmer (2) und einen weiteren der elektrischen Leiter (201,202,203) als einen Rück-Leiter (RL) umfasst, wobei weiterhin eine Terminierungseinheit (500) vorhanden ist, wobei der Symbolkodierer (110) ausgestaltet ist, für die Terminierungseinheit (500) einen Terminierungsvektor (104) bereitzustellen, wobei die Terminierungseinheit (500) ist ausgestaltet ist, mittels Terminierungsschalter (502) ein Terminierungswiderstands-Netzwerk (501) an die elektrischen Leiter (201,202,203) des Mehrleiter-System (200) anzuschalten,

wobei der zweite Teilnehmer (2) ein Komparator-Netzwerk (400) aufweist, wobei das Komparator-Netzwerk (400) ausgestaltet ist, zur Decodierung des Symbols (Sym) jeweils zwischen zwei elektrischen Leitern (201,202,203) einen Spannungspegel (AB,BC,CA) zu detektieren, wobei in den unterschiedlichen Spannungspegeln (AB,BC,CA) zwischen den elektrischen Leiter (201,202,203) das kodierte Symbol (Sym) enthalten ist.

2. System nach Anspruch 1, wobei der Symbolkodierer (110) ausgestaltet ist mehrere Stromschleifen-Steuervektoren (111,112,113,..,11x) bereitzustellen,
wobei der Steuerblock (300) ausgestaltet ist, das gemeinsame Mehrleiter-System (200) mit mehreren Stromschleifen (121,122,..,127) zu betrieben.

3. System nach Anspruch 2, wobei der Steuerblock (300) und/oder das Stromquellen-modul (120) ausgestaltet ist, in die einzelnen Stromschleifen (121,122,..,127) ) jeweils unterschiedliche Signalströme (I1,I2,..,Ix) einzuprägen.

4. System nach einem der Ansprüche 1 bis 3, wobei das Komparator-Netzwerk (400) ausgestaltet ist, die erfassten Spannungspegel (AB,BC,CA) einem Empfangsvektor (402) als Elemente zuzuordnen.

5. System nach einem der Ansprüche 4, aufweisend einen Symboldecoder (450), welcher ausgestaltet ist, den Empfangsvektor (402) entgegenzunehmen und auf eine Reihenfolge der Elemente des Empfangsvektors (402) eine Maximum-Ermittlung und eine Minimum-Ermittlung durchzuführen, weiterhin ausgestaltet, jeweils eine binäre Folge (MAX,MIN) bereitzustellen, in welcher der maximale Pegel bzw. der minimaler Pegel als Position in der Reihenfolge markiert ist.

6. System nach Anspruch 5, aufweisend

• einem ersten Diskriminator (461),
• einen zweiten Diskriminator (462),
• einen ersten Reduzierer (471),
• einen zweiten Reduzierer (472),
• der erste Diskriminator (461) ausgestaltet als ein Min-Max Leitungspaar-Diskriminator und damit ausgestaltet, den Empfangsvektor (402) entgegenzunehmen und das Leiterpaar mit dem jeweils größten und kleinsten Relativpegel im Mehr-Leitersystem (200) zu detektieren, weiterhin ausgestaltet, das Detektionsergebnis als eine erste Leitungspaar-Information (451) bereitzustellen,
• der erste Diskriminator (461) mit dem ersten Reduzierer (471) in Verbindung stehend und ausgestaltet, mit der ersten Leitungspaar-Information (451) einen reduzierten Empfangsvektor (453) zur Verfügung zu stellen,
• der zweite Diskriminator (462) als ein weiterer Min-Max Leitungspaar-Diskriminator ausgestaltet und damit ausgestaltet, den reduzierten Empfangsvektor (453) entgegenzunehmen und das Leiterpaar mit dem jeweils größten und kleinsten Relativpegel im Mehr-Leitersystem (200) mit den bereits erkannten reduzierten Leiterpaar zu detektieren, weiterhin ausgestaltet, das Detektionsergebnis als eine zweite Leitungspaar-Information (454) bereitzustellen,
• der zweite Diskriminator (462) mit dem zweiten Reduzierer (472) in Verbindung stehend und ausgestaltet, mit der zweiten Leitungspaar-Information (451) einen weiter reduzierter Empfangsvektor (456) zur Verfügung zu stellen.

7. Verfahren zur elektrischen Übertragung von Symbolen (Sym) von einem ersten Teilnehmer (1) zu einem zweiten Teilnehmer (2), die über ein gemeinsames Mehrleiter-System (200) mit wenigstens einem ersten elektrischen Leiter (201), einem zweiten elektrischen Leiter (202) und einem dritten elektrischen Leiter (203) verbunden sind, wobei

  - im ersten Teilnehmer (1) zumindest drei Reihenschaltungen (P1 ,P2,P3) aus jeweils einem oberen elektronischen Schalter (A1,B1,C1) und einem unteren elektronischen Schalter (A2,B2,C2) betrieben werden, wobei an die jeweilige Reihenschaltung zwischen dem oberen elektronischen Schalter (A1,B1,C1) und dem unteren elektronischen Schalter (A2,B2,C2) die elektrischen Leiter (201, 202,203) angeschlossen werden,

  die oberen elektronischen Schaltern (A1,B1,C1) schalten die elektrischen Leiter (201,202,203) an oder von einen ersten Ausgang der Stromquelle (Q) und die unteren elektronischen Schalter A2,B2,C2 schalten die elektrischen Leiter 201,202,203 an oder von einem zweiten Ausgang der Stromquelle (Q),

  **dadurch gekennzeichnet, dass**

  - das zu übertragende Symbol (Sym) durch eine Auswahl einer Schaltkombination (SK) für die elektronischen Schalter (A1,B1,C1,A2,B2,C2) dadurch kodiert wird, dass eine geordnete Wahl von einem Leiterpaar aus einem Vorrat der elektrischen Leiter (201,202,203) aus dem Mehrleiter-System (200) durchgeführt wird, wobei über eine Stromquelle (Q) ein Strom (I) über einen geschlossenen oberen elektronischen Schalter (A1,B1,C1) vom ersten Teilnehmer (1) in einen der elektrischen Leiter (201,202,203) als ein Hin-Leiter (HL) in das Mehrleiter-System (200) fließt,
  - wobei ein Terminierungswiderstands-Netzwerk (501) an die elektrischen Leiter (201,202,203) des Mehrleiter-System (200) angeschaltet wird, wodurch ein Stromweg (SW) für den in dem Hin-Leiter (HL) fließenden Strom (I) zu einem weiteren elektrischen Leiter (201,202,203) geschaltet wird und der weitere elektrische Leiter (201,202,203) dann als ein Rück-Leiter (RL) für den Strom (I) über einen geschlossenen unteren elektronischen Schalter (A2,B2,C2) vom ersten Teilnehmer (1) genutzt wird,
  - wobei im zweiten Teilnehmer (2) zur Decodierung des Symbols (Sym) jeweils zwischen zwei elektrischen Leitern (201,202,203) ein Spannungspegel (AB,BC,CA) detektiert wird, wobei aus den unterschiedlichen Spannungspegeln (AB,BC,CA) zwischen den elektrischen Leitern (201,202,203) das Symbol (Sym) zurückgewonnen wird.

8. Verfahren nach Anspruch 7, wobei das gemeinsame Mehrleiter-System (200) mit einer Leiteranzahl (n) an elektrischen Leitern (201,202,..,207) betrieben wird, wobei zwischen dem ersten Teilnehmer (1) und dem zweiten Teilnehmer (2) mittels der elektronischen Schalter (A1,B1,C1,A2,B2,C2), der elektrischen Leiter (201,202,..,207) und des Terminierungswiderstands-Netzwerks (501) Stromschleifen (121,122,..,127) gebildet werden, wobei zur weiteren Kodierung der zu übertragenden Symbole (Sym) aus der Leiteranzahl (N) an elektrischen Leitern (201,202,..,20x) eine ausgewählte Menge (L) an Stromschleifen (121,122,..,127) bestimmt wird und damit ein Symbolvorrat erhöht wird.

9. Verfahren nach Anspruch 8, wobei in die einzelnen Strom-Schleifen (121,122,..,127) der ausgewählten Menge (L) jeweils Signalströme (I1,I2,..,Ix) unterschiedlicher Höhe eingeprägt werden und damit der Symbolvorrat weiter erhöht wird.

10. Verfahren nach einem der Ansprüche 7 bis 9, wobei die Spannungspegel (AB,BC,CA) zwischen den elektrischen Leitern (201,202,203) mit einem Komparator-Netzwerk (400) erfasst werden, wobei die erfassten Spannungspegel (AB,BC,CA) einem Empfangsvektor (402) als Elemente zugeordnet werden.

11. Verfahren nach Anspruch 10, wobei der Empfangsvektor (402) einem Symboldecoder (450) zugeführt wird, wobei zum einen auf eine Reihenfolge der Elemente des Empfangsvektors (402) eine Maximum-Ermittlung und zum anderen eine Minimum-Ermittlung durchgeführt wird und jeweils eine binäre Folge (MAX,MIN) bereitgestellt wird, in welcher der maximale Pegel bzw. der minimale Pegel als Position in der Reihenfolge markiert ist.

12. Verfahren nach einem der Ansprüche 9 bis 11, wobei für den Fall, dass zwischen dem ersten Teilnehmer (1) und dem zweiten Teilnehmer (2) mehrere Stromschleifen (121,122,..,127) mit unterschiedlichen Signalströmen (I1,I2,..,Ix) betrieben werden, wird zur Dekodierung des Symbols (Sym) in einem

  a) ersten Schritt die Spannungspegel (AB,BC,CA) zwischen den elektrischen Leiter (201,202,203) mit einem Komparator-Netzwerk (400) erfasst, die erfassten Spannungspegel (AB,BC,CA) werden einem Empfangsvektor

(402) als Elemente zugeordnet,

b) zweiten Schritt der Empfangsvektor (402) einem Symboldecoder (450) zugeführt, wobei zum einen auf eine Reihenfolge der Elemente des Empfangsvektors (402) eine Maximum-Ermittlung und zum anderen eine Minimum-Ermittlung durchgeführt wird und jeweils eine binäre Folge (MAX,MIN) bereitgestellt wird, in welcher der maximale Pegel bzw. der minimale Pegel als Position in der Reihenfolge markiert ist,

c) dritten Schritt eine Reduzierung des Empfangsvektors (402) um die in dem zweiten Schritt erkannten Positionen erfolgt, wobei ein reduzierter-Empfangsvektor (453) ermittelt wird, mit dem reduzierten Empfangsvektor (402) im ersten Schritt fortgefahren wird, bis der Reduzierter-Empfangsvektor (453) oder ein weiter Reduzierter-Empfangsvektor (456) einem Mehrleiter-System (200) mit einer Leiteranzahl von N = 3 entspricht.

**13.** Halbleiterbaustein (50) ausgestaltet als ein Leitungstreiber für eine elektrische Übertragung von Symbolen (Sym) zwischen einem ersten Teilnehmer (1) und einem zweiten Teilnehmer (2), die über ein gemeinsames Mehrleiter-System (200) mit wenigstens einem ersten elektrischen Leiter (201), einem zweiten elektrischen Leiter (202) und einem dritten elektrischen Leiter (201,202,..,207) verbunden sind,

**gekennzeichnet durch** eine Ausgestaltung zur Ausführung des Verfahrens nach einem der Ansprüche 7 bis 12.

FIG 1

FIG 2

EP 4 625 897 A1

SK=1011 → "BC"

SK=0010 →

301
A1 B1 C1 D1
1
Q
302
A2 B2 C2 D2

HL
200 201 202 200
Sym="BC"
204 203
RL

501
SW

402

| | AB | BC | CD | DA | AC | BD |
|---|---|---|---|---|---|---|
| MAX | +1V | +2V | -1V | x | +1V | +1V |
| | 0 | 1 | 0 | 0 | 0 | 0 |
| MIN | 0 | 0 | 1 | 0 | 0 | 0 |

B — BC — C
BD
AB — CD
AC
A — DA — D
"010011"
"010111"

| Sym | | GP1 | GN1 | GPA1 | GPB1 | GPC1 | GPD1 | GPN2 | GPN2 | GPN2 | GPN2 |
|---|---|---|---|---|---|---|---|---|---|---|---|
| 0 | AB | A | B | 0 | 1 | 1 | 1 | 0 | 1 | 0 | 0 |
| 1 | AC | A | C | 0 | 1 | 1 | 1 | 0 | 0 | 1 | 0 |
| 2 | AD | A | D | 0 | 1 | 1 | 1 | 0 | 0 | 0 | 1 |
| 3 | BA | B | A | 1 | 0 | 1 | 1 | 1 | 0 | 0 | 0 |
| 4 | BC | B | C | 1 | 0 | 1 | 1 | 0 | 0 | 1 | 0 |
| 5 | BD | B | D | 1 | 0 | 1 | 1 | 0 | 0 | 0 | 1 |
| 6 | CA | C | A | 1 | 1 | 0 | 1 | 1 | 0 | 0 | 0 |
| 7 | CB | C | B | 1 | 1 | 0 | 1 | 0 | 1 | 0 | 0 |
| 8 | CD | C | D | 1 | 1 | 0 | 1 | 0 | 0 | 0 | 1 |
| 9 | DA | D | A | 1 | 1 | 1 | 0 | 1 | 0 | 0 | 0 |
| 10 | DB | D | B | 1 | 1 | 1 | 0 | 0 | 1 | 0 | 0 |
| 11 | DC | D | C | 1 | 1 | 1 | 0 | 0 | 0 | 1 | 0 |

FIG 3

FIG 4

"001101"

EP 4 625 897 A1

FIG 5

EP 4 625 897 A1

EP 4 625 897 A1

FIG 6

FIG 7

FIG 8

FIG 9

FIG 10

FIG 11

# FIG 12A

| Comment | Symbol | Decoded | Wire voltage (relative amplitudes) | | | | | | |
|---|---|---|---|---|---|---|---|---|---|
| | | | A | B | C | D | E | F | G |
| No current | 0 | | 0 | 0 | 0 | 0 | 0 | 0 | 0 |
| 3 wire, 1 current | 1 | AB | 1 | -1 | 0 | | | | |
| | 2 | AC | 1 | 0 | -1 | | | | |
| | 3 | BA | -1 | 1 | 0 | | | | |
| | 4 | BC | 0 | 1 | -1 | | | | |
| | 5 | CA | -1 | 0 | 1 | | | | |
| | 6 | CB | 0 | -1 | 1 | | | | |
| 4 wire, 1 current | 7 | AB | 2 | -2 | 0 | 0 | | | |
| | 8 | AD | 2 | 0 | 0 | -2 | | | |
| | 9 | CA | -2 | 0 | 2 | 0 | | | |
| | 10 | CD | 0 | 0 | 2 | -2 | | | |
| 4 wire, 2 current | 11 | ABCD | 2 | -2 | 1 | -1 | | | |
| | 12 | CDBA | -1 | 1 | 2 | -2 | | | |
| | 13 | ADBC | 2 | 1 | -1 | -2 | | | |
| | 14 | DEFG | | | | 2 | -2 | 1 | -1 |
| | 15 | FGED | | | | -1 | 1 | 2 | -2 |
| | 16 | DGEF | | | | 2 | 1 | -1 | -2 |
| | 17 | ACEG | 2 | | -2 | | 1 | | -1 |
| | 18 | EGCA | -1 | | 1 | | 2 | | -2 |
| | 19 | AGCE | 2 | | 1 | | -1 | | -2 |
| 7 wire, 1 current | 20 | AB | 1 | -1 | 0 | 0 | 0 | 0 | 0 |
| | 21 | AC | 1 | 0 | -1 | 0 | 0 | 0 | 0 |
| | 22 | AD | 1 | 0 | 0 | -1 | 0 | 0 | 0 |
| | 23 | AE | 1 | 0 | 0 | 0 | -1 | 0 | 0 |
| | 24 | AF | 1 | 0 | 0 | 0 | 0 | -1 | 0 |
| | 25 | AG | 1 | 0 | 0 | 0 | 0 | 0 | -1 |
| | 26 | BG | 0 | 1 | 0 | 0 | 0 | 0 | -1 |
| | 27 | CG | 0 | 0 | 1 | 0 | 0 | 0 | -1 |
| | 28 | DG | 0 | 0 | 0 | 1 | 0 | 0 | -1 |
| | 29 | EG | 0 | 0 | 0 | 0 | 1 | 0 | -1 |
| | 30 | FG | 0 | 0 | 0 | 0 | 0 | 1 | -1 |
| 7 wire, 2 current | 31 | BFAG | 1 | 2 | 0 | 0 | 0 | -2 | -1 |
| | 32 | FBCE | 0 | -2 | 1 | 0 | -1 | 2 | 0 |
| | 33 | BFDC | 0 | 2 | -1 | 1 | 0 | -2 | 0 |
| | 34 | FBEA | -1 | -2 | 0 | 0 | 1 | 2 | 0 |
| | 35 | BFGA | -1 | 2 | 0 | 0 | 0 | -2 | 1 |
| | 36 | FBEC | 0 | -2 | -1 | 0 | 1 | 2 | 0 |
| | 37 | BFCD | 0 | 2 | 1 | -1 | 0 | -2 | 0 |
| | 38 | BFCD | 0 | 3 | 2 | -2 | 0 | -3 | 0 |
| 7 wire, 3 current | 39 | BFCDAE | 1 | 3 | 2 | -2 | -1 | -3 | 0 |
| | 40 | BFCDAG | 1 | 3 | 2 | -2 | 0 | -3 | -1 |
| | 41 | BFCDEA | -1 | 3 | 2 | -2 | 1 | -3 | 0 |
| | 42 | BFCDEG | 0 | 3 | 2 | -2 | 1 | -3 | -1 |
| | 43 | BFCDGA | -1 | 3 | 2 | -2 | 0 | -3 | 1 |
| | 44 | BFCDGE | 0 | 3 | 2 | -2 | -1 | -3 | 1 |
| | 45 | CDGEBF | 0 | 1 | 3 | -3 | -2 | -1 | 2 |
| | 46 | DCEGFB | 0 | -1 | -3 | 3 | 2 | 1 | -2 |
| | 47 | EGFBDC | 0 | -2 | -1 | 1 | 3 | 2 | -3 |
| | 48 | GEBFCD | 0 | 2 | 1 | -1 | -3 | -2 | 3 |
| Glitching Transitions | 49 | ABCDEF | 3 | -3 | 2 | -2 | 1 | -1 | 0 |
| | 50 | | 3 | 3 | 2 | -2 | 1 | -1 | 0 |
| | 51 | BACDEF | -3 | 3 | 2 | -2 | 1 | -1 | 0 |
| | 52 | BA | -3 | 3 | -2 | -2 | 1 | -1 | 0 |
| | 53 | BADCEF | -3 | 3 | 2 | 2 | 1 | -1 | 0 |
| | 54 | BADC | -3 | 3 | -2 | 2 | 1 | 1 | 0 |
| | 55 | BADCFE | -3 | 3 | -2 | 2 | -1 | 1 | 0 |
| | 56 | BADC | -3 | 3 | -2 | 2 | -1 | 1 | 1 |
| | 57 | BADC | -3 | 3 | -2 | 2 | -1 | 1 | -1 |

480

103

401

200

## FIG 12B

480

401  21  402  452  451  461

Min-Max wire pair discriminator [N = 7]

| AB = A-B | BC = B-C | CD = C-D | DE = D-E | EF = E-F | FG = F-G | GA = G-A | AC = A-C | BD = B-D | CE = C-E | DF = D-F | EG = E-G | FA = F-A | GB = G-B | AD = A-D | BE = B-E | CF = C-F | DG = D-G | EA = E-A | FB = F-B | GC = G-C | \*Is Maximum?\* A | B | C | D | E | F | G | \*Is Minimum?\* A | B | C | D | E | F | G | Fault | Positive | Negative |
|---|---|---|---|---|---|---|---|---|---|---|---|---|---|---|---|---|---|---|---|---|---|---|---|---|---|---|---|---|---|---|---|---|---|---|---|---|---|
| 0 | 0 | 0 | 0 | 0 | 0 | 0 | 0 | 0 | 0 | 0 | 0 | 0 | 0 | 0 | 0 | 0 | 0 | 0 | 0 | 0 | 1 | 1 | 1 | 1 | 1 | 1 | 1 | 1 | 1 | 1 | 1 | 1 | 1 | 1 | 1 | | |
| 2 | -1 | 0 | 0 | 0 | 0 | -1 | 1 | -1 | 0 | 0 | 0 | -1 | 1 | 1 | -1 | 0 | 0 | -1 | 1 | 0 | 1 | 0 | 0 | 0 | 0 | 0 | 0 | 0 | 1 | 0 | 0 | 0 | 0 | 0 | 0 | A | B |
| 1 | 1 | -1 | 0 | 0 | 0 | -1 | 2 | 0 | -1 | 0 | 0 | -1 | 0 | 1 | 0 | -1 | 0 | -1 | 0 | 1 | 1 | 0 | 0 | 0 | 0 | 0 | 0 | 0 | 0 | 1 | 0 | 0 | 0 | 0 | 0 | A | C |
| -2 | 1 | 0 | 0 | 0 | 0 | 1 | -1 | 1 | 0 | 0 | 0 | 1 | -1 | -1 | 1 | 0 | 0 | 1 | -1 | 0 | 0 | 1 | 0 | 0 | 0 | 0 | 0 | 1 | 0 | 0 | 0 | 0 | 0 | 0 | 0 | B | A |
| -1 | 2 | -1 | 0 | 0 | 0 | 0 | 1 | 1 | -1 | 0 | 0 | 0 | -1 | 0 | 1 | -1 | 0 | 0 | -1 | 1 | 0 | 1 | 0 | 0 | 0 | 0 | 0 | 0 | 0 | 1 | 0 | 0 | 0 | 0 | 0 | B | C |
| -1 | -1 | 1 | 0 | 0 | 0 | 1 | -2 | 0 | 1 | 0 | 0 | 1 | 0 | -1 | 0 | 1 | 0 | 1 | 0 | -1 | 0 | 0 | 1 | 0 | 0 | 0 | 0 | 1 | 0 | 0 | 0 | 0 | 0 | 0 | 0 | C | A |
| 1 | -2 | 1 | 0 | 0 | 0 | 0 | -1 | -1 | 1 | 0 | 0 | 0 | 1 | 0 | -1 | 1 | 0 | 0 | 1 | -1 | 0 | 0 | 1 | 0 | 0 | 0 | 0 | 0 | 1 | 0 | 0 | 0 | 0 | 0 | 0 | C | B |
| 4 | -2 | 0 | 0 | 0 | 0 | -2 | 2 | -2 | 0 | 0 | 0 | -2 | 2 | 2 | -2 | 0 | 0 | -2 | 2 | 0 | 1 | 0 | 0 | 0 | 0 | 0 | 0 | 0 | 1 | 0 | 0 | 0 | 0 | 0 | 0 | A | B |
| 2 | 0 | 2 | -2 | 0 | 0 | -2 | 2 | 2 | 0 | -2 | 0 | -2 | 0 | 4 | 0 | 0 | -2 | -2 | 0 | 0 | 1 | 0 | 0 | 0 | 0 | 0 | 0 | 0 | 0 | 0 | 1 | 0 | 0 | 0 | 0 | A | D |
| -2 | -2 | 2 | 0 | 0 | 0 | 2 | -4 | 0 | 2 | 0 | 0 | 2 | 0 | -2 | 0 | 2 | 0 | 2 | 0 | -2 | 0 | 0 | 1 | 0 | 0 | 0 | 0 | 1 | 0 | 0 | 0 | 0 | 0 | 0 | 0 | C | A |
| 0 | -2 | 4 | -2 | 0 | 0 | 0 | -2 | 2 | 2 | -2 | 0 | 0 | 0 | -2 | 0 | 2 | -2 | 0 | 2 | 0 | 0 | 0 | 1 | 0 | 0 | 0 | 0 | 0 | 0 | 0 | 1 | 0 | 0 | 0 | 0 | C | D |
| 4 | -3 | 2 | -1 | 0 | 0 | -2 | 1 | -1 | 1 | -1 | 0 | -2 | 2 | 3 | -2 | 1 | -1 | -2 | 2 | -1 | 1 | 0 | 0 | 0 | 0 | 0 | 0 | 0 | 1 | 0 | 0 | 0 | 0 | 0 | 0 | A | B |
| -2 | -1 | 4 | -2 | 0 | 0 | 1 | -3 | 3 | 2 | -2 | 0 | 1 | -1 | 1 | 1 | 2 | -2 | 1 | -1 | -2 | 0 | 0 | 1 | 0 | 0 | 0 | 0 | 0 | 0 | 0 | 1 | 0 | 0 | 0 | 0 | C | D |
| 1 | 2 | 1 | -2 | 0 | 0 | -2 | 3 | 3 | -1 | -2 | 0 | 1 | -1 | 1 | 2 | -1 | -2 | 1 | -1 | -1 | 1 | 0 | 0 | 0 | 0 | 0 | 0 | 0 | 0 | 0 | 1 | 0 | 0 | 0 | 0 | A | D |
| 0 | 0 | -2 | 4 | -3 | 2 | -1 | 0 | -2 | 2 | 1 | -1 | 1 | -1 | -2 | 2 | -1 | 3 | -2 | 1 | -1 | 0 | 0 | 0 | 1 | 0 | 0 | 0 | 0 | 0 | 0 | 0 | 0 | 1 | 0 | 0 | D | E |
| 0 | 0 | 1 | -2 | -1 | 4 | -2 | 0 | 1 | -1 | -3 | 3 | 2 | -2 | 1 | -1 | -2 | 1 | 1 | 2 | -2 | 0 | 0 | 0 | 0 | 0 | 1 | 0 | 0 | 0 | 0 | 0 | 0 | 0 | 0 | 1 | F | G |
| 0 | 0 | -2 | 1 | 2 | 1 | -2 | 0 | -2 | -1 | 3 | 3 | -1 | -2 | -2 | -1 | 1 | 4 | 1 | -1 | -2 | 1 | 0 | 0 | 0 | 0 | 0 | 0 | 0 | 0 | 0 | 0 | 1 | 0 | 0 | 0 | D | G |
| 2 | 2 | -2 | -1 | 1 | 1 | -3 | 4 | 0 | -3 | 0 | 2 | 2 | -1 | 2 | 1 | -1 | 0 | 1 | -1 | -3 | 1 | 0 | 0 | 0 | 0 | 0 | 0 | 0 | 0 | 1 | 0 | 0 | 0 | 0 | 0 | A | C |
| -1 | -1 | 1 | -2 | 2 | 2 | -4 | -2 | 0 | 1 | 0 | 4 | 1 | -2 | -1 | -2 | 1 | 2 | 3 | 0 | -3 | 0 | 0 | 0 | 1 | 0 | 0 | 0 | 0 | 0 | 0 | 0 | 0 | 0 | 1 | 0 | D | G |
| 2 | -1 | 1 | 1 | -1 | 2 | -4 | 1 | 0 | 2 | 0 | 1 | -2 | -2 | 2 | 1 | 1 | 2 | -3 | 0 | -3 | 1 | 0 | 0 | 0 | 0 | 0 | 0 | 0 | 0 | 0 | 0 | 0 | 0 | 1 | 0 | E | A |
| 2 | -1 | 1 | 0 | 0 | 0 | -1 | 1 | -1 | 0 | 0 | 0 | -1 | 1 | 1 | -1 | 0 | 0 | -1 | 1 | 0 | 1 | 0 | 0 | 0 | 0 | 0 | 0 | 0 | 1 | 0 | 0 | 0 | 0 | 0 | 0 | A | B |
| 1 | 1 | -1 | 0 | 0 | 0 | -1 | 2 | 0 | -1 | 0 | 0 | -1 | 0 | 2 | 0 | 0 | -1 | -1 | 0 | 1 | 1 | 0 | 0 | 0 | 0 | 0 | 0 | 0 | 0 | 1 | 0 | 0 | 0 | 0 | 0 | A | C |
| 1 | 0 | 0 | -1 | 0 | 0 | -1 | 1 | 1 | 0 | -1 | 0 | -1 | 0 | 2 | 0 | 0 | -1 | -1 | 0 | 0 | 1 | 0 | 0 | 0 | 0 | 0 | 0 | 0 | 0 | 0 | 1 | 0 | 0 | 0 | 0 | A | D |
| 1 | 0 | 0 | 1 | -1 | 0 | -1 | 1 | 0 | 1 | 0 | -1 | -1 | 0 | 1 | 1 | 0 | 0 | -2 | 0 | 0 | 1 | 0 | 0 | 0 | 0 | 0 | 0 | 0 | 0 | 0 | 0 | 1 | 0 | 0 | 0 | A | E |
| 1 | 0 | 0 | 0 | 1 | -1 | -1 | 1 | 0 | 0 | 1 | 0 | -2 | 0 | 1 | 0 | 1 | 0 | -1 | -1 | 0 | 1 | 0 | 0 | 0 | 0 | 0 | 0 | 0 | 0 | 0 | 0 | 0 | 1 | 0 | 0 | A | F |
| -1 | 1 | 0 | 0 | 0 | 1 | -2 | 1 | 0 | 1 | 0 | 0 | 1 | -2 | 0 | 1 | 0 | 1 | 0 | -1 | -1 | 0 | 1 | 0 | 0 | 0 | 0 | 0 | 0 | 0 | 0 | 0 | 0 | 0 | 1 | 0 | B | G |
| 0 | -1 | 1 | 0 | 0 | 1 | -1 | -1 | 0 | 1 | 0 | 0 | 1 | -1 | 0 | 0 | 1 | 1 | 0 | 0 | -2 | 0 | 0 | 1 | 0 | 0 | 0 | 0 | 0 | 0 | 0 | 0 | 0 | 0 | 1 | 0 | C | G |
| 0 | 0 | -1 | 1 | 0 | 1 | -1 | 0 | -1 | 0 | 1 | 0 | 1 | -1 | -1 | 0 | 0 | 2 | 0 | 0 | -1 | 0 | 0 | 0 | 1 | 0 | 0 | 0 | 0 | 0 | 0 | 0 | 0 | 0 | 1 | 0 | D | G |
| 0 | 0 | 0 | -1 | 1 | 1 | -1 | 0 | 0 | -1 | 0 | 2 | 0 | -1 | 0 | -1 | 0 | 1 | 0 | 1 | -1 | 0 | 0 | 0 | 0 | 1 | 0 | 0 | 0 | 0 | 0 | 0 | 0 | 0 | 1 | 0 | E | G |
| 0 | 0 | 0 | 0 | -1 | 2 | -1 | 0 | 0 | 0 | -1 | 1 | 1 | -1 | 0 | 0 | -1 | 1 | 0 | 1 | -1 | 0 | 0 | 0 | 0 | 0 | 1 | 0 | 0 | 0 | 0 | 0 | 0 | 0 | 1 | 0 | F | G |
| -1 | 2 | 0 | 0 | 2 | -1 | -2 | 1 | 2 | 0 | 2 | 1 | -3 | -3 | 1 | 2 | 2 | 1 | -1 | -4 | -1 | 0 | 1 | 0 | 0 | 0 | 0 | 0 | 0 | 0 | 0 | 0 | 0 | 1 | 0 | 0 | B | F |
| 2 | -3 | 1 | 1 | -3 | 2 | 0 | -1 | -2 | 2 | -2 | -1 | 2 | 2 | 0 | -1 | -1 | 0 | -1 | 4 | -1 | 0 | 0 | 0 | 0 | 0 | 1 | 0 | 0 | 1 | 0 | 0 | 0 | 0 | 0 | 0 | F | B |
| -2 | 3 | -2 | 1 | 2 | -2 | 0 | 1 | 1 | -1 | 3 | 0 | -2 | -2 | -1 | 2 | 1 | 1 | 0 | -4 | -1 | 0 | 1 | 0 | 0 | 0 | 0 | 0 | 0 | 0 | 0 | 0 | 0 | 1 | 0 | 0 | B | F |
| 1 | -2 | 0 | -1 | -1 | 2 | 1 | -1 | -2 | -1 | -2 | 1 | 3 | 2 | -1 | -3 | -2 | 0 | 2 | 4 | 0 | 0 | 0 | 0 | 0 | 0 | 1 | 0 | 0 | 1 | 0 | 0 | 0 | 0 | 0 | 0 | F | B |
| -3 | 2 | 0 | 0 | 2 | -3 | 2 | -1 | 2 | 0 | -2 | -1 | -1 | -1 | -1 | 2 | 2 | -1 | 1 | -4 | 1 | 0 | 1 | 0 | 0 | 0 | 0 | 0 | 0 | 0 | 0 | 0 | 0 | 1 | 0 | 0 | B | F |
| 2 | -1 | -1 | -1 | -1 | 2 | 0 | 1 | -2 | -2 | -2 | 1 | 2 | 2 | 0 | -3 | -3 | 0 | 1 | 4 | 1 | 0 | 0 | 0 | 0 | 0 | 1 | 0 | 0 | 1 | 0 | 0 | 0 | 0 | 0 | 0 | F | B |
| -2 | 1 | 2 | -1 | 2 | -2 | 0 | -1 | 3 | 1 | 1 | 0 | -2 | -2 | -1 | 2 | 3 | -1 | 0 | -4 | -1 | 0 | 1 | 0 | 0 | 0 | 0 | 0 | 0 | 0 | 0 | 0 | 0 | 1 | 0 | 0 | B | F |
| -3 | 1 | 4 | -2 | 3 | -3 | 0 | -2 | 5 | 2 | 1 | 1 | 0 | -3 | 2 | 3 | 5 | -2 | 0 | -6 | -2 | 0 | 1 | 0 | 0 | 0 | 0 | 0 | 1 | 0 | 0 | 0 | 0 | 0 | 0 | 0 | B | F |
| -2 | 1 | 4 | -1 | 2 | -3 | -1 | -1 | 5 | 3 | 1 | -1 | -4 | -3 | 3 | 4 | 5 | -2 | -2 | -6 | -2 | 0 | 1 | 0 | 0 | 0 | 0 | 0 | 0 | 0 | 0 | 0 | 0 | 1 | 0 | 0 | B | F |
| -2 | 1 | 4 | -2 | 3 | -2 | -2 | -1 | 5 | 2 | 1 | 1 | -4 | -4 | 3 | 3 | 5 | -1 | -1 | -6 | -3 | 0 | 1 | 0 | 0 | 0 | 0 | 0 | 0 | 0 | 0 | 0 | 0 | 1 | 0 | 0 | B | F |
| -4 | 1 | 4 | -3 | 4 | -3 | -1 | -3 | 5 | 1 | 1 | 1 | -2 | -3 | 1 | 2 | 5 | -2 | -2 | -6 | -2 | 0 | 1 | 0 | 0 | 0 | 0 | 0 | 0 | 0 | 0 | 0 | 0 | 1 | 0 | 0 | B | F |
| -3 | 1 | 4 | -3 | 4 | -2 | -1 | -2 | 5 | 1 | 1 | 2 | -3 | -4 | 2 | 2 | 5 | -1 | -1 | -6 | -3 | 0 | 1 | 0 | 0 | 0 | 0 | 0 | 0 | 0 | 0 | 0 | 0 | 1 | 0 | 0 | B | F |
| -4 | 1 | 4 | -2 | 3 | -4 | 2 | -3 | 5 | 2 | 1 | -1 | -2 | -2 | 1 | 3 | 5 | -3 | 1 | -6 | -1 | 0 | 1 | 0 | 0 | 0 | 0 | 0 | 0 | 0 | 0 | 0 | 0 | 1 | 0 | 0 | B | F |
| -3 | 1 | 4 | -1 | 2 | -4 | 1 | -2 | 5 | 3 | 1 | -2 | -3 | -2 | 2 | 4 | 5 | -3 | -1 | -6 | -1 | 0 | 1 | 0 | 0 | 0 | 0 | 0 | 0 | 0 | 0 | 0 | 0 | 1 | 0 | 0 | B | F |
| -1 | -2 | 6 | -1 | -1 | -3 | 2 | 3 | -4 | -5 | 2 | 4 | -2 | -1 | 3 | 3 | 4 | -5 | -2 | -2 | 1 | 0 | 0 | 1 | 0 | 0 | 0 | 0 | 0 | 0 | 0 | 1 | 0 | 0 | 0 | 0 | C | D |
| 1 | 2 | -6 | 1 | 1 | 3 | -2 | 3 | -4 | -5 | 2 | 4 | 1 | -1 | -3 | -3 | -4 | 5 | 2 | 2 | 1 | 0 | 0 | 0 | 1 | 0 | 0 | 0 | 0 | 0 | 1 | 0 | 0 | 0 | 0 | 0 | D | C |
| 2 | -1 | -2 | -2 | 1 | 5 | -3 | 1 | -3 | -4 | -1 | 6 | 2 | -1 | -1 | -5 | -3 | 4 | 3 | 4 | -2 | 0 | 0 | 0 | 0 | 1 | 0 | 0 | 0 | 0 | 0 | 0 | 0 | 1 | 0 | 0 | E | G |
| -2 | 1 | 2 | 2 | -1 | -5 | 3 | -1 | 3 | 4 | 1 | -6 | -2 | 1 | 1 | 5 | 3 | -4 | -3 | -4 | 2 | 0 | 0 | 0 | 0 | 0 | 0 | 1 | 1 | 0 | 0 | 0 | 0 | 0 | 0 | 0 | G | E |
| 6 | -5 | 4 | -3 | 2 | -1 | -3 | 1 | -1 | 1 | -1 | 1 | -4 | 3 | 5 | -4 | 3 | -2 | -2 | 2 | -2 | 1 | 0 | 0 | 0 | 0 | 0 | 0 | 0 | 1 | 0 | 0 | 0 | 0 | 0 | 0 | A | B |
| 0 | 1 | 4 | -3 | 2 | -1 | -3 | 1 | 1 | 1 | -1 | 1 | -4 | -3 | 1 | 2 | 3 | -2 | -2 | 2 | -2 | 1 | 1 | 0 | 0 | 0 | 0 | 0 | 0 | 0 | 1 | 0 | 0 | 0 | 0 | 1 | | |
| -6 | 1 | 4 | -3 | 2 | -1 | 3 | -5 | 5 | 1 | -1 | 1 | 2 | -3 | -1 | 2 | 3 | -2 | 4 | -4 | -2 | 0 | 1 | 0 | 0 | 0 | 0 | 0 | 1 | 0 | 0 | 0 | 0 | 0 | 0 | 0 | B | A |
| -6 | 5 | 0 | -3 | 2 | -1 | 3 | -1 | 5 | -3 | -1 | 1 | 2 | -3 | -1 | 2 | -1 | -2 | 4 | -4 | 2 | 0 | 1 | 0 | 0 | 0 | 0 | 0 | 1 | 0 | 0 | 0 | 0 | 0 | 0 | 0 | B | A |
| -6 | 5 | -4 | 1 | 2 | -1 | 3 | -1 | 1 | -3 | 3 | 1 | 2 | -3 | -5 | 2 | -1 | 2 | 4 | -4 | 2 | 0 | 1 | 0 | 0 | 0 | 0 | 0 | 1 | 0 | 0 | 0 | 0 | 0 | 0 | 0 | B | A |
| -6 | 5 | -4 | 1 | 0 | 1 | 3 | -1 | 1 | -1 | 3 | -1 | 4 | -3 | -5 | 2 | -3 | 2 | 2 | -2 | 2 | 0 | 1 | 0 | 0 | 0 | 0 | 0 | 1 | 0 | 0 | 0 | 0 | 0 | 0 | 0 | B | A |
| -6 | 5 | -4 | 3 | -2 | 1 | 3 | -1 | 1 | -1 | 1 | -1 | 4 | -3 | -5 | 4 | -3 | 2 | 2 | -2 | 2 | 0 | 1 | 0 | 0 | 0 | 0 | 0 | 1 | 0 | 0 | 0 | 0 | 0 | 0 | 0 | B | A |
| -6 | 5 | -4 | 3 | -2 | 0 | 4 | -1 | 1 | -1 | 1 | 2 | 4 | -2 | -5 | 4 | -3 | 1 | 2 | -2 | 3 | 0 | 1 | 0 | 0 | 0 | 0 | 0 | 1 | 0 | 0 | 0 | 0 | 0 | 0 | 0 | B | A |
| -6 | 5 | -4 | 3 | -2 | 2 | 2 | -1 | 1 | -1 | 1 | 0 | 4 | -4 | -5 | 4 | -3 | 3 | 2 | -2 | 1 | 0 | 1 | 0 | 0 | 0 | 0 | 0 | 1 | 0 | 0 | 0 | 0 | 0 | 0 | 0 | B | A |

33

# FIG 12C

480

471  402

10  453

455  454

462

Min-Max wire pair discriminator [N = 5]

Is Maximum?  Is Minimum?

Next A', Next B', Next C', Next D', Next E'

A' B' C' D'

AB' = A' - B', BC' = B' - C', CD' = C' - D', DE' = D' - E', EA' = E' - A'

AC' = A' - C', BD' = B' - D', CE' = C' - E', DA' = D' - A', EB' = E' - B'

A' B' C' D' E'  A' B' C' D' E'

Fault, Positive, Negative

# FIG 12D

480

472  3  463  —457

456  458

**Min-Max wire pair discriminator [N = 3]**

| Next A" | Next B" | Next C" | A" | B" | C" | AB" = A" - B" | BC" = B" - C" | CA" = C" - A" | Ist Max? A" | Ist Max? B" | Ist Max? C" | Ist Min? A" | Ist Min? B" | Ist Min? C" | Fault | Positive | Negative |
|---|---|---|---|---|---|---|---|---|---|---|---|---|---|---|---|---|---|
| - | - | - | 0 | 0 | 0 | 0 | 0 | 0 | 1 | 1 | 1 | 1 | 1 | 1 | 1 | | |
| - | - | - | 0 | 0 | 0 | 0 | 0 | 0 | 1 | 1 | 1 | 1 | 1 | 1 | 1 | | |
| - | - | - | 0 | 0 | 0 | 0 | 0 | 0 | 1 | 1 | 1 | 1 | 1 | 1 | 1 | | |
| - | - | - | 0 | 0 | 0 | 0 | 0 | 0 | 1 | 1 | 1 | 1 | 1 | 1 | 1 | | |
| - | - | - | 0 | 0 | 0 | 0 | 0 | 0 | 1 | 1 | 1 | 1 | 1 | 1 | 1 | | |
| - | - | - | 0 | 0 | 0 | 0 | 0 | 0 | 1 | 1 | 1 | 1 | 1 | 1 | 1 | | |
| - | - | - | 0 | 0 | 0 | 0 | 0 | 0 | 1 | 1 | 1 | 1 | 1 | 1 | 1 | | |
| - | - | - | 0 | 0 | 0 | 0 | 0 | 0 | 1 | 1 | 1 | 1 | 1 | 1 | 1 | | |
| - | - | - | 0 | 0 | 0 | 0 | 0 | 0 | 1 | 1 | 1 | 1 | 1 | 1 | 1 | | |
| E | F | G | 0 | 0 | 0 | 0 | 0 | 0 | 1 | 1 | 1 | 1 | 1 | 1 | 1 | | |
| E | F | G | 0 | 0 | 0 | 0 | 0 | 0 | 1 | 1 | 1 | 1 | 1 | 1 | 1 | | |
| E | F | G | 0 | 0 | 0 | 0 | 0 | 0 | 1 | 1 | 1 | 1 | 1 | 1 | 1 | | |
| A | B | C | 0 | 0 | 0 | 0 | 0 | 0 | 1 | 1 | 1 | 1 | 1 | 1 | 1 | | |
| A | B | C | 0 | 0 | 0 | 0 | 0 | 0 | 1 | 1 | 1 | 1 | 1 | 1 | 1 | | |
| A | B | C | 0 | 0 | 0 | 0 | 0 | 0 | 1 | 1 | 1 | 1 | 1 | 1 | 1 | | |
| B | D | F | 0 | 0 | 0 | 0 | 0 | 0 | 1 | 1 | 1 | 1 | 1 | 1 | 1 | | |
| B | D | F | 0 | 0 | 0 | 0 | 0 | 0 | 1 | 1 | 1 | 1 | 1 | 1 | 1 | | |
| B | D | F | 0 | 0 | 0 | 0 | 0 | 0 | 1 | 1 | 1 | 1 | 1 | 1 | 1 | | |
| - | - | - | 0 | 0 | 0 | 0 | 0 | 0 | 1 | 1 | 1 | 1 | 1 | 1 | 1 | | |
| - | - | - | 0 | 0 | 0 | 0 | 0 | 0 | 1 | 1 | 1 | 1 | 1 | 1 | 1 | | |
| - | - | - | 0 | 0 | 0 | 0 | 0 | 0 | 1 | 1 | 1 | 1 | 1 | 1 | 1 | | |
| - | - | - | 0 | 0 | 0 | 0 | 0 | 0 | 1 | 1 | 1 | 1 | 1 | 1 | 1 | | |
| - | - | - | 0 | 0 | 0 | 0 | 0 | 0 | 1 | 1 | 1 | 1 | 1 | 1 | 1 | | |
| - | - | - | 0 | 0 | 0 | 0 | 0 | 0 | 1 | 1 | 1 | 1 | 1 | 1 | 1 | | |
| - | - | - | 0 | 0 | 0 | 0 | 0 | 0 | 1 | 1 | 1 | 1 | 1 | 1 | 1 | | |
| - | - | - | 0 | 0 | 0 | 0 | 0 | 0 | 1 | 1 | 1 | 1 | 1 | 1 | 1 | | |
| - | - | - | 0 | 0 | 0 | 0 | 0 | 0 | 1 | 1 | 1 | 1 | 1 | 1 | 1 | | |
| C | D | E | 0 | 0 | 0 | 0 | 0 | 0 | 1 | 1 | 1 | 1 | 1 | 1 | 1 | | |
| A | D | G | 0 | 0 | 0 | 0 | 0 | 0 | 1 | 1 | 1 | 1 | 1 | 1 | 1 | | |
| A | E | G | 0 | 0 | 0 | 0 | 0 | 0 | 1 | 1 | 1 | 1 | 1 | 1 | 1 | | |
| C | D | G | 0 | 0 | 0 | 0 | 0 | 0 | 1 | 1 | 1 | 1 | 1 | 1 | 1 | | |
| C | D | E | 0 | 0 | 0 | 0 | 0 | 0 | 1 | 1 | 1 | 1 | 1 | 1 | 1 | | |
| A | D | G | 0 | 0 | 0 | 0 | 0 | 0 | 1 | 1 | 1 | 1 | 1 | 1 | 1 | | |
| A | E | G | 0 | 0 | 0 | 0 | 0 | 0 | 1 | 1 | 1 | 1 | 1 | 1 | 1 | | |
| A | E | G | 0 | 0 | 0 | 0 | 0 | 0 | 1 | 1 | 1 | 1 | 1 | 1 | 1 | | |
| A | E | G | 1 | -1 | 0 | 2 | -2 | -1 | 1 | 0 | 0 | 0 | 1 | 0 | 0 | A | E |
| A | E | G | 1 | 0 | -1 | 1 | -2 | 0 | 1 | 0 | 0 | 0 | 0 | 1 | 0 | A | G |
| A | E | G | -1 | 1 | 0 | -2 | -2 | 1 | 0 | 1 | 0 | 1 | 0 | 0 | 0 | E | A |
| A | E | G | 0 | 1 | -1 | -1 | -2 | 1 | 0 | 1 | 0 | 0 | 0 | 1 | 0 | E | G |
| A | E | G | -1 | 0 | 1 | -1 | -2 | 2 | 0 | 0 | 0 | 1 | 0 | 0 | 0 | G | A |
| A | E | G | 0 | -1 | 1 | 1 | -2 | -1 | 0 | 0 | 0 | 0 | 1 | 0 | 0 | G | E |
| A | B | F | 0 | 1 | -1 | -1 | -2 | -1 | 0 | 1 | 0 | 0 | 0 | 1 | 0 | B | F |
| A | B | F | 0 | -1 | 1 | 1 | 2 | 1 | 0 | 0 | 1 | 0 | 1 | 0 | 0 | F | B |
| A | C | D | 0 | -1 | 1 | 1 | -1 | 1 | 0 | 0 | 0 | 0 | 1 | 0 | 0 | D | C |
| A | C | D | 0 | 1 | -1 | -1 | 1 | -1 | 0 | 1 | 0 | 0 | 0 | 1 | 0 | C | D |
| E | F | G | 1 | -1 | 0 | 2 | -1 | -1 | 1 | 0 | 0 | 0 | 1 | 0 | 0 | E | F |
| - | - | - | 0 | 0 | 0 | 0 | 0 | 0 | 1 | 1 | 1 | 1 | 1 | 1 | 1 | | |
| E | F | G | 1 | -1 | 0 | 2 | -1 | -1 | 1 | 0 | 0 | 0 | 1 | 0 | 0 | E | F |
| - | - | - | 0 | 0 | 0 | 0 | 0 | 0 | 1 | 1 | 1 | 1 | 1 | 1 | 1 | | |
| E | F | G | 1 | -1 | 0 | 2 | -1 | -1 | 1 | 0 | 0 | 0 | 1 | 0 | 0 | E | F |
| E | F | G | 1 | 1 | 0 | 0 | 1 | -1 | 1 | 1 | 0 | 0 | 0 | 1 | 1 | | |
| E | F | G | -1 | 1 | 0 | -2 | 1 | 1 | 0 | 1 | 0 | 1 | 0 | 0 | 0 | F | E |
| E | F | G | -1 | 1 | 1 | -2 | 1 | 2 | 0 | 1 | 1 | 1 | 0 | 0 | 1 | | |
| E | F | G | -1 | 1 | -1 | -2 | 1 | 0 | 0 | 1 | 0 | 1 | 0 | 1 | 1 | | |

FIG 13A

Symbol "CF"

402

| | | |
|---|---|---|
| 1 | A B | |
| 2 | B C —x | |
| 3 | C D —x | |
| 4 | D E | |
| 5 | E F —x | |
| 6 | F G —x | |
| 7 | G H | |
| 8 | H A | |
| 9 | B C —x | |
| 10 | B D | |
| 11 | C E —x | |
| 12 | D F —x | |
| 13 | E G | |
| 14 | F H —x | |
| 15 | G A | |
| 16 | H B | |
| 17 | A D | |
| 18 | B E | |
| 19 | C F —x | |
| 20 | D G | |
| 21 | E H | |
| 22 | F A —x | |
| 23 | G B | |
| 24 | H C —x | |
| 25 | A E | |
| 26 | B F —x | |
| 27 | C G —x | |
| 28 | D H | |

N = 8

453

| | |
|---|---|
| A B | 1 |
| B C | 2 |
| C D | 3 |
| D E | 4 |
| E F | 5 |
| F A | 6 |
| A C | 7 |
| B D | 8 |
| C E | 9 |
| D F | 10 |
| E A | 11 |
| F B | 12 |
| A D | 13 |
| B E | 14 |
| C F | 15 |

604

603

| | |
|---|---|
| A | A : A |
| B | B : B |
| C —x | D : C |
| D | E : D |
| E | G : F |
| F —x | H : F |
| G | |
| H | |

N = 6

EP 4 625 897 A1

# FIG 13B

Symbol "CFHE"

N = 6

N = 4

EP 4 625 897 A1

FIG 13C

MAX

(B)

1

2

5

(A)
A

C
(D)

3

6

4

MIN

(G)

N = 4

Symbol
"CFHEBG"

A
B→X
C
D→X

A
B

1│A B

AB 1—X
BC 2—X
CD 3—X
DE 4—X
A C 5
BD 6—X

1

A
(A)

B
(D)

N = 2

# FIG 14

N = 4

400

452

Max(N)

Min(N)

A_IST_MAX ← (AB, AC, AD) &

B_IST_MAX ← (BA, BC, BD) &

C_IST_MAX ← (CA, CB, CD) &

D_IST_MAX ← (DA, DB, DC) &

| A_IST_MAX | B_IST_MAX | C_IST_MAX | D_IST_MAX | FAULT_MAX | |
|---|---|---|---|---|---|
| 0 | 0 | 0 | 0 | 1 | 00 |
| 1 | 0 | 0 | 0 | 0 | 00 |
| 0 | 1 | 0 | 0 | 0 | 01 |
| 0 | 0 | 1 | 0 | 0 | 10 |
| 0 | 0 | 0 | 1 | 0 | 11 |
| 1 | 1 | x | x | 1 | 00 |
| 1 | x | 1 | x | 1 | 00 |
| 1 | x | x | 1 | 1 | 00 |
| x | 1 | 1 | x | 1 | 00 |
| x | 1 | x | 1 | 1 | 00 |
| x | x | 1 | 1 | 1 | 00 |

x = don´t care

IST_A_MIN ← (BA, CA, DA) &

IST_B_MIN ← (AB, CB, DB) &

IST_C_MIN ← (AC, BC, DC) &

IST_D_MIN ← (AD, BD, CD) &

| A_IST_MIN | B_IST_MIN | C_IST_MIN | D_IST_MIN | FAULT_MIN | |
|---|---|---|---|---|---|
| 0 | 0 | 0 | 0 | 1 | 00 |
| 1 | 0 | 0 | 0 | 0 | 00 |
| 0 | 1 | 0 | 0 | 0 | 01 |
| 0 | 0 | 1 | 0 | 0 | 10 |
| 0 | 0 | 0 | 1 | 0 | 11 |
| 1 | 1 | x | x | 1 | 00 |
| 1 | x | 1 | x | 1 | 00 |
| 1 | x | x | 1 | 1 | 00 |
| x | 1 | 1 | x | 1 | 00 |
| x | 1 | x | 1 | 1 | 00 |
| x | x | 1 | 1 | 1 | 00 |

x = don´t care

EP 4 625 897 A1

# FIG 15

| 402 | 600 | | 402 | 600 | | 402 | 600 |
|---|---|---|---|---|---|---|---|
| 0 | AB | | 7 | AC | | 14 | AD |
| 1 | BC | | 8 | BD | | 15 | BE |
| 2 | CD | | 9 | CE | | 16 | CF |
| 3 | DE | | 10 | DF | | 17 | DG |
| 4 | EF | | 11 | EG | | 18 | EA |
| 5 | FG | | 12 | FA | | 19 | FB |
| 6 | GA | | 13 | GB | | 20 | GC |

# FIG 16

$N=7 \rightarrow N=5$

601

| Wire in 7-wire Graph | $\mapsto$ | Wire in 5-wire Graph |
|---|---|---|
| (min) A | $\mapsto$ | eliminated |
| B | $\mapsto$ | A' |
| C | $\mapsto$ | B' |
| D | $\mapsto$ | C' |
| E | $\mapsto$ | D' |
| (max) F | $\mapsto$ | eliminated |
| G | $\mapsto$ | E' |

# FIG 17

| 402 | Edge in 7-wire Graph | ↦ | Edge in 5-wire Graph | Inverter on Direction Flip | 453 |
|---|---|---|---|---|---|
| 0 | AB | ↦ | -- | | |
| 1 | BC | ↦ | A'B' | -- | 0 |
| 2 | CD | ↦ | B'C' | -- | 1 |
| 3 | DE | ↦ | C'D' | -- | 2 |
| 4 | EF | ↦ | -- | -- | |
| 5 | FG | ↦ | -- | | |
| 6 | GA | ↦ | -- | | |
| 7 | AC | ↦ | -- | | |
| 8 | BD | ↦ | A'C' | -- | 5 |
| 9 | CE | ↦ | B'D' | -- | 6 |
| 10 | DF | ↦ | -- | | |
| 11 | EG | ↦ | D'E' | -- | 3 |
| 12 | FA | ↦ | -- | | |
| 13 | GB | ↦ | E'A' | -- | 4 |
| 14 | AD | ↦ | -- | | |
| 15 | BE | ↦ | A'D' | ·(-1) | 8 |
| 16 | CF | ↦ | -- | | |
| 17 | DG | ↦ | C'E' | -- | 7 |
| 18 | EA | ↦ | -- | | |
| 19 | FB | ↦ | -- | | |
| 20 | GC | ↦ | E'B' | -- | 9 |

# FIG 18

N=5

| Bit in Vector (452) | Edge in Graph | | Bit in Vector (452) | Edge in Graph |
|---|---|---|---|---|
| 0 | A'B' | | 5 | A'C' |
| 1 | B'C' | | 6 | B'D' |
| 2 | C'D' | | 7 | C'E' |
| 3 | D'E' | | 8 | D'A' |
| 4 | E'A' | | 9 | E'B' |

# FIG 19

| Wire in 5-wire Graph | ↦ | Wire in 3-wire Graph |
|---|---|---|
| A' | ↦ | A" |
| (max) B' | ↦ | eliminated |
| C' | ↦ | B" |
| (min) D' | ↦ | eliminated |
| E' | ↦ | C" |

602

# FIG 20

602

| Bit in Vector (453) | Edge in 5-wire Graph | ↦ | Edge in 3-wire Graph | Invert on Direction Flip | Bit in Vector (453) | ↦ | (Edge in 3-wire Graph) | (Bit in Vector (402)) |
|---|---|---|---|---|---|---|---|---|
| 0 | A'B' | ↦ | -- | | | ↦ | | |
| 1 | B'C' | ↦ | -- | | | ↦ | | |
| 2 | C'D' | ↦ | -- | | | ↦ | | |
| 3 | D'E' | ↦ | -- | | | ↦ | | |
| 4 | E'A' | ↦ | C"A" | -- | 2 | ↦ | GB | 13 |
| 5 | A'C' | ↦ | A"B" | -- | 0 | ↦ | DB | 8 |
| 6 | B'D' | ↦ | -- | | | ↦ | | |
| 7 | C'E' | ↦ | B"C" | -- | 1 | ↦ | DG | 17 |
| 8 | D'A' | ↦ | -- | | | ↦ | | |
| 9 | E'B' | ↦ | -- | | | ↦ | | |

FIG 21

FIG 22

FIG 23

# FIG 24

EP 4 625 897 A1

FIG 25

EP 4 625 897 A1

# FIG 26

EP 4 625 897 A1

FIG 27

EP 4 625 897 A1

**EUROPÄISCHER RECHERCHENBERICHT**

Nummer der Anmeldung

EP 24 16 7562

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2009/206879 A1 (ISHIKAWA TORU [JP]) 20. August 2009 (2009-08-20) * Abbildung 6 * ----- | 1-13 | INV. H04L25/02 |
| A | DE 10 2018 203671 A1 (BOSCH GMBH ROBERT [DE]) 12. September 2019 (2019-09-12) * Abbildung 3 * ----- | 1-13 | |
| A,D | EP 4 226 254 A1 (QUALCOMM INC [US]) 16. August 2023 (2023-08-16) * Abbildung 2 * ----- | 1-13 | |

RECHERCHIERTE SACHGEBIETE (IPC)

H04L

Der vorliegende Recherchenbericht wurde für alle Patentansprüche erstellt

| Recherchenort | Abschlußdatum der Recherche | Prüfer |
|---|---|---|
| München | 17. September 2024 | Baltersee, Jens |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**EP 4 625 897 A1**

**ANHANG ZUM EUROPÄISCHEN RECHERCHENBERICHT
ÜBER DIE EUROPÄISCHE PATENTANMELDUNG NR.**  EP 24 16 7562

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-09-2024

| Im Recherchenbericht angeführtes Patentdokument | Datum der Veröffentlichung | Mitglied(er) der Patentfamilie | Datum der Veröffentlichung |
|---|---|---|---|
| US 2009206879 A1 | 20-08-2009 | JP 5420847 B2 | 19-02-2014 |
| | | JP 2009200651 A | 03-09-2009 |
| | | US 2009206879 A1 | 20-08-2009 |
| DE 102018203671 A1 | 12-09-2019 | CN 111837364 A | 27-10-2020 |
| | | DE 102018203671 A1 | 12-09-2019 |
| | | EP 3766213 A1 | 20-01-2021 |
| | | US 2020412573 A1 | 31-12-2020 |
| | | WO 2019174956 A1 | 19-09-2019 |
| EP 4226254 A1 | 16-08-2023 | BR 112023014286 A2 | 05-12-2023 |
| | | CN 116724302 A | 08-09-2023 |
| | | EP 4226254 A1 | 16-08-2023 |
| | | JP 7518298 B2 | 17-07-2024 |
| | | JP 2024505124 A | 05-02-2024 |
| | | KR 20230132481 A | 15-09-2023 |
| | | TW 202236106 A | 16-09-2022 |
| | | US 11327914 B1 | 10-05-2022 |
| | | WO 2022164629 A1 | 04-08-2022 |

EPO FORM P0461

Für nähere Einzelheiten zu diesem Anhang : siehe Amtsblatt des Europäischen Patentamts, Nr.12/82

54

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1038232 B1
- EP 2154590 B1
- EP 0150540 A2
- EP 0977126 A2
- DE 60126191 T2
- EP 4226254 A1
- US 9692555 B2
- DE 102006061651 B4
- EP 3637715 B1
- EP 2683124 B1
- DE 10155526 C2